(19) Europäisches Patentamt
European Patent Office
Office européen des brevets

(11) EP 2 235 237 B1

(12) **FASCICULE DE BREVET EUROPEEN**

(45) Date de publication et mention de la délivrance du brevet:
**20.06.2012 Bulletin 2012/25**

(21) Numéro de dépôt: **08865682.2**

(22) Date de dépôt: **18.12.2008**

(51) Int Cl.:
***B82Y 30/00*** *(2011.01)* ***C23C 30/00*** *(2006.01)*
***C25D 15/00*** *(2006.01)* ***C25D 15/02*** *(2006.01)*
***B82B 3/00*** *(2006.01)*

(86) Numéro de dépôt international:
**PCT/FR2008/052351**

(87) Numéro de publication internationale:
**WO 2009/081046 (02.07.2009 Gazette 2009/27)**

(54) **MATÉRIAU COMPOSITE CONSTITUÉ PAR UNE MATRICE MÉTALLIQUE DANS LAQUELLE SONT RÉPARTIES DES NANOPARTICULES PHYLLOSILICATÉES LAMELLAIRES SYNTHÉTIQUES**

VERBUNDWERKSTOFF AUS EINER METALLMATRIX, IN DER SYNTHETISCHE LAMELLARE PHYLLOSILIKATNANOPARTIKEL verteilt sind

COMPOSITE MATERIAL CONSISTING OF A METAL MATRIX IN WHICH SYNTHETIC LAMELLAR PHYLLOSILICATED NANOPARTICLES ARE DISTRIBUTED

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **19.12.2007 FR 0708875**

(43) Date de publication de la demande:
**06.10.2010 Bulletin 2010/40**

(73) Titulaires:
- **Luzenac Europe SAS**
  **31100 Toulouse (FR)**
- **Universite Paul Sabatier Toulouse III**
  **31062 Tolouse cedex 4 (FR)**
- **Centre National de la Recherche Scientifique (C.N.R.S.)**
  **75016 Paris (FR)**

(72) Inventeurs:
- **MARTIN, François**
  **F-31570 Sainte Foy D'aigrefeuille (FR)**
- **BONINO, Jean-Pierre**
  **F-31320 Pechabou (FR)**
- **MICOUD, Pierre**
  **F-31820 Pibrac (FR)**
- **FERRET, Jocelyne**
  **F-31100 Toulouse (FR)**
- **LEBRE, Cédric**
  **F-31400 Toulouse (FR)**
- **BAYLAC, Vincent**
  **F-31450 Donneville (FR)**

(74) Mandataire: **Lassiaille, Christian Michel**
**Cabinet Barre Laforgue & associés**
**35 rue Lancefoc**
**31000 Toulouse (FR)**

(56) Documents cités:
**WO-A-2004/063428 WO-A-2004/108815**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 235 237 B1

Printed by Jouve, 75001 PARIS (FR)

## Description

L'invention concerne un matériau composite, son utilisation comme revêtement métallique lubrifiant, et un procédé pour son élaboration.

Dans de nombreux domaines industriels tels que par exemple le transport, la connectique ou l'armement, on utilise des ensembles mécaniques dans lesquels des pièces en contact sont en mouvement les unes par rapport aux autres. Dans de nombreux cas, il est souhaitable de traiter les surfaces des pièces en contact afin de leur conférer, en plus de leurs propriétés de base, des propriétés lubrifiantes stables aux températures élevées, afin d'augmenter la durée de vie et la fiabilité des ensembles mécaniques dans lesquels des surfaces sont en contact.

Il est connu de déposer des revêtements composites lubrifiants par des procédés électrolytiques, soit par voie chimique (procédé electroless) soit par voie électrochimique. Un procédé de codépôt dit "electroless" sur un substrat est un procédé consistant à incorporer des particules au cours du processus de croissance d'un métal ou d'un alliage par oxydoréduction catalysée. Un procédé de codépôt par voie électrochimique consiste à incorporer des particules au cours du processus de croissance d'un métal ou d'un alliage sur un substrat à revêtir, à partir d'un électrolyte dans une cellule d'électrolyse.

Par exemple, le dépôt d'un revêtement lubrifiant de PTFE dans une matrice métallique à base de nickel par un procédé "electroless" à partir d'une suspension de PTFE dans une solution de précurseur de nickel est connu par X. Hu, et al., (Plating and surface finishing, Mars 1997). Mais les revêtements de cette nature ne sont pas stables, le PTFE étant détruit aux températures supérieures à 300°C. L'élaboration de dépôts antifriction de NiP incorporant des nanoparticules minérales de fullerene-$WS_2$ par un procédé "electroless" est décrite notamment par W. X. Chen, et al, Advanced Engineering Materials, vol. 4, n° 9, Septembre 2002]. Par la technique "electroless", on peut également déposer des revêtements lubrifiants NiP-$B_4C$ [Cf. J. P. Ge, et al., Plating and surface finishing, octobre 1998].

En outre, des revêtements Ni-$BN_h$ sont décrits par M. Pushpavanam, et al., [(Metal Finishing, Juin 1995)] et des revêtements composites de nickel chargé en $MoS_2$ sont décrits par Yu-Chi Chang, et al., [Electrochimica Acta, vol. 43, Issues 3-4, 1998, p. 315-324]. Dans les deux cas, les revêtements peuvent être obtenus par voie électrochimique. Toutefois, les nitrures de bore ont des résistances chimiques très faibles en milieu acide et basique.

Par ailleurs, WO 2004/063428 décrit un matériau composite comprenant une matrice métallique au sein de laquelle sont réparties des particules de talc naturel ayant une dimension moyenne inférieure à 15 µm et portant à leur surface un composé dérivé de cellulose, fixé par remplacement de tout ou partie des groupes hydroxyle, de façon à conférer des propriétés hydrophiles au talc (qui est naturellement fortement hydrophobe), permettant la formation d'une suspension sans précaution dans un milieu aqueux formant un électrolyte.

Néanmoins, il s'avère que ce matériau composite présente divers inconvénients.

Tout d'abord, les particules de talc naturel modifiées sont sous forme générale de flocons présentant des zones hydrophiles situées essentiellement au niveau des chants périphériques des particules, les faces principales de ces particules conservant des propriétés hydrophobes. En conséquence, lors de l'élaboration du matériau composite par dépôt électrolytique (chimique ou électrochimique), les particules de talc s'orientent spontanément principalement avec leurs faces principales s'étendant selon des directions normales à la surface du substrat à revêtir. Cette orientation est défavorable vis-à-vis des propriétés de lubrification recherchées pour lesquelles il serait au contraire souhaitable que les feuillets s'orientent principalement parallèlement à la surface du substrat. En outre, elle entraîne, conjointement avec le deuxième inconvénient mentionné ci-après, une forte rugosité de surface, généralement incompatible avec les applications dans lesquelles on recherche un revêtement métallique lubrifiant avec des surfaces en contact susceptibles de glisser les unes sur les autres. Pour remédier à cette rugosité, il est donc nécessaire de procéder ultérieurement à une étape de rodage du revêtement métallique réalisé. Mais, outre que cette étape est coûteuse, elle a également pour conséquence de générer des défauts au sein du matériau composite constituant le revêtement, et en particulier à la surface de la matrice métallique, notamment lorsqu'elle entraîne un déplacement ou un enlèvement des particules de talc saillantes.

En outre, la granulométrie (finesse et distribution granulométrique des particules pulvérulentes) d'un talc naturel dépend essentiellement des techniques de broyage mécanique et du matériel qui sont employés. A partir d'un talc naturel, les poudres obtenues par broyage mécanique ont généralement une granulométrie de l'ordre de quelques micromètres à quelques centaines de micromètres.

Outre une fluctuation non négligeable de la distribution granulométrique des particules, le broyage mécanique entraîne une détérioration structurelle progressive et significative du talc et l'apparition de nombreux défauts dans sa structure cristalline. Plus le broyage est fin et plus la structure cristalline initiale s'en trouve altérée.

Ainsi, les particules de talc naturel lamellaire les plus fines pouvant être obtenues ont une dimension moyenne qui est toujours supérieure à 1 µm, et présentent une distribution granulométrique mal contrôlée, souvent polymodale, non symétrique, et de forte dispersion. En conséquence, le matériau composite inclut des particules de talc naturel de taille relativement élevée, en tout cas du même ordre de grandeur ou supérieure à celle des grains métalliques qui se forment au fur et à mesure du dépôt électrolytique. Ces particules de talc relativement grandes affectent de façon

sensible la croissance du dépôt métallique et les phénomènes d'oxydoréduction et/ou électrochimique qui se produisent au cours du dépôt.

En outre, les compositions de talc naturel ne sont pas pures à 100 %. En effet, il n'existe actuellement aucune composition solide divisée de talc naturel qui soit pure à 100 % ; les particules de talc naturel ne répondent pas toutes à la formule chimique $Si_4Mg_3O_{10}(OH)_2$, qui n'est ainsi que très théorique. Le degré de pureté (absence d'association minéralogique avec d'autres minéraux tels que calcite, chlorite, pyrite, ...) et la nature des impuretés (teneurs plus ou moins importantes en Fe, Al, F, et des traces de Mn, Ti, Cr, Ni, Ca, Na et/ou K) d'un talc naturel est fonction du gisement d'origine.

Il en résulte en pratique une qualité insuffisante du matériau composite obtenu, notamment pour pouvoir être utilisé à titre de revêtement métallique lubrifiant.

Il est à noter que certaines compositions de talc naturel de dimension moyenne plus faible et présentant une distribution granulométrique améliorée ont été décrites. Néanmoins, lorsque des particules de talc naturel sont broyées à une dimension inférieure à 1 $\mu$m, elles perdent leurs propriétés liées à leur caractère lamellaire qui disparaît. En effet, en dessous de cette dimension, le broyage induit probablement autant, sinon plus, une séparation des feuillets qu'une diminution de la dimension moyenne radiale des particules. En conséquence, de telles particules nanométriques de talc naturel ne sont pas lamellaires, et ne sont donc pas appropriées à la réalisation d'un matériau composite présentant des propriétés lubrifiantes. De surcroît, la mise en oeuvre du procédé de greffage d'un dérivé de cellulose sur de telles particules de talc naturel pose problème.

L'invention vise à remédier à ces inconvénients en proposant un matériau composite qui présente les avantages du matériau composite décrit par WO 2004/063428, sans en présenter les inconvénients susmentionnés.

Ainsi, l'invention vise à fournir un matériau composite apte à former un revêtement métallique lubrifiant, qui présente des propriétés d'état de surface, d'homogénéité, de dureté et de résistance à l'usure requises de manière classique pour des pièces mécaniques en contact et en déplacement les unes par rapport aux autres dans un ensemble mécanique, et des propriétés lubrifiantes stables à des températures élevées, par exemple de l'ordre de 800°C, et ce sans nécessiter d'étape de rodage.

Plus particulièrement, l'invention vise à proposer un tel matériau composite dont les propriétés mécaniques sont essentiellement celles de la matrice métallique qui le compose, mais avec un coefficient de frottement dynamique et un coefficient de frottement sous déplacements restreints fortement diminués. Autrement dit, l'invention vise à proposer un tel matériau composite dans lequel les propriétés tribologiques sont améliorées (coefficients de frottement, taux d'usure...) mais dans lequel les autres propriétés mécaniques (résistances, modules d'élasticité, dureté,...) sont conservées, et correspondent au moins sensiblement à celles de sa matrice métallique.

C'est pourquoi la présente invention a pour objet un matériau composite, son utilisation comme revêtement autolubrifiant d'un substrat, ainsi qu'un procédé pour son élaboration.

L'invention concerne donc un matériau composite comprenant une matrice métallique au sein de laquelle sont réparties des particules minérales phyllosilicatées lamellaires, caractérisé en ce que les particules minérales phyllosilicatées lamellaires sont des particules, dites nanoparticules phyllosilicatées synthétiques, minérales silico/gennano-métalliques lamellaires synthétiques hydrophiles présentant une dimension moyenne comprise entre 10 nm et 1 $\mu$m.

Plus particulièrement, le matériau composite selon l'invention est constitué par une matrice métallique au sein de laquelle sont réparties des nanoparticules phyllosilicatées synthétiques qui sont lamellaires et hydrophiles.

Les nanoparticules phyllosilicatées synthétiques d'un matériau composite selon l'invention peuvent faire l'objet de différentes variantes, dès lors qu'elles sont lamellaires hydrophiles et compatibles avec son procédé d'élaboration. Dans un matériau composite selon l'invention, les nanoparticules sont en réalité noyées dans les grains métalliques de la matrice métallique et ne nuisent pas sensiblement à la qualité et à l'homogénéité de cette matrice métallique.

Les inventeurs ont en particulier réussi à obtenir des nanoparticules phyllosilicatées synthétiques qui présentent ces propriétés, et restent stables jusqu'à des températures élevées, typiquement de l'ordre de 700°C à 800°C, et qui peuvent être obtenues avec une distribution granulométrique monodisperse et unimodale. Ces nanoparticules phyllosilicatées synthétiques sont donc particulièrement adaptées à former un matériau composite selon l'invention apte à être utilisé à titre de revêtement métallique lubrifiant.

Ainsi, avantageusement, dans une première variante, un matériau composite selon l'invention, comprend, à titre de nanoparticules phyllosilicatées synthétiques, des nanoparticules, dites nanoparticules silico/germano-métalliques synthétiques, de formule - $(Si_xGe_{1-x})_4M_3O_{10}(OH)_2$ - dans laquelle :

- M désignant au moins un métal divalent et ayant pour formule $Mg_{y(1)}\,CO_{y(2)}\,Zn_{y(3)}\,Cu_{y(4)}\,Mn_{y(5)}\,Fe_{y(6)}\,Ni_{y(7)}\,Cr_{y(8)}$ ;

  chaque $y_{(i)}$ étant un nombre réel de l'intervalle [0 ; 1], tel que $\sum_{i=1}^{8} y(i) = 1,$

- x étant un nombre réel de l'intervalle [0 ; 1],

- une analyse en diffraction des rayons X desdites nanoparticules minérales silico/germano-métalliques synthétiques conduisant à l'obtention d'un diffractogramme présentant des pics de diffraction caractéristiques suivants :
- un pic situé à une distance de l'ordre de 9,40-9,68 Å, pour un plan (001) ;
- un pic situé à 4,50-4,75 Å, pour un plan (020) ;
- un pic situé à 3,10-3,20 Å, pour un plan (003) ;
- un pic situé à 1,50-1,55 Å, pour un plan (060).

Ces nanoparticules silico/gennano-métalliques synthétiques présentent une structure cristalline et lamellaire.
y(i) fait référence au rapport [nombre de sites octaédriques occupés par un cation métallique (i) considéré] / [nombre total de sites octaédriques].
x correspond au rapport suivant :

$$\frac{\text{nombre de sites tétraédriques occupés par les cations } Si^{4+}}{\text{nombre total de sites tétraédriques}}$$

PREMIER PROCÉDÉ DE PRÉPARATION

Un premier procédé de préparation de telles nanoparticules silico/germano-métalliques synthétiques selon l'invention est caractérisé par un traitement hydrothermal d'un gel silico/germano-métallique de fonnule -$(Si_xGe_{1-x})_4M_3O_{11}$, n'$H_2O$ -, à l'état liquide.

Préparation du gel

Dans une première étape, on forme un coprécipité initial par une réaction entre une solution de métasilicate de sodium avec une solution de chlorure de magnésium (ou de nickel). On obtient alors un gel silicométallique fortement hydraté, de consistance gélatineuse et ayant pour formule chimique : $Si_4Mg_3O_{11}$, n'$H_2O$ (ou $Si_4Ni_3O_{11}$, n'$H_2O$). Une série de centrifugation et de lavage à l'eau distillée permet de débarrasser ce gel silicométallique du NaCl formé à l'issue de la réaction de coprécipitation. n' désigne le nombre de molécules d'eau emprisonnées dans le gel hydraté. Le gel silico/germano-métallique de départ, qui est directement soumis au traitement hydrothermal, se présente sous la forme d'une substance fortement hydratée, ayant une consistance gélatineuse. Ce gel, par son comportement thixotropique, peut être rendu liquide par une simple agitation mécanique.
Selon un mode particulier de mise en oeuvre, on prépare le gel silico/germano-métallique de départ par une réaction de coprécipitation entre :

- une composition liquide comprenant au moins une solution saline choisie parmi : une solution de métasilicate de sodium ($Na_2OSiO_2$) et une solution de métagennanate de sodium ($Na_2OGeO_2$) ; les quantités respectives de ces deux solutions étant choisies pour obtenir une composition liquide présentant les rapports concentration molaire suivants :

$$\frac{[Na_2OSiO_2]}{[Na_2OSiO_2]+[Na_2OGeO_2]} = x \text{ et } \frac{[Na_2OGeO_2]}{[Na_2OSiO_2]+[Na_2OGeO_2]} = 1-x \;;$$

et

- une solution de chlorure(s) métallique(s) ($MCl_2$) comprenant au moins un chlorure de métal divalent choisi parmi : le chlorure de magnésium ($MgCl_2$), le chlorure de nickel ($NiCl_2$), le chlorure de cobalt ($CoCl_2$), le chlorure de zinc ($ZnCl_2$), le chlorure de cuivre ($CuCl_2$), le chlorure de manganèse ($MnCl_2$), le chlorure de fer ($FeCl_2$), le chlorure de chrome ($CrCl_2$) ; avec un rapport de concentration molaire pour chacun desdits chlorures de métal, tel que :

$$\frac{[\text{métal divalent}]_{(i)}}{[M]_{(totale)}} = y(i) \;;$$

- en présence d'une solution d'acide chlorhydrique.

Ce faisant, on réalise la réaction chimique suivante :

$$4\begin{pmatrix}(Na_2OSiO_2)_x \\ \\ (Na_2OGeO_2)_{1-x}\end{pmatrix}\begin{matrix}3MCl_2 \\ +2HCl \\ mH_2O\end{matrix} \rightleftharpoons [(Si_xGe_{1-x})_4M_3O_{11},\ n'H_2O]+8NaCl+(m-n'+1)H_2O$$

m, n' et (m-n'+1) étant des nombres entiers positifs.

La préparation de ce type de gel est bien connue et, à titre d'exemple, on peut suivre les instructions données dans la publication Decarreau et al., 1989 ("Synthèse et stabilité des stévensites kérolites et talcs, magnésiens et nickélifères, entre 80 et 240°C" -R. Acad. Scie. Paris-, t. 308, série II, p.301-306).

Avantageusement et en pratique, pour réaliser le gel silico/germano-métallique de formule $(Si_xGe_{1-x})_4M_3O_{11}$, $n'H_2O$, on réalise successivement les étapes suivantes :

- on prépare une composition acide de chlorure de métal ($MCl_2$, $nH_2O$) en faisant dissoudre dans un volume d'eau une quantité appropriée d'une composition de cristaux hygroscopiques d'au moins un chlorure de métal choisi parmi : le chlorure de magnésium ($MgCl_2$), le chlorure de nickel ($NiCl_2$), le chlorure de cobalt ($CoCl_2$), le chlorure de zinc ($ZnCl_2$), le chlorure de cuivre ($CuCl_2$), le chlorure de manganèse ($MnCl_2$), le chlorure de fer ($FeCl_2$), le chlorure de chrome ($CrCl_2$) ; puis on y rajoute l'acide chlorhydrique (HCl),
- on prépare une composition liquide en faisant dissoudre dans un volume d'eau appropriée une quantité d'au moins un sel choisi parmi : le métasilicate de sodium et le métagermanate de sodium,
- on mélange les deux compositions aqueuses dans des proportions choisies (stoechiométrie d'un talc $(Si\text{-}Ge)_4/M_3$) pour provoquer la formation d'un gel de coprécipitation.

Les quantités utilisées des différents réactifs sont choisies pour que les ions $Na^+$ et $Cl^-$ à l'issue de la réaction de coprécipitation soient présents en quantités équimolaires. La solution saline ($Na^+$, $Cl^-$) ainsi formée peut être éliminée simplement en procédant à une séparation liquide/solide.

Une fois la coprécipitation survenue, on récupère le gel silico/germano-métallique, par exemple, par centrifugation ou filtration, pour le soumettre à un traitement hydrothermal conforme à l'invention. En récupérant ainsi ce gel de coprécipitation, on le débarrasse par la même occasion des ions $Na^+$ et $Cl^-$ qui sont particulièrement néfastes pour une bonne cristallisation des nanoparticules silico/germano-métalliques synthétiques.

Avantageusement, une fois le gel de coprécipitation récupéré, on réalise au moins un lavage de celui-ci à l'eau distillée, notamment pour le débarrasser de tous les ions $Na^+$ et $Cl^-$ de réaction. Ce lavage peut également être effectué avec de l'eau osmosée, ou simplement avec de l'eau du robinet.

Traitement hydrothermal

Dans ledit premier procédé, on réalise ledit traitement hydrothermal pendant une durée et avec une température comprise entre 300°C et 500°C, choisies en fonction de la granulométrie et de la stabilité structurelle souhaitées pour les nanoparticules silico/germano-métalliques synthétiques à préparer.

Pour mettre en oeuvre le traitement hydrothermal du gel silico/germano-métallique, de préférence, une adjonction complémentaire d'eau peut être envisagée pour prévenir la calcination de la fraction solide (le gel de départ, le produit final, les éventuels produits intermédiaires). La nécessité de cette adjonction d'eau et la quantité d'eau minimale à ajouter pour éviter la calcination dépendent essentiellement du degré d'hydratation du gel initial, de la température de traitement ainsi que de la durée de ce traitement.

La durée du traitement hydrothermal, qui peut aller d'un jour à plusieurs jours, a une grande influence notamment sur la cristallinité du minéral synthétique obtenu au final.

Ce premier procédé de préparation de nanoparticules silico/germano-métalliques synthétiques découle des constatations essentielles et surprenantes suivantes :

- d'une part, un traitement hydrothennal réalisé à des températures relativement élevées (par rapport aux 110-240°C préconisées dans la publication Decarreau *et al.*, 1989), comprises entre 300°C et 500°C, conduit à la formation des particules minérales synthétiques ayant des caractéristiques structurelles (notamment lamellarité, cristallinité) très similaires à celles des talcs naturels, et une excellente stabilité thermique,
- d'autre part, ce premier procédé de préparation, notamment en fonction du choix de la température, permet de façon extrêmement simple de synthétiser des nanoparticules silico/germano-métalliques synthétiques, stables et

pures, de taille et de caractéristiques cristallines très précisément définies et prévisibles.

Avantageusement, on effectue le traitement hydrothermal dudit gel silico/germano-métallique au moyen d'un autoclave. De préférence on utilise un autoclave en acier à chemisage intérieur en titane ou en acier inoxydable.

Avantageusement, on rajoute dans l'autoclave, avec ledit gel silico/gennano-métallique, une quantité d'eau (de préférence de l'eau distillée) au moins suffisante pour créer, à l'intérieur de cet autoclave porté à la température de traitement, une atmosphère de vapeur saturante.

Avantageusement et selon une variante de mise en oeuvre de ce premier procédé de préparation, on réalise ledit traitement hydrothermal à une pression contrôlée de l'ordre de 16 bars.

Avantageusement, on réalise le traitement hydrothermal avec un gel silico/germano-métallique liquéfié ayant un rapport liquide/solide de l'ordre de 0,83 ; la quantité de liquide étant exprimée en $cm^3$, et la quantité de solide, en grammes. Eventuellement, si nécessaire, on rajoute audit gel silico/germano-métallique liquéfié une quantité d'eau appropriée pour atteindre ce rapport.

Avantageusement et selon l'invention, on réalise le traitement hydrothennal sous agitation. A cet effet, on peut par exemple disposer un barreau aimanté à l'intérieur de l'autoclave.

Au tenue d'un traitement hydrothermal conforme à ce premier procédé de préparation, on obtient une composition se présentant sous la forme d'une solution colloïdale renfermant lesdites nanoparticules silico/germano-métalliques synthétiques. Ces nanoparticules minérales synthétiques, en solution dans l'eau peuvent se trouver dans un état individualisé les unes par rapport aux autres. La granulométrie de ces nanoparticules élémentaires peut varier entre 10 nm et 1 $\mu$m, selon la température du traitement hydrothermal appliquée, température choisie entre 300°C et 500°C. De préférence, la température du traitement hydrothermal est inférieure à 400 °C.

Post-traitement

À l'issue du traitement hydrothermal, on récupère une composition colloïdale. Dans une première variante de l'invention, on utilise cette composition colloïdale directement pour l'incorporer dans un matériau composite selon l'invention, notamment dans le cadre d'un procédé de dépôt électrolytique sur un substrat d'un revêtement constitué par un tel matériau composite.

Dans une autre variante, on soumet ladite composition colloïdale à une étape de séchage suivie d'une étape de broyage mécanique pour obtenir une composition talqueuse comprenant des nanoparticules silico/germano-métalliques synthétiques parfaitement individualisées. Les agrégats éventuels contenus dans la composition sont ainsi réduits en nanoparticules élémentaires individualisées. Il est à noter cependant que cette étape de broyage mécanique n'a pas pour effet de réduire la taille des nanoparticules, mais uniquement de désagréger les éventuels agrégats résultant du procédé de préparation. Elle ne nuit donc en aucune manière à la lamellarité et à la cristallinité des nanoparticules. La répartition granulométrique de ces nanoparticules silico/germano-métalliques synthétiques élémentaires obtenues est sensiblement unimodale et monodisperse.

Avantageusement, le séchage peut être réalisé au moyen d'une étuve ; par exemple, à une température de l'ordre de 60°C, pendant au moins un à deux jours. Le broyage est réalisé avantageusement de façon mécanique ; par exemple avec un mortier, de préférence en agate pour éviter tout risque de contamination de la composition talqueuse.

Avantageusement, on réalise le traitement hydrothermal à une température de l'ordre de 300°C, par exemple pendant une durée de l'ordre de 3 jours. On peut alors par exemple obtenir au final des nanoparticules silico/germano-métalliques synthétiques élémentaires dont la granulométrie se situe entre 20 nm et 100 nm.

Compositions obtenues par le premier procédé de préparation

Il est à noter en particulier que ce premier procédé de préparation permet d'obtenir des compositions de nanoparticules silico/germano-métalliques synthétiques qui ont toutes une même entité chimique. En l'occurrence, il s'agit de nanoparticules silico/germano-métalliques synthétiques répondant à la formule $(Si_xGe_{1-x})_4M_3O_{10}(OH)_2$ comme indiqué ci-dessus.

Dans cette formule chimique $(Si_xGe_{1-x})_4M_3O_{10}(OH)_2$, Si et Ge se réfèrent aux ions silicium et/ou aux ions germanium qui occupent les sites tétraédriques du réseau cristallin. M symbolise les cations métalliques divalents des sites octaédriques (par exemple $Mg^{2+}$, $Co^{2+}$, $Mn^{2+}$, $Zn^{2+}$, $Cu^{2+}$, $Fe^{2+}$, $Ni^{2+}$ et/ou $Cr^{2+}$).

En particulier, ce premier procédé de préparation permet d'obtenir, à titre de nanoparticules silico/gennano-métalliques synthétiques, des nanoparticules minérales répondant à la formule chimique $Si_4Mg_3O_{10}(OH)_2$. Il s'agit alors de nanoparticules qui peuvent être qualifiées de « nanoparticules talqueuses synthétiques », de structure chimique identique à celle d'un talc naturel, mais qui sont lamellaires, cristallines, pures, de granulométrie monodisperse et unimodale avec une dimension moyenne pouvant être comprise entre 10 nm et 1 $\mu$m.

Des analyses réalisées en diffraction des rayons X et en spectroscopie infrarouge ont en effet permis d'établir

qu'un traitement hydrothermal conforme à l'invention, appliqué directement sur un gel silicométallique de formule chimique $Si_4 Mg_3O_{11}$, n'$H_2O$ (c'est-à-dire un gel silico/gennano-métallique de formule chimique $(Si_xGe_{1-x})_4M_3O_{11}$, n'$H_2O$, dans laquelle x est égal à 1, et M désigne le magnésium), conduit à l'obtention d'une composition colloïdale de talc synthétique dont les particules en suspension montrent une grande similitude, en particulier sur le plan de la cristallinité et de la lamellarité, avec un talc naturel (constatation faites notamment à partir de spectres réalisés en transmission dans le moyen infrarouge et en réflexion diffuse dans le proche infrarouge).

On notera cependant que, s'agissant d'une composition de nanoparticules talqueuses synthétiques préparée conformément au premier procédé de préparation (c'est-à-dire de formule $(Si_xGe_{1-x})_4M_3O_{10}(OH)_2$ dans laquelle x est égal à 1 et M désigne le magnésium), celle-ci se distingue d'une composition de talc naturel notamment par sa pureté. En particulier, les nanoparticules talqueuses synthétiques sont exclusivement des particules de formule chimique $Si_4Mg_3O_{10}(OH)_2$. Or, il n'existe, à l'heure actuelle, aucune composition pulvérulente préparée à partir de talc naturel qui soit à 100 % pure.

En particulier, en diffraction des rayons X, le diffractogramme correspondant à ces nanoparticules talqueuses synthétiques présente un pic de diffraction caractéristique situé à une distance de l'ordre de 9,40-9,70 Å, et correspondant à un plan (001). Pour un talc naturel, le pic de diffraction correspondant est situé à une distance de l'ordre de 9,35 Å.

Egalement, les nanoparticules talqueuses synthétiques présentent conjointement une cristallinité de bonne qualité et une granulométrie extrêmement fine, pouvant être comprise entre 10 nm et 1 µm. Or, dans l'état actuel des techniques de broyage, à partir d'un talc naturel, des particules d'une telle finesse ne peuvent être obtenues qu'avec une "amorphisation" (diminution de la cristallinité) sévère du produit. En diffraction des rayons X, cette amorphisation se traduit notamment par une diminution de l'intensité des pics de diffraction caractéristiques, que sont notamment les pics situés à : 9,35 Å pour le plan (001), 4,55 Å pour le plan (020), 3,14 Å pour le plan (003), et 1,52 Å pour le plan (060).

Ces analyses ont également permis de constater que ledit premier procédé de préparation est généralisable à l'ensemble de gels silico/germano-métalliques qui répondent à la formule chimique $(Si_xGe_{1-x})_4M_3O_{11}$, n'$H_2O$. Ce premier procédé de préparation permet ainsi la synthèse de compositions comprenant des nanoparticules silico/germano-métalliques synthétiques de formule $(Si_xGe_{1-x})_4M_3O_{10}(OH)_2$, qui partagent également avec les talcs naturels de grandes similitudes structurelles.

Ces nanoparticules silico/gennano-métalliques synthétiques présentent en effet une organisation nanométrique en feuillets superposés ; chaque feuillet présente une structure cristalline composée d'une couche d'octaèdres (occupés par des ions métalliques divalents : $Mg^{2+}$, $Co^{2+}$, $Zn^{2+}$, $Cu^{2+}$, $Mn^{2+}$, $Fe^{2+}$ et/ou $Ni^{2+}$) intercalées entre deux couches de tétraèdres inversés (occupés par les ions $Si^{4+}$ et/ou $Ge^{4+}$).

Le premier procédé de préparation permet donc d'obtenir des compositions analogues à une composition de talc, par exemple des compositions dites "germanifères", c'est-à-dire des compositions comprenant des nanoparticules de structure cristalline rappelant celle du talc, mais dans lesquels les cations $Si^{4+}$ des sites tétraédriques sont au moins en partie substitués par des cations $Ge4^+$. De même, il peut s'agir de compositions dites "dérivées" ou dites "fonctionnalisées", par exemple lorsque les ions magnésium des sites octaédriques, en proportions variables, sont remplacés par d'autres cations divalents en vue d'obtenir des nanoparticules aux propriétés physiques, notamment optique et/ou électrique, améliorées par rapport à des nanoparticules de talc naturel.

Outre les méthodes de diffraction des rayons X, les analyses en infrarouges permettent aussi de distinguer les nanoparticules silico/germano-métalliques synthétiques ainsi obtenues, non seulement par rapport à des talcs naturels mais également par rapport à d'autres phyllosilicates connus, tels que par exemple kérolites, stévensites, smectites.

Les nanoparticules silico/gennano-métalliques synthétiques sont caractérisées par leur structure cristalline et lamellaire dont l'analyse en diffraction des rayons X, permet l'obtention d'un diffractogramme présentant les pics de diffraction caractéristiques mentionnés ci-dessus.

Avantageusement les nanoparticules silico/germano-métalliques synthétiques obtenues et incorporées dans un matériau composite selon l'invention présentent un pic de diffraction du plan (001) situé à une distance de l'ordre de 9,55-9,65 Å.

Les nanoparticules silico/germano-métalliques synthétiques ont aussi la particularité de pouvoir présenter des teintes colorées plus ou moins soutenues, qui dépendent de la nature des cations métalliques divalents ($Mg^{2+}$, $Co^{2+}$, $Zn^{2+}$, $Cu^{2+}$, $Mn^{2+}$, $Fe^{2+}$, $Ni^{2+}$, $Cr^{2+}$) et de leur proportion dans le réseau cristallin.

Par exemple, les nanoparticules silico/germano-métalliques synthétiques sont d'un vert soutenu ou d'un vert pâle, lorsque les cations $Ni^{2+}$ sont préférés, au moins en partie, aux cations $Mg^{2+}$ (d'un talc classique) pour occuper les sites octaédriques du réseau cristallin.

De même, lorsque les sites octaédriques du réseau cristallin sont, au moins en partie, occupés par des cations :

- $Co^{2+}$, les compositions talqueuses sont d'un rose plus ou moins prononcé,
- $Cu^{2+}$, les compositions talqueuses sont d'un bleu plus ou moins prononcé,
- $Mn^{2+}$, les compositions talqueuses sont de couleur chocolat,
- $Fe^{2+}$, les compositions talqueuses ont une couleur variant entre gris et rouille,

- $Zn^{2+}$, les compositions talqueuses sont de couleur blanche,
- $Cr^{2+}$, les compositions talqueuses ont une couleur variant du vert au bleu.

À ce titre, il est à noter que, si les talcs naturels sous forme de roches peuvent présenter des couleurs variées (vert, rose, miel...), leur broyage en fines particules conduit à la formation de produits pulvérulents toujours blancs. En effet, la couleur d'un bloc de talc naturel n'est pas due à des centres colorés propres à la composition chimique de la matière mais à l'agencement particulier des particules de talc, les unes par rapport aux autres ; le broyage en fines particules uniformise l'ensemble et conduit à la perte de la coloration.

Le premier procédé de préparation permet donc d'obtenir des nanoparticules phyllosilicatées synthétiques colorées malgré leur grande finesse. Un matériau composite selon l'invention peut donc être coloré tout en conservant les propriétés mentionnées ci-dessus.

Egalement, sur ce même principe de remplacement des cations $Mg^{2+}$, par d'autres cations divalents, en fonction du choix du(des) cation(s) divalent(s) destiné(s) à occuper les sites octaédriques du réseau cristallin, les nanoparticules silico/germano-métalliques synthétiques peuvent différer notablement de particules de talc naturel, au niveau de leurs propriétés de conductance électrique et/ou thermique.

En conséquence, les propriétés de conductance électrique et/ou thermique d'un matériau composite selon l'invention peuvent être ajustés au moins partiellement en fonction de celles de ses nanoparticules phyllosilicatées synthétiques.

DEUXIÈME PROCÉDÉ DE PRÉPARATION

Dans une variante, des nanoparticules talqueuses synthétiques telles que mentionnées ci-dessus et aptes à être incorporées dans un matériau composite selon l'invention à titre de nanoparticules phyllosilicatées synthétiques, peuvent être préparées selon un deuxième procédé de préparation.

Dans ce deuxième procédé de préparation, on soumet une composition de kérolites à un traitement thermique anhydre effectué à une pression inférieure à 5 bars, pendant une durée (notamment allant de quelques heures à plusieurs jours) et avec une température de traitement supérieure à 300°C. La durée et la température du traitement thermique anhydre sont choisies de façon à obtenir des particules de talc synthétique thenniquement stable et de formule $Si_4Mg_3O_{10}(OH)_2$.

Ce deuxième procédé de préparation découle de la constatation essentielle et surprenante qu'un traitement thermique anhydre, réalisé à une température au moins supérieure à 300°C, permet de façon extrêmement simple de convertir une composition de kérolites en une composition de nanoparticules talqueuses synthétiques, cette composition étant stable et pure, de caractéristiques très précisément définies et prévisibles.

Tout particulièrement, les inventeurs ont mis en évidence qu'un traitement thermique anhydre a pour effet d'induire une réorganisation progressive de la structure lamellaire "pseudo-cristalline et hydratée" d'une kérolite en réduisant les lacunes du réseau cristallin, et le relâchement des molécules d'eau piégées dans les espaces interfoliaires.

Un traitement thermique anhydre réalisé à 300°C permet effectivement d'induire des modifications notables sur la structure des kérolites (modifications décelables notamment par les méthodes d'analyse en infrarouges et en diffraction des rayons X) susceptible de conduire à l'obtention de nanoparticules talqueuses synthétiques.

Avantageusement et selon l'invention, on réalise donc le traitement thermique anhydre à une température de l'ordre de 500-550°C. A une telle température, on obtient des nanoparticules talqueuses synthétiques en 5 heures environ. Avantageusement et selon l'invention, pour obtenir des nanoparticules talqueuses synthétiques thermiquement stables, la durée de traitement est supérieure à 5 heures.

Avantageusement et selon l'invention, on réalise le traitement thermique anhydre à l'air ambiant, à l'intérieur d'un creuset, par exemple, en céramique ou en tout autre matériau adapté à la température de traitement.

Directement à l'issue d'un traitement thermique anhydre, on récupère une substance brute, solide de couleur blanche et correspondant à des agrégats plus ou moins grossiers formés de nanoparticules talqueuses synthétiques élémentaires, agrégées les unes aux autres. Avantageusement, à l'issue du traitement thermique anhydre, un broyage mécanique est prévu pour délier ces agrégats en nanoparticules talqueuses synthétiques élémentaires individualisées et obtenir ainsi une composition pulvérulente. La répartition dimensionnelle de ces nanoparticules talqueuses synthétiques élémentaires est sensiblement unimodale et monodisperse.

Selon un mode préféré de mise en oeuvre, on utilise une composition de kérolites préalablement préparée à partir d'un gel silicométallique de formule chimique $Si_4Mg_3O_{11},n'H_2O$, au moyen d'un traitement hydrothennal approprié.

Dans ce cas, le deuxième procédé de préparation comprend également et avantageusement une étape préliminaire lors de laquelle on prépare une composition de kérolites, laquelle sera soumise ultérieurement à un traitement thermique anhydre comme précédemment énoncé.

Avantageusement, on prépare ladite composition de kérolites à partir d'un gel silicométallique de formule $Si_4Mg_3O_{11}, n'H_2O$, auquel on a fait subir un traitement hydrothermal à pression d'eau saturante, de température comprise

entre 100°C et 240°C, pendant une durée d'un jour à quelques mois.

Le choix des paramètres, notamment de température et de durée, dudit traitement hydrothermal permet un certain contrôle sur la granulométrie des particules de talc synthétique qui seront finalement obtenues. Selon les paramètres choisis, les nanoparticules talqueuses synthétiques qui seront obtenues au final, auront une granulométrie allant pouvant varier de 10 nm à 1 μm, avec une répartition granulométrique sensiblement unimodale et monodisperse.

Avantageusement, on prépare le gel silicométallique par coprécipitation, comme indiqué ci-dessus en référence au premier procédé de préparation, selon la réaction :

$$4\,Na_2OSiO_2 \;+\; \begin{matrix} 3MgCl_2 \\ 2HCl \\ mH_2O \end{matrix} \longrightarrow [Si_4Mg_3O_{11}, n'H_2O] + 8NaCl + (m\text{-}n'+1)H_2O$$

m, n' et (m-n'+1) étant des nombres entiers positifs.

Avantageusement, la composition de kérolites directement issue du traitement hydrothermal dudit gel silicométallique est séchée puis broyée pour obtenir une composition pulvérulente avant de la soumettre audit traitement thermique anhydre. Pour ce faire, le séchage peut être réalisé au moyen d'une étuve ; par exemple, à une température de l'ordre de 60°C, pendant au moins un à deux jours. Le broyage est réalisé avantageusement de façon mécanique ; par exemple avec un mortier, de préférence en agate pour éviter tout risque de contamination de la composition de kérolites.

Les similitudes structurelles existant entre des nanoparticules talqueuses synthétiques obtenues conformément à ce deuxième procédé de préparation et un talc naturel ont aussi été mises en évidence par des méthodes d'analyse en diffraction des rayons X et par absorption des infrarouges.

Par exemple, en diffraction des rayons X, la distinction entre des nanoparticules talqueuses synthétiques et un talc naturel, apparaît notamment dans la position du pic de diffraction correspondant au plan (001). Pour des nanoparticules talqueuses synthétiques obtenues selon le deuxième procédé de préparation, ce pic de diffraction se trouve à une distance comprise entre 9,40 Å et 9,68 Å -au lieu de 9,35 Å pour le talc naturel-.

Plus particulièrement, des nanoparticules talqueuses synthétiques obtenues selon le deuxième procédé de préparation sont caractérisées par une analyse en diffraction des rayons X qui conduit à un diffractogramme présentant des pics de diffraction caractéristiques suivants :

- un pic situé à 9,40-9,68 Å, correspondant à un plan (001) ;
- un pic situé à 4,50-4,60 Å, correspondant à un plan (020) ;
- un pic situé à 3,10-3,20 Å, correspondant à un plan (003) ;
- un pic situé à 1,50-1,55 Å, correspondant à un plan (060).

Avantageusement, le pic de diffraction correspondant au plan (001) est situé à une distance de l'ordre de 9,40-9,43 Å.

Avantageusement, le deuxième procédé de préparation permet d'obtenir des nanoparticules talqueuses synthétiques qui ont une granulométrie inférieure à 500 nm -notamment comprise entre 20 nm et 100 nm-. Ces nanoparticules talqueuses synthétiques ont en outre une distribution granulométrique sensiblement unimodale et monodisperse.

Dans une deuxième variante, un matériau composite selon l'invention comprend, à titre de nanoparticules phyllosilicatées synthétiques, des nanoparticules minérales phyllosilicatées lamellaires synthétiques, dites nanoparticules d'interstratifié T.O.T.-T.O.T. gonflant, formées d'une interstratification entre :

- au moins une phase minérale non gonflante, formé d'un empilement de feuillets élémentaires de type phyllogennanosilicate 2/1 et de formule chimique - $(Si_xGe_{1-x})_4M_3O_{10}(OH)_2$ -, et
- au moins une phase minérale gonflante, formée d'un empilement de feuillets élémentaires de type phyllogermanosilicate 2/1 et d'au moins un espace interfoliaire entre deux feuillets élémentaires consécutifs ; ladite phase minérale gonflante ayant pour formule chimique
- $(Si_xGe_{1-x})_4\ M_{3-\varepsilon}O_{10}\ (OH)_2,\ (M^{2+})_{\varepsilon'} \cdot nH_2O$-,

dans lesdites formules chimiques :

- M désignant au moins un métal divalent et ayant pour formule $Mg_{y(1)}Co_{y(2}Zn_{y(3)}Cu_{y(4)}Mn_{y(4)}Mn_{y(5)}Fe_{y(6)}Ni_{y(7)}Cr_{y(8)}$ ; chaque *y(i)* représentant un nombre réel de l'intervalle [0 ; 1], et tel que,
- *x* étant un nombre réel de l'intervalle [0 ; 1],
- ε et ε' se rapportant respectivement au déficit cationique des feuillets élémentaires de la phase gonflante, et aux

cations présents dans 1'(les) espace(s) interfoliaire(s),

- une analyse en diffraction des rayons X desdites nanoparticules d'interstratifié T.O.T.-T.O.T. gonflant conduisant à l'obtention d'un diffractogramme présentant des pics de diffraction caractéristiques suivants :
- un plan (001) situé à une distance de l'ordre de 14-15 Å, représentatif de ladite phase minérale gonflante,
- des plans représentatifs de ladite phase minérale non gonflante :
    - un plan (001) situé à une distance de l'ordre de 9,60-10,50 Å ;
    - un plan (020) situé à 4,50-4,60 Å ;
    - un plan (003) situé à 3,10-3,20 Å ;
    - un plan (060) situé à 1,50-1,55 Å.

Dans les formules chimiques représentatives de phases minérales non gonflantes et des phases minérales gonflantes, - $(Si_xGe_{1-x})_4M_3O_{10}(OH)_2$ - et - $(Si_xGe_{1-x})_4M_{3-\varepsilon}O_{10}(OH)_2$, $(M^{2+})\varepsilon' \cdot nH_2O$ -, des nanoparticules d'interstratifié T.O.T.-T.O.T. gonflant, Si et Ge se réfèrent aux ions silicium et/ou aux ions germanium qui occupent les sites tétraédriques du réseau cristallin. M symbolise les cations métalliques divalents des sites octaédriques (par exemple $Mg^{2+}$, $Co^{2+}$, $Zn^{2+}$, $C^{2+}$, $Mn^{2+}$, $Fe^{2+}$, $Ni^{2+}$et/ou $Cr^{2+}$).

Les smectites correspondent au groupe le plus diversifié des minéraux argileux 2/1. Au vu de leur structure, elles sont qualifiées de type T.O.T. (tétraèdre-octaèdre-tétraèdre) gonflant.

Elles sont en effet constituées par un empilement irrégulier de feuillets élémentaires de structure cristalline, dont le nombre varie de quelques unités à quelques dizaines d'unités ; chaque feuillet élémentaire étant constitué par l'association de deux couches de tétraèdres situées de part et d'autre d'une couche d'octaèdres.

La couche octaédrique des smectites est formée de deux plans d'ions $O^{2-}$ et $OH^-$ (dans la proportion molaire $O^{2-}/OH^-$ de 2:1). De part et d'autre de cette couche médiane viennent s'agencer des réseaux bidimensionnels de tétraèdres dont un des sommets est occupé par un oxygène de la couche octaédrique, tandis que les trois autres le sont par des oxygènes sensiblement coplanaires. Dans les smectites naturelles, les sites tétraédriques sont généralement occupés par des ions $Si^{4+}$ ou $Al^{3+}$, et les sites octaédriques le sont le plus souvent par les cations $Mg^{2+}$, $Fe^{2+}$, $Al^{3+}$ et/ou $Fe^{3+}$. Une faible proportion des sites octaédriques et/ou tétraédriques n'est pas occupée et est responsable du déficit cationique du réseau cristallin formant les feuillets élémentaires.

Les smectites se caractérisent également par la présence, entre les feuillets élémentaires, d'espaces interfoliaires qui renferment de l'eau et des cations et qui forment la phase gonflante du minéral. Dans les smectites naturelles, ces cations interfoliaires sont généralement des ions $Mg^{2+}$, $Ca^{2+}$ et/ou $Na^+$.

Cette structure particulière confère aux smectites la particularité de pouvoir former facilement des complexes lamellaires avec l'eau et avec de nombreuses molécules organiques, tels que le glycérol et l'éthylène glycol, qui s'insèrent dans l'espace interfoliaire. Egalement, les cations interfoliaires sont faiblement liés au reste du réseau et de ce fait sont susceptibles d'être échangés avec d'autres cations, avec plus ou moins de facilité. On parle de capacité d'échange cationique du minéral.

Les nanoparticules d'interstratifié T.O.T.-T.O.T. gonflant susmentionnées sont des nanoparticules minérales de structure et de capacité d'échange cationique rappelant celles des smectites naturelles, mais dont les caractéristiques structurelles, tels que cristallinité et ratio - phase gonflante/phase minérale non gonflante -, au vu des paramètres particuliers appliqués lors de leur préparation, peuvent être prévisibles et/ou relativement bien définies.

Ces nanoparticules d'interstratifié T.O.T.-T.O.T. gonflant sont encore plus hydrophiles que les nanoparticules silico/germano-métalliques synthétiques, présentent une surface accessible encore plus importante, favorisant la dispersion dans la suspension de précurseurs de la matrice métallique lors de la formation du matériau composite comme décrit ci-après, et l'adsorption des nanoparticules sur les grains métalliques au cours de la croissance métallique, sans gêner cette croissance métallique.

<u>TROISIÈME PROCÉDÉ DE PRÉPARATION</u>

Lesdites nanoparticules d'interstratifié T.O.T.-T.O.T. gonflant sont préparées selon un troisième procédé de préparation caractérisé en ce qu'on réalise un traitement hydrothermal d'un gel silico/germano-métallique de formule chimique - $(Si_xGe_{1-x})_4\ M_3O_{11}$, $n'H_2O$ -, à l'état liquide ; on réalise ledit traitement hydrothermal pendant une durée et à une température comprise entre 150°C et 300°C, choisies en fonction des caractéristiques structurelles souhaitées pour lesdites nanoparticules d'interstratifié T.O.T.-T.O.T. gonflant à préparer ; on réalise ledit traitement hydrothennal à une pression contrôlée de l'ordre de 16 bars et sous agitation ; pour une température et une durée de traitement hydrothermal déterminées, on réalise une adjonction complémentaire d'eau audit gel silico/germano-silicate de façon à ajuster le ratio eau/solide représentatif du mélange réactionnel à base de gel silico/germano-métallique à traiter, en fonction du rapport volumique - phase minérale gonflante/phase minérale non gonflante - souhaité pour les nanoparticules d'interstratifié T.O.T.-T.O.T. gonflant à préparer.

Il est à noter que la publication « synthèse et stabilité des stévensites et talcs, magnésiens et nickélifères, entre 80 et 240 °C » A. Decarreau *et al* XP008075903, décrit un procédé permettant d'obtenir différents minéraux, stévensites, kérolites et talcs, la formation de chaque minéral dépendant strictement de la température. Aucun des minéraux obtenus par ce procédé ne présente diffractogramme comprenant un pic de diffraction pour un plan (001) représentatif d'une phase minérale gonflante, situé à une distance de l'ordre de 14 à 15 angströms. Ce document ne décrit pas des compositions d'interstratifié T.O.T.-T.O.T. gonflant, ni un procédé permettant d'obtenir de telles compositions.

Dans le troisième procédé de préparation, le produit silico/germano-métallique de départ, qui est directement soumis au traitement hydrothermal, se présente sous la forme d'un gel, c'est-à-dire une substance fortement hydratée, ayant une consistance gélatineuse. Ce gel présente un comportement thixotropique et est rendu liquide par une simple agitation mécanique. Dans ce troisième procédé de préparation, on prépare avantageusement le gel silico/germano-métallique de départ par une réaction de coprécipitation comme décrit ci-dessus en référence au premier procédé de préparation.

Dans le troisième procédé de préparation, l'adjonction complémentaire d'eau permet aussi de prévenir la calcination de la fraction solide (le gel de départ, le produit final, les éventuels produits intermédiaires). La nécessité de cette adjonction d'eau et la quantité d'eau minimale à ajouter pour éviter la calcination dépendent essentiellement du degré d'hydratation du gel initial, de la température de traitement ainsi que de la durée de ce traitement. Néanmoins, la proportion eau/solide choisie pour effectuer le traitement hydrothermal n'est pas anodine, elle influe sur certaines des propriétés physico-chimiques et structurelles des nanoparticules d'interstratifié T.O.T.-T.O.T. gonflant qui seront obtenues au final. En particulier, cette proportion influe de manière significative sur la cristallinité du produit et sur la proportion - phase minérale gonflante/phase minérale non gonflante -, et donc *in fine* notamment sur la capacité d'échange cationique du produit obtenu, ainsi que sur la capacité de celui-ci à être chargé en diverses molécules et substances.

La durée du traitement hydrothermal, qui peut aller d'un jour à plusieurs jours, a une grande influence notamment sur la cristallinité du minéral synthétique obtenu au final.

Avantageusement dans le troisième procédé de préparation, on effectue le traitement hydrothennal dudit gel silico/gennano-métallique au moyen d'un autoclave. De préférence, on utilise un autoclave en acier à chemisage intérieur en polytétrafluoroéthylène (Téflon®), en titane ou en acier inoxydable.

Avantageusement, on réalise ledit traitement hydrothermal à une température de l'ordre de 220°C, pour une durée de l'ordre de 15 jours. Selon une variante de réalisation, on réalise ledit traitement hydrothermal à une température de l'ordre de 300°C, pour une durée de l'ordre de 5 heures.

Pour réaliser le traitement hydrothennal sous agitation, on peut par exemple disposer un barreau aimanté à l'intérieur de l'autoclave.

Au terme de ce traitement hydrothermal, on obtient une composition minérale synthétique se présentant sous la forme d'une solution colloïdale renfermant lesdites nanoparticules d'interstratifié T.O.T.-T.O.T. gonflant. Ces nanoparticules minérales synthétiques, en solution dans l'eau, peuvent se trouver soit dans un état plus ou moins individualisé les unes par rapport aux autres, soit sont organisées en agrégats plus ou moins grossiers formés de nanoparticules élémentaires d'interstratifié T.O.T.-T.O.T. gonflant, agrégées les unes aux autres.

Avantageusement, à l'issue du traitement hydrothermal, on récupère une composition colloïdale que l'on peut utiliser telle qu'elle, ou, en variante soumettre à une étape de séchage suivie d'une étape de broyage mécanique, comme indiqué ci-dessus en référence au premier procédé de préparation, pour obtenir une composition solide comprenant des nanoparticules d'interstratifié T.O.T.-T.O.T. gonflant individualisées.

<u>Compositions obtenues par le troisième procédé de préparation</u>

Parmi les compositions de nanoparticules d'interstratifié T.O.T.-T.O.T. gonflant pouvant être obtenues par ce troisième procédé de préparation et utilisées dans un matériau composite selon l'invention, on peut citer à titre d'exemple particulier, des compositions d'interstratifié talc-stévensite synthétique dans lesquelles les nanoparticules minérales forment une interstratification entre :

- un empilement de feuillets de talc, de fonnule - $Si_4Mg_3O_{10}(OH)_2$ -, qui forme la phase minérale non gonflante, et
- un empilement de feuillets de type stévensite, de formule - $(Si_4Mg_{3-\varepsilon}O_{10}(OH)_2, (M_g^{2+})_{\varepsilon}' \cdot nH_2O$ -, qui forme la phase minérale gonflante.

Egalement, le troisième procédé de préparation permet d'obtenir des compositions de nanoparticules d'interstratifié T.O.T.-T.O.T. gonflant de compositions analogues à une composition d'interstratifiée talc-stévensite, par exemple, des compositions dites "gennanifères", dans lesquelles au moins une partie des cations $Si^{4+}$ des sites tétraédriques est substituée par des cations $Ge^{4+}$. De même, il peut s'agir de compositions dites "dérivées" ou dites "fonctionnalisées", par exemple lorsque les cations $Mg^{2+}$ des sites octaédriques, en proportions variables, sont remplacés par d'autres cations divalents en vue d'obtenir des particules aux propriétés physiques, notamment optique et/ou électrique et/ou

magnétique, améliorées par rapport à des particules de talc naturel.

Des analyses réalisées notamment en diffraction des rayons X ont permis aux inventeurs de caractériser les phases minéralogiques des nanoparticules d'interstratifié T.O.T.-T.O.T. gonflant obtenues, et confirment que le traitement hydrothermal appliqué directement sur un gel silicométallique de formule chimique - $Si_4Mg_3O_{11}$, n'$H_2O$ - (c'est-à-dire un gel silico/germano-métallique de formule chimique - $(Si_xGe_{1-x})_4$ $M_3O_{11}$, n'$H_2O$ -, dans laquelle x est égal à 1, et M désigne le magnésium) conduit à l'obtention d'une composition colloïdale comprenant des nanoparticules d'interstratifié T.O.T.-T.O.T. gonflant de type talc-stévensite.

D'autre part, ces analyses ont permis d'établir l'influence du ratio eau/solide représentatif du mélange réactionnel à base de gel silico/germano-métallique, sur la proportion de la phase gonflante dans le minéral synthétique préparé. Pour une température et un temps de traitement hydrothermal donnés, plus ce ratio augmente et plus la part qui correspond à la phase gonflante diminue.

Ainsi, avantageusement, les nanoparticules phyllosilicatées synthétiques d'un matériau composite selon l'invention sont choisies dans le groupe formé de :

1) des nanoparticules silico/germano-métalliques synthétiques telles que définies ci-dessus, notamment des nanoparticules talqueuses synthétiques telles que définies ci-dessus,
2) des nanoparticules d'interstratifié T.O.T.-T.O.T. gonflant telles que définies ci-dessus.

L'invention s'étend également à un matériau composite caractérisé en ce que lesdites nanoparticules phyllosilicatées synthétiques sont obtenues par un procédé de préparation choisi parmi le premier procédé de préparation, le deuxième procédé de préparation et le troisième procédé de préparation mentionnés ci-dessus.

Avantageusement et selon l'invention, le matériau composite comprend une proportion volumique de nanoparticules phyllosilicatées synthétiques inférieure à 20 % (et supérieure à 0 %).

Dans un matériau selon l'invention, les nanoparticules phyllosilicatées synthétiques sont réparties individualisées et dispersées au sein de la matrice métallique, plus particulièrement au sein des grains de la matrice métallique.

Avantageusement et selon l'invention, la matrice métallique est constituée par un métal choisi parmi Fe, Co, Ni, Mn, Cr, Cu, W, Mo, Zn, Au, Ag, Pt, Sn, par un composé intermétallique ou un alliage de plusieurs métaux choisis parmi les métaux précités, ou par un alliage d'un ou plusieurs desdits métaux avec un métalloïde.

La matrice métallique peut être constituée par un métal choisi parmi les métaux précités, seul, ou sous forme de composé intermétallique, ou sous forme d'un alliage de plusieurs métaux, ou sous forme d'un alliage avec un métalloïde. Les matériaux composites dont la matrice est le nickel, un alliage métallique de nickel avec d'autres métaux, ou un alliage de nickel avec un métalloïde (par exemple NiP) sont particulièrement intéressants.

Un revêtement constitué par un matériau composite selon l'invention peut être déposé par voie électrolytique sur le substrat à traiter.

Le procédé de dépôt sur un substrat d'un revêtement constitué par le matériau composite selon l'invention consiste à effectuer un dépôt électrolytique en utilisant une solution de précurseurs de la matrice métallique du revêtement. Il est caractérisé en ce que la solution de précurseurs contient en outre des nanoparticules phyllosilicatées synthétiques.

Ainsi, l'invention s'étend à un procédé de dépôt sur un substrat d'un revêtement constitué par un matériau composite comprenant une matrice métallique au sein de laquelle sont réparties des particules minérales phyllosilicatées lamellaires, caractérisé en ce qu'il consiste à effectuer un dépôt électrolytique en utilisant une solution de précurseurs de la matrice métallique du revêtement qui contient en outre des nanoparticules, dites nanoparticules phyllosilicatées synthétiques, minérales silico/germano-métalliques lamellaires synthétiques hydrophiles présentant une dimension moyenne comprise entre 10 nm et 1 $\mu$m.

Dans un mode de réalisation, le procédé de dépôt est mis en oeuvre par voie chimique, par mise en contact de la surface du substrat à revêtir avec la solution contenant les précurseurs de la matrice métallique, les nanoparticules phyllosilicatées synthétiques, ainsi qu'un composé agissant comme catalyseur pour l'oxydoréduction des précurseurs de la matrice métallique du revêtement. Avantageusement et selon l'invention, ledit catalyseur est déposé préalablement sur le substrat.

Dans un autre mode de réalisation, le procédé de dépôt est mis en oeuvre par voie électrochimique dans une cellule électrochimique dans laquelle ledit substrat à revêtir constitue la cathode et l'électrolyte est une solution de précurseurs de la matrice métallique du revêtement contenant en outre les nanoparticules phyllosilicatées synthétiques. Avantageusement et selon l'invention, l'anode de la cellule électrochimique est constituée par le métal formant la matrice ou d'une anode insoluble.

Dans un procédé de dépôt selon l'invention, avantageusement, les précurseurs de la matrice métallique sont choisis parmi les composés ioniques, complexés ou non, réductibles en solution par voie chimique ou par apport d'électrons. A titre d'exemple, on peut citer les sels tels que les chlorures, les sulfates, les sulfamates, ainsi que les complexes tels que les citrates et les acétates.

La solution de précurseurs contient en outre un ou plusieurs composés permettant d'ajuster le pH à la valeur souhaitée, ainsi que les particules de talc modifié.

Lorsqu'un revêtement comprenant une matrice de nickel est déposé par voie électrochimique, l'électrolyte est une solution contenant au moins un sel de nickel choisi parmi le sulfate de nickel et le chlorure de nickel, un agent régulateur du pH et un électrolyte support. Un régulateur de pH particulièrement préféré est l'acide borique ; à pH 4,5, il forme un complexe avec le nickel en libérant un $H^+$ et il équilibre ainsi la réduction des ions $H^+$ à la cathode. Comme exemple d'électrolyte support, on peut citer par exemple le sulfate de sodium, le sulfate de magnésium et le bromure de sodium.

Lorsqu'un revêtement comprenant une matrice de nickel-phosphore est déposé par voie électrochimique, on peut utiliser un électrolyte contenant au moins un sel de nickel choisi parmi le sulfate et le chlorure de nickel, un agent régulateur de pH, un précurseur de phosphore et un électrolyte support. $H_3PO_3$ est avantageusement choisi précurseur de phosphore. Le régulateur de pH peut être choisi parmi $H_3PO_4$ et $H_3BO_3$, $H_3PO_4$ étant particulièrement préféré. Comme exemple d'électrolyte support, on peut citer par exemple le sulfate de sodium, le sulfate de magnésium et le bromure de sodium.

Lorsqu'un revêtement comprenant une matrice de zinc-nickel est déposé par voie électrochimique, on peut utiliser des électrolytes basiques ou acides contenant au moins un sel de nickel choisi parmi le sulfate et le chlorure de nickel, au moins un oxyde de zinc ou un sel de zinc tel que le chlorure de zinc, un complexant du type amine et un électrolyte support tel que par exemple KCl.

Le procédé est mis en oeuvre dans les conditions habituelles des dépôts électrochimiques. La durée de l'électrolyse dépend notamment de l'épaisseur souhaitée pour le revêtement. La température dans la cellule électrochimique est avantageusement comprise entre 0°C et 90°C et la densité de courant appliquée à la cellule est comprise entre 0,1 et 10 $A.dm^{-2}$. On utilise de préférence une cellule électrochimique dans laquelle l'anode est du type anode soluble, constituée par le métal à déposer.

Par ailleurs, avantageusement dans un procédé de dépôt selon l'invention, on utilise une proportion de nanoparticules phyllosilicatées synthétiques telle que la proportion volumique de ces nanoparticules phyllosilicatées synthétiques dans le revêtement obtenu est inférieure à 20 % (et bien sûr supérieure à 0 %).

Le substrat peut être constitué par un matériau intrinsèquement conducteur (par exemple un métal ou un alliage) utilisé à l'état massif ou sous forme de revêtement sur un support quelconque. Le substrat peut en outre être constitué par un matériau isolant ou semi-conducteur (par exemple un polymère ou une céramique) dont la surface à traiter a été rendue conductrice par une étape préliminaire de métallisation.

Les propriétés mécaniques des revêtements composites ont été testées avec un tribomètre du type pion-disque dans lequel le pion (qui constitue le corps antagoniste) est une bille d'acier 100C6 qui a une dureté de 1000 Hv. Lorsque l'on utilise un disque constitué uniquement de nickel, l'adhérence du nickel sur l'acier se manifeste par un coefficient de frottement élevé et un taux d'usure important de la bille d'acier. Lorsque le disque utilisé est constitué par un matériau composite comprenant une matrice de nickel et des nanoparticules phyllosilicatées synthétiques selon l'invention, le coefficient de frottement et le taux d'usure sont fortement diminués.

L'invention concerne également un matériau composite, un substrat, un revêtement lubrifiant et un procédé de dépôt caractérisés en combinaison par tout ou partie des caractéristiques mentionnées ci-dessus ou ci-après.

D'autres buts, avantages caractéristiques de l'invention apparaissent à la lecture de la description et des exemples qui suivent, donnés à titre non limitatif, et qui se réfèrent aux figures annexées dans lesquelles :

- la figure 1 est un schéma illustrant un revêtement formé d'un matériau composite conforme à l'état de la technique,
- la figure 2 montre trois spectres d'absorption enregistrés dans le moyen infrarouge, et qui correspondent à trois compositions de nanoparticules phyllosilicatées synthétiques différentes susceptibles d'être incorporées dans un matériau composite selon l'invention,
- la figure 3 correspond à un agrandissement des spectres précédents, au niveau de la zone comprise entre 3850 $cm^{-1}$ et 3500 $cm^{-1}$,
- la figure 4 montre la zone comprise entre 6000 $cm^{-1}$ à 8000 $cm^{-1}$ de trois spectres d'absorption enregistrés dans le proche infrarouge, correspondant aux trois compositions de la figure 1,
- les figures 5 et 6 montrent les diffractogrammes RX correspondant aux trois compositions de la figure 2, et à une quatrième composition particulière de nanoparticules phyllosilicatées synthétiques,
- les figures 7a, 7b, et 7c représentent des micrographies prise en microscopie électronique à balayage d'une composition de nanoparticules phyllosilicatées synthétiques susceptibles d'être incorporées dans un matériau composite conforme à l'invention,
- les figures 8 et 9 correspondent à des micrographies prises en microscopie électronique en transmission, illustrant la taille nanométrique et la distribution sensiblement unimodale et monodisperse, des nanoparticules phyllosilicatées synthétiques de trois compositions particulières,
- la figure 10 montre les diffractogrammes correspondant à l'analyse en diffraction des rayons X effectuée sur quatre

compositions de nanoparticules d'interstratifié T.O.T.-T.O.T. gonflant, préparées selon le troisième procédé de préparation avec des proportions eau/solide différentes, lors du traitement hydrothennal,

- les figures 11a à 11d correspondent à des analyses en diffraction des rayons X effectuées sur des lames orientées saturées en éthylène glycol et calcium, préparées avec les quatre compositions précédentes de nanoparticules d'interstratifié T.O.T.-T.O.T. gonflant,
- la figure 12 montre trois spectres d'absorption enregistrés dans le moyen infrarouge, et qui correspondent à trois compositions de nanoparticules d'interstratifié T.O.T.-T.O.T. gonflant particulières,
- les figures 13a et 13b correspondent à des agrandissements des spectres de la figure 1, réalisés au niveau de zones particulières,
- la figure 14 correspond à des spectres d'absorption enregistrés en proche infrarouge, illustrant la conversion par un traitement thermique anhydre d'une composition de nanoparticules d'interstratifié T.O.T.-T.O.T. gonflant selon l'invention en une composition de nanoparticules talqueuses synthétiques,
- la figure 15 montre trois diffractogrammes correspondant à l'analyse en diffraction des rayons X des compositions minérales objets des figures 12, 13a, 13b et 14, et en confirme les observations,
- les figures 16 et 17 sont des représentations schématiques qui illustrent respectivement l'organisation cristalline de nanoparticules talqueuses synthétiques obtenues après une conversion par un traitement thermique anhydre de nanoparticules d'interstratifié T.O.T.-T.O.T. gonflant obtenues selon le troisième procédé de préparation, et l'organisation cristalline de nanoparticules d'interstratifié T.O.T.-T.O.T. gonflant obtenues selon le troisième procédé de préparation,
- la figure 18 montre trois spectres d'absorption enregistrés dans le moyen infrarouge, et qui correspondent à trois compositions minérales de nanoparticules talqueuses synthétiques particulières,
- les figures 19a et 19b correspondent à des agrandissements des spectres de la figure 18, au niveau de zones particulières,
- la figure 20 montre trois spectres d'absorption enregistrés en proche infrarouge, correspondant à ces trois compositions minérales de nanoparticules talqueuses synthétiques,
- la figure 21 montre les diffractogrammes correspondant à l'analyse en diffraction des rayons X effectuée sur trois autres compositions minérales de nanoparticules talqueuses synthétiques particulières,
- la figure 22 montre les diffractogrammes comparatifs entre une composition de nanoparticules talqueuses synthétiques préparée selon le deuxième procédé de préparation, et un échantillon de talc naturel, également de taille nanométrique, mais obtenu par un broyage mécanique intensif,
- la figure 23 est un schéma illustrant un revêtement formé d'un matériau composite selon l'invention.

La figure 1 représente un revêtement formé d'un matériau composite conforme à WO 2004/063428 comprenant des particules 2 de talc naturel modifiées incorporé dans une matrice métallique formée de grains 3, cette matrice métallique étant déposée sur un substrat 4. Comme on le voit, les particules 2 taille de ces particules 2 est du même ordre de grandeur que la taille des grains métalliques 3. En conséquence, les particules 2 de talc naturel sont intercalées entre les grains, gênent la croissance des grains métalliques au cours du dépôt, et s'étendent en saillie à la surface libre du revêtement, entraînant une grande rugosité de ce dernier après l'étape de dépôt. En outre, l'incorporation de talc naturel induit celle d'impuretés.

EXEMPLE 1 : préparation de nanoparticules silico/germano-métalliques synthétiques (phyllosilicatées) selon le premier procédé de préparation

A/ - PROTOCOLE GÉNÉRAL D'UN PREMIER PROCÉDÉ DE PRÉPARATION D'UNE COMPOSITION DE NANOPARTICULES SILICO/GERMANO-MÉTALLIQUES SYNTHÉTIQUES :

1/ - Préparation d'un gel silico/germano-métallique

Un gel silico/germano-métallique est préparé par une coprécipitation selon l'équation de réaction suivante :

$$4\begin{pmatrix}(Na_2OSiO_2)_x\\(Na_2OGeO_2)_{1-x}\end{pmatrix}+2HCl+mH_2O+3\begin{pmatrix}y_{(1)}(MgCl_2)+y_{(2)}(CoCl_2)+y_{(3)}(ZnCl_2)\\+y_{(4)}(CuCl_2)+y_{(5)}(MnCl_2)+y_{(6)}(FeCl_2)\\+y_{(7)}(NiCl_2)+y_{(8)}(CrCl_2)\end{pmatrix}\rightleftharpoons[(Si_xGe_{1-x})_4M_3O_{11},n'H_2O]+8NaCl+(m-n'+1)H_2O$$

Cette réaction de coprécipitation permet d'obtenir un gel silico/germano-métallique hydraté ayant la stoechiométrie d'un talc naturel (4 Si/Ge pour 3 M). Elle est mise en oeuvre à partir de :

1. une solution aqueuse de métasilicate de sodium penta-hydraté ou une solution aqueuse de métagermanate de sodium, ou un mélange de ces deux solutions dans les proportions molaires $x$:(1-$x$),
2. une solution de chlorure de métal, préparée avec un ou plusieurs sels de métal (sous la forme de cristaux hygroscopiques) dilué(s) dans de l'eau distillée, et
3. une solution d'acide chlorhydrique 1N.

La préparation du gel silico/gennano-métallique est réalisée en suivant le protocole suivant :

1. on mélange les solutions d'acide chlorhydrique et la solution de chlorure de métal (ou de métaux),
2. on ajoute ce mélange à la solution de métasilicate et/ou de métagermanate de sodium ; le gel de coprécipitation se forme instantanément,
3. on récupère le gel après centrifugation (au minimum entre 3000 et 7000 tours par minute, pendant 15 minutes) et élimination du surnageant (solution de chlorure de sodium formée),
4. on lave le gel avec de l'eau distillée ou osmosée, ou avec de l'eau du robinet (au minimum deux cycles de lavage/centrifugation sont nécessaires).

A l'issue de cette première phase, on obtient un gel silico/gennano-métallique $(Si_xGe_{1-x})_4M_3O_{11}$, n'$H_2O$), fortement hydraté et de consistance gélatineuse. Ce gel présente un comportement thixotropique, c'est-à-dire qu'il passe d'un état visqueux à un état liquide lorsqu'on l'agite, puis retrouve son état initial après un certain temps de repos.

2/ - <u>Traitement hydrothermal du gel silico/germano-métallique</u>

Le gel silico/germano-métallique tel que précédemment obtenu est soumis à un traitement hydrothermal, à une température de 300°C à 500°C.

Pour ce faire :

1. on place le gel, sous forme liquéfiée, dans un réacteur/autoclave ; éventuellement on ajuste le rapport liquide/solide à une valeur de l'ordre de 0,83 (la quantité de liquide étant exprimée en $cm^3$, et la quantité de solide, en grammes),
2. le réacteur/autoclave est placé à l'intérieur d'une étuve, à la température de réaction (établie entre 300°C et 500°C), pendant toute la durée du traitement.

Les inventeurs ont pu constater que de la température du traitement hydrothermal dépendait la granulométrie des particules. Plus cette température est faible, plus les particules synthétisées sont petites (de l'ordre de 10 nanomètres à 300°C, jusqu'à 1 $\mu$m pour une température de l'ordre de 500°C).

Egalement, les inventeurs ont pu noter que de la durée du traitement dépendaient essentiellement la cristallinité et la stabilité thermique des particules synthétisées. Le traitement hydrothermal doit être de durée suffisante pour permettre une conversion de la masse gélatineuse initiale en un matériau solide cristallisé et thenniquement stable.

Au cours du traitement hydrothermal, le gel silico/germano-métallique perd progressivement sa consistance gélatineuse pour adopter une structure cristalline particulaire dont la cristallinité augmente avec le temps. Cette cristallisation progressive de la matière peut être constatée par une analyse en diffraction des rayons X, et se traduit sur les diffractogrammes correspondants par l'apparition de pics caractéristiques qui s'affinent et s'intensifient tout au long du traitement.

A l'issue de ce traitement hydrothermal, on obtient une composition synthétique colloïdale comprenant des

nanoparticules phyllosilicatées (silico/germano-métalliques) lamellaires synthétiques cristallines pures en suspension dans l'eau. Au terme de ce traitement hydrothermal, on peut utiliser la composition colloïdale obtenue directement ou, en variante, réaliser un traitement ultérieur, notamment :

3. le contenu du réacteur est filtré pour en récupérer la phase solide,
4. on sèche la composition solide à l'étuve à 60°C, pendant 1 jour,
5. une fois sèche, la composition solide est broyée avec un mortier en agate.

On obtient alors au final une composition solide divisée dont la couleur est fonction de la nature du ou des chlorure(s) de métal utilisé(s) pour la préparation du gel silico/germano-métallique (et également, le cas échéant, des proportions respectives de ces chlorures de métal).

B/ - ANALYSE ET CARACTERISATION STRUCTURELLES DE NANOPARTICULES OBTENUES :

Les résultats d'analyse de différentes compositions synthétiques obtenues en suivant le protocole précédemment exposé sont ci-après rapportés. Ces résultats confirment non seulement que le premier procédé de préparation permet effectivement d'aboutir à la formation de nanoparticules silico/germano-métalliques synthétiques lamellaires minérales (phyllosilicatées) ayant des caractéristiques structurelles (notamment lamellarité et cristallinité) très similaires à celles des talcs naturels. Ils montrent aussi que, notamment par le choix de la température et de la durée de mise en oeuvre, le premier procédé de préparation permet de façon extrêmement simple de synthétiser des nanoparticules minérales phyllosilicatées (silico/germano-métalliques) lamellaires synthétiques, stables et pures, ayant une taille et des caractéristiques cristallines définies et prévisibles, et qui donc en particulier peuvent être adaptées pour entrer dans la composition d'un matériau composite selon l'invention apte à former un revêtement lubrifiant.

Les analyses ont notamment été réalisées par spectroscopie infrarouge en transmission, par diffraction des rayons X et par observations en microscopie électronique. Les données recueillies sont présentées aux figures 2 à 8 annexées et sont ci-après commentées.

1/ - <u>Analyse en infrarouge</u>

En infrarouge, à titre de référence, il est connu que les bandes de vibration caractéristiques d'un talc naturel sont les suivantes (avec une résolution de 4 $cm^{-1}$) :

- 3678 $cm^{-1}$ : vibration de la liaison $Mg_3$-OH ;
- 1018 $cm^{-1}$ : vibration de la liaison Si-O-Si ;
- 669 $cm^{-1}$ : vibration de la liaison Mg-O-Si ;
- 7185 $cm$-$^{1}$ vibration de la liaison $Mg_3$-OH.

Les figures 2 à 4 présentent les résultats d'analyses réalisées respectivement en moyen infrarouge et en proche infrarouge, sur les trois compositions synthétiques suivantes :

- une composition de nanoparticules silico/germano-métalliques synthétiques de formule $Si_4Mg_3O_{10}(OH)_2$, préparée selon le premier procédé de préparation (avec pour cation octaédrique, $Mg^{2+}$), avec un traitement hydrothermal de 300°C pendant 3 jours (sur les figures, cette composition est référencée : PS Mg 300°C),
- une composition de nanoparticules silico/germano-métalliques synthétiques de formule $Si_4Ni_3O_{10}(OH)_2$, préparée selon le premier procédé de préparation (avec pour cation octaédrique, $Ni^{2+}$), avec un traitement hydrothermal de 300°C pendant 3 jours (sur les figures, cette composition est référencée : PS Ni 300°C),
- une composition de nanoparticules silico/germano-métalliques synthétiques de formule $Si_4(Co_{0,5}Ni_{0,5})_3O_{10}(OH)_2$, préparée selon le premier procédé de préparation (avec pour cations octaédriques, $Co^{2+}$ $Ni^{2+}$ dans des proportions équimolaires), avec un traitement hydrothermal de 300°C pendant 3 jours (sur les figures, cette composition est référencée : PS Co Ni 300°C).

L'acquisition des spectres infrarouge a été réalisée avec un spectromètre Nicolet 510-FTIR sur un domaine de 4000 à 400 $cm^{-1}$.

Le spectre obtenu dans le moyen infrarouge (figures 1 et 2) montre que la composition synthétique -PS Mg 300°C- est une composition minérale structurellement très similaire à un talc naturel. En particulier, ceci se traduit par la présence des pics représentatifs des vibrations des liaisons $Mg_3$-OH (3678 $cm^{-1}$), Si-O-Si (1018 $cm^{-1}$) et Mg-O-Si (669 $cm^{-1}$).

Les résultats obtenus des mesures effectuées en réflexion diffuse dans le proche infrarouge et dont la figure

4 en montre un agrandissement de la zone comprise entre 8000 $cm^{-1}$ et 6000 $cm^{-1}$, permettent également de constater la présence d'un pic particulièrement prononcé à 7185 $cm^{-1}$. Ce pic situé à 7185 $cm^{-1}$ fait également partie des quatre pics de référence des talcs naturels.

Le pic à 7265 $cm^{-1}$, situé à proximité de ce pic de référence, reflète une légère hydratation des nanoparticules silico/germano-métalliques synthétiques.

S'agissant des deux autres compositions synthétiques qui sont également données en exemple (PS Ni 300°C / PS Co Ni 300°C), leurs spectres d'absorption en infrarouge présentent de nombreuses similitudes avec celui de la composition synthétique PS Mg 300°C, à commencer par la présence de quatre pics qui chevauchent ou qui sont à proximité immédiate des quatre pics de référence d'un talc naturel.

Ces similitudes de spectres infrarouges traduisent une grande similitude structurelle existant entre les nanoparticules minérales phyllosilicatées (silico/germano-métalliques) lamellaires synthétiques des compositions synthétiques obtenues selon le premier procédé de préparation, avec un talc naturel. Les éventuels décalages qu'on peut observer pour certains pics (par exemple, au niveau de la zone comprise entre 7300 $cm^{-1}$ et 7000 $cm^{-1}$) résultent essentiellement de la différence de taille entre les cations octaédriques du réseau cristallin.

2/ - <u>Analyses en diffraction des rayons X</u>

En diffraction des rayons X, le talc naturel est connu pour présenter quatre pics de diffraction caractéristiques :

- pour le plan (001), un pic situé à une distance de 9,35 Å ;
- pour le plan (020), un pic situé à 4,55 Å ;
- pour le plan (003), un pic situé à 3,14 Å ;
- pour le plan (060), un pic situé à 1,52 Å.

Les diffractogrammes RX ont été enregistrés sur un appareil XPERT-MPD (PanAnalytical).

Le pas de mesure 2θ est de 0,01 ° avec un temps d'accumulation de 2 sec/pas. La tension d'accélération est de 40 kV, l'intensité de 55 mA. La relation de Bragg donnant l'équidistance structurale est : $d_{hkl}$=0,7703/sinθ.

La figure 5 présente les résultats d'analyses réalisées sur les trois mêmes compositions que précédemment citées :

- $Si_4Mg_3O_{10}(OH)_2$, référencée : PS Mg 300°C
- $Si_4Ni_3O_{10}(OH)_2$, référencée : PS Ni 300°C,
- $Si_4(Co_{0,5}Ni_{0,5})_3O_{10}(OH)_2$, référencée : PS Co Ni 300°C.

Egalement, la figure 6 présente un diffractogramme RX d'une composition de nanoparticules de formule $Ge_4Fe_3O_{10}(OH)_2$ préparées conformément au premier procédé de préparation.

Ces analyses confirment ce qui a été observé en spectroscopie infrarouge. Il existe une grande similitude structurelle entre les nanoparticules silico/germano-métalliques synthétiques lamellaires obtenues comme indiqué ci-dessus et des particules de talc naturel.

En particulier, les pics de diffraction qui correspondent aux plans (020), (003) et (060) ont des positions qui coïncident parfaitement avec celles des pics de diffraction de référence pour le talc naturel.

Seule la position des pics de diffraction du plan (001) diffère légèrement de la position du pic de référence (9,57-9,64 Å, au lieu de 9,35 Å). Cet écart de valeurs s'explique essentiellement :

- par une taille granulométrique nanométrique des nanoparticules silico/gennano-métalliques synthétiques lamellaires, contrairement à celle des talcs naturels,
- par une très légère hydratation résiduelle des nanoparticules silico/germano-métalliques synthétiques lamellaires et,
- éventuellement, par la nature des cations octaédriques du réseau cristallin.

Cependant, il faut noter que l'écart qui résulte de l'hydratation résiduelle diminue avec des temps de réaction plus longs et un séchage plus poussé.

Enfin, la largeur à mi-hauteur des pics des plans (001), (020), (003) et (060) témoigne de la bonne cristallinité des nanoparticules silico/germano-métalliques synthétiques lamellaires.

Par ailleurs, les nanoparticules silico/germano-métalliques synthétiques obtenues diffèrent d'un talc naturel par le fait qu'elles sont hydrophiles, ce qui est constaté visuellement par une simple mise en contact des nanoparticules avec l'eau.

A noter que, pour le diffractogramme RX représentatif de des nanoparticules $Ge_4Fe_3O_{10}(OH)_2$ (figure 6), la forte intensité du pic de diffraction correspondant au plan (003) est en partie due à une contamination par l'oxyde de

germanium.

3/ - Observations microscopiques et appréciation de la granulométrie des nanoparticules silico/gennano-métalliques synthétiques lamellaires :

Compte tenu de la grande finesse des poudres que peuvent constituer les compositions synthétiques ainsi obtenues, la taille et la distribution granulométrique des nanoparticules silico/germano-métalliques synthétiques lamellaires (phyllosilicatées) qui les composent ont été appréciées par observation en microscopie électronique à balayage et à effet de champ et en microscopie électronique en transmission. Les micrographies présentées en figures 7a, 7b, 7c, 8, et 9, ont été prises lors de certaines de ces observations.

Les figures 7a, 7b et 7c se rapportent à l'observation d'une composition de nanoparticules silico/germano-métalliques synthétiques (phyllosilicatées), qui peuvent être qualifiées de nanoparticules talqueuses synthétiques, préparées avec un traitement hydrothennal de 300°C, d'une durée de 3 jours, de formule $Si_4Mg_3O_{10}(OH)_2$.

La figure 8 se rapporte à l'observation d'une composition de nanoparticules silico-métalliques synthétiques préparées avec un traitement hydrothermal de 300°C, d'une durée de 3 jours, de formule $Si_4Ni_3O_{10}(OH)_2$.

On constate que les nanoparticules sont parfaitement lamellaires, pures, et que la granulométrie des nanoparticules élémentaires varie entre 20 nm et 100 nm.

Les clichés des figures 7a et 8, à cause de la densité des nanoparticules, donnent un aperçu trompeur d'une agglomération des nanoparticules les unes aux autres. En réalité, les nanoparticules élémentaires sont dans un état individualisé. Eventuellement, une certaine humidité résiduelle pourrait expliquer l'éventualité d'une certaine cohésion entre ces nanoparticules.

La figure 9 se rapporte à l'observation d'une composition de nanoparticules silico-métalliques synthétiques de formule $Si_4Mg_3O_{10}(OH)_2$, obtenues après un traitement hydrothermal de 400°C, d'une durée de 30 jours.

L'observation de la micrographie correspondante montre que les nanoparticules phyllosilicatées (silico/germano-métalliques) lamellaires synthétiques ont une dimension moyenne de l'ordre du micromètre.

EXEMPLE 2 : préparation de nanoparticules d'interstratifié T.O.T.-T.O.T. gonflant selon le troisième procédé de préparation puis de nanoparticules talqueuses synthétiques à partir de ces nanoparticules d'interstratifié T.O.T.-T.O.T. gonflant.

A/-PROTOCOLE GENERAL DE SYNTHESE D'UNE COMPOSITION D'INTERSTRATIFIE T.O.T.-T.O.T. GONFLANT SELON LE TROISIÈME PROCÉDÉ DE PRÉPARATION :

1/ - Préparation d'un gel silico/germano-métallique

Le gel silico/germano-métallique est préparé par coprécipitation comme mentionné ci-dessus dans l'exemple 1.

2/ - Traitement hydrothermal du gel silico/germano-métallique

Le gel silico/germano-métallique tel que précédemment obtenu est soumis à un traitement hydrothermal, à une température de 150°C à 300°C.

Pour ce faire :

1. on place le gel, sous forme liquéfiée, dans un réacteur (de 40 ml) ; éventuellement on ajuste le rapport eau/solide, notamment pour éviter la calcination de la fraction solide) ; afin d'éviter tout problème de fuite du réacteur, celui-ci est rempli au 2/3 de son volume,
2. le réacteur est placé à l'intérieur d'une étuve, à la température de réaction (établie entre 150°C et 300°C), pendant toute la durée du traitement.

Au cours du traitement hydrothermal, le gel silico/germano-métallique perd progressivement sa consistance initiale pour devenir une composition solide particulaire dont la cristallinité augmente avec le temps. Cette cristallisation progressive de la matière peut être constatée par une analyse en diffraction des rayons X et se traduit, sur les diffractogrammes correspondants, par l'apparition de pics caractéristiques qui s'affinent et s'intensifient tout au long du traitement.

A l'issue de ce traitement hydrothermal, on obtient une composition colloïdale comprenant des nanoparticules d'interstratifié T.O.T.-T.O.T. gonflant, en solution dans l'eau. Au terme de ce traitement hydrothennal, on peut utiliser la composition colloïdale obtenue directement, ou, en variante, réaliser le post-traitement suivant :

3. le contenu du réacteur est filtré pour en récupérer le filtrat solide,

4. on sèche le filtrat à l'étuve à 60°C, pendant 1 jour,
5. une fois sec, le filtrat est broyé au mortier en agate.

On obtient alors au final une composition solide divisée dont la couleur est fonction de la nature du ou des chlorure(s) de métal utilisé(s) pour la préparation du gel silico/germano-métallique (et également, le cas échéant, des proportions respectives de ces chlorures de métal).

Par exemple, les nanoparticules d'interstratifié T.O.T.-T.O.T. gonflant de type :

- $Si_4Mg_3O_{10}(OH)_2$ / $Si_4Mg_{3-\varepsilon}O_{10}(OH)_2$, $(Mg^{2+})_{\varepsilon}$'• $nH_2O$, sont de couleur blanche,
- $Si_4Ni_3O_{10}(OH)_2$ / $Si_4Ni_{3-\varepsilon}O_{10}(OH)_2$, $(Ni^{2+})_{\varepsilon}$'• $nH_2O$, sont de couleur verte,
- $Si_4Co_3O_{10}(OH)_2$ / $Si_4Co_{3-\varepsilon}O_{10}(OH)_2$, $(Co^{2+})_{\varepsilon}$' • $nH_2O$, sont de couleur rose,
- $Si_4Cu_3O_{10}(OH)_2$ / $Si_4Cu_{3-\varepsilon}O_{10}(OH)_2$, $(Cu^{2+})_{\varepsilon}$' • $nH_2O$, sont de couleur bleue,
- $Si_4Mn_3O_{10}(OH)_2$ / $Si_4$ $Mn_{3-\varepsilon}O_{10}(OH)_2$, $(Mn^{2+})_{\varepsilon}$' • $nH_2O$, sont de couleur chocolat,
- $Si_4Fe_3O_{10}(OH)_2$ / $Si_4$ $Fe_{3-\varepsilon}$ $O_{10}$ $(OH)_2$, $(Fe^{2+})\varepsilon$'• $nH_2O$, sont de couleur grise à rouille,
- $Si_4Zn_3O_{10}(OH)_2$ / $Si_4$ $Zn_{3-\varepsilon}O_{10}$ $(OH)_2$, $(Zn^{2+})\varepsilon$'• $nH_2O$, sont de couleur blanche.

B/ - ANALYSE ET CARACTERISATION STRUCTURELLES

Différentes compositions de nanoparticules d'interstratifié T.O.T.-T.O.T. gonflant obtenues en suivant le protocole précédemment exposé, ont été analysées notamment en diffraction des rayons X.

Les résultats recueillis sont ci-après présentés et commentés. Ils concernent quatre compositions particulières de nanoparticules d'interstratifié T.O.T.-T.O.T. gonflant. En l'occurrence, il s'agit de compositions de nanoparticules d'interstratifié T.O.T.-T.O.T. gonflant de type talc-stévensite préparées avec un traitement hydrothermal à 220°C, à 16 bars et pendant 21 jours.

Ces quatre compositions se distinguent les unes des autres par les proportions eau/solide qui ont été utilisées lors du traitement hydrothennal des gels silicométalliques - $Si_4$ $Mg_3O_{11}$, $n'H_2O$ -.

Ces compostions sont désignées R100, R50, R25 et R10 en référence à la proportion eau/solide utilisée (la quantité d'eau étant exprimée en litre et la quantité de solide, en kg).

En particulier, ces proportions ont été obtenues avec les mélanges suivants :

- composition R100 : 30 ml d'eau pour 300 mg de solide (fraction solide du gel),
- composition R50 : 20 ml d'eau pour 400 mg de solide,
- composition R25 : 20 ml d'eau pour 800 mg de solide,
- composition R10 : 10 ml d'eau pour 1000 mg de solide.

1/ - <u>Analyses en diffraction des rayons X</u>

La figure 1 présente les résultats d'analyses réalisées en diffraction des rayons X obtenus avec les quatre compositions précédentes.

Les diffractogrammes ont été enregistrés sur un appareil XPERT-MPD (PanAnalytical). Le pas de mesure 2θ est de 0,01° avec un temps d'accumulation de 2 sec/pas. La tension d'accélération est de 40 kV, et l'intensité de 55 mA. La relation de Bragg donnant l'équidistance structurale est : $d_{hkl}=0,7703/\sin\theta$.

Les diffractogrammes RX obtenus présentent, dans les plans (020), (003) et (060), des pics de diffraction dont les positions sont très proches des celles des pics de diffractions caractéristiques d'un talc naturel :

- pour le plan (020), un pic situé à une distance de 4,52-4,55 Å (4,55 Å, pour le talc naturel) ;
- pour le plan (003), un pic situé à 3,14-3,18 Å (3,12 Å, pour le talc naturel) ;
- pour le plan (060), un pic situé à 1,52-1,53 Å (1,53 Å, pour le talc naturel).

Quant au plan (001), la position des pics de diffraction correspondant est située à une distance variant entre 9,71 Å et 10,32 Å. Cette distance diffère notablement des 9,35 Å représentatif du plan (001) d'un talc naturel.

Ce décalage du pic correspondant au plan (001) ainsi que la présence d'un pic pointé à une distance de l'ordre de 14-15 Å, notamment à 14,6 Å, reflète une interstratification de la phase minérale talqueuse non gonflante, avec une autre phase minérale, la stévensite, qui forme la phase minérale gonflante.

Ceci est confirmé, d'une part, par la constatation que plus la quantité relative de stévensite est importante dans les particules minérales, plus le pic de diffraction du plan (001) se décale vers les petits angles de diffraction. D'autre part, une analyse en diffraction des rayons X a également été réalisée sur des lames orientées saturées en éthylène glycol et calcium, en vu de confirmer la présence d'une interstratification de type talc-stévensite.

Les lames orientées ont été préparées selon le protocole suivant :

1. on place dans un eppendorff de 1,25 ml, 15 mg d'échantillon auquel on ajoute une solution de $CaCl_2$ 1N ; le mélange est agité au vortex pendant une trentaine de secondes puis est laissé au repos pendant environ 1 heure,
2. le mélange est centrifugé à 7000 tours/min pendant 15 min, puis on élimine le surnageant,
3. le culot est remis en suspension dans une solution de $CaCl_2$ 1N ; le mélange est agité au vortex pendant une trentaine de secondes, puis est laissé reposer pendant environ 12 heures,
4. le mélange est centrifugé à 7000 tours/min pendant 15 minutes, puis on élimine le surnageant,
5. le culot est lavé à l'eau osmosée : après adjonction de l'eau osmosée, le mélange est agité au vortex et ultrasonné pendant 10 secondes, puis est laissé reposer pendant environ 1 heure avant d'être centrifugé à 7000 tours/min pendant 15 minutes pour en éliminer le surnageant ; ce lavage est répété 5 fois,
6. après le lavage, le culot, qui correspond à un produit saturé en calcium, est repris dans de l'eau osmosée, le mélange est agité au vortex pendant 30 secondes et ultrasonné pendant 10 secondes,
7. on prélève la solution ainsi préparée à l'aide d'une pipette et on la dépose sur une lame de verre,
8. une fois la lame séchée, on pulvérise de l'éthylène glycol sur celle-ci et on laisse agir pendant 5 minutes ; cette lame est maintenant saturée en calcium et en éthylène glycol et est prête pour les analyses.

Les figures 11a à 11d présentent les diffractogrammes RX obtenus. Le tableau 1 ci-après en résume les données.

Plus l'aire d'un pic de diffraction est importante, plus la phase minérale représentée par ce pic est en quantité importante dans l'échantillon.

Les pics 1, 2 et 3 repérés sur les figures 11a à 11d, correspondent respectivement à la composante stévensite, à la composante témoignant de l'interstratification, et à la composante talc. Ces trois composantes forment un interstratifié talc-stévensite.

| | | Position du pic, $d_{hkl}$ (Å) | Angle de diffraction (°2θ) | Intensité du pic (coups/s) | Aire du pic |
|---|---|---|---|---|---|
| R100 | Pic 1 | 12,12 | 7,290 | 622 | 1,459 |
| | Pic 2 | 10,47 | 8,440 | 1328 | 1,081 |
| | Pic 3 | 9,43 | 9,370 | 3599 | 1,055 |
| R50 | Pic 1 | 18,65 | 4,735 | 4284 | 1,487 |
| | Pic 2 | 9,70 | 9,114 | 3018 | 1,282 |
| | Pic 3 | 9,09 | 9,720 | 4533 | 0,887 |
| R25 | Pic 1 | 18,65 | 4,735 | 10778 | 1,761 |
| | Pic 2 | 9,82 | 8,999 | 2729 | 1,148 |
| | Pic 3 | 9,09 | 9,720 | 7227 | 0,943 |
| R10 | Pic 1 | 18,37 | 4,807 | 22327 | 1,860 |
| | Pic 2 | 9,41 | 9,390 | 6421 | 1,476 |
| | Pic 3 | 9,01 | 9,810 | 6662 | 0,836 |

Tableau 1

Egalement, en référence au diffractogramme RX présenté à la figure 10, une mesure de la largeur à mi-hauteur des pics correspondant aux plans (001), (020), (003) et (060), relatifs à la phase minérale non gonflante, permet d'apprécier l'effet du ratio eau/solide sur l'évolution de la cristallinité. Pour une température et une durée de traitement hydrothennal données, la cristallinité des nanoparticules d'interstratifié T.O.T.-T.O.T. gonflant augmente avec le ratio eau/solide.

C/ - PROTOCOLE GENERAL DE CONVERSION THERMIQUE DE COMPOSITIONS DE NANOPARTICULES D'INTERSTRATIFIÉ T.O.T.-T.O.T. GONFLANT DE TYPE TALC-STEVENSITE EN COMPOSITIONS DE NANOPARTICULES TALQUEUSES SYNTHÉTIQUES

Une composition de nanoparticules d'interstratifié T.O.T.-T.O.T. gonflant préparée selon le troisième procédé de préparation comme précédemment décrit, après séchage et broyage, est soumise à un traitement thermique anhydre. Pour ce faire, celle-ci est placée dans un creuset en platine puis est chauffée. On peut également utiliser un creuset en céramique ou en tout autre matériau approprié. La réaction est réalisée à basse pression, inférieure à 5 bars -notamment à la pression atmosphérique-.

1/ - Analyse et caractérisation

Les structures cristalline et lamellaire des nanoparticules d'interstratifié T.O.T.-T.O.T. gonflant et celles des nanoparticules talqueuses synthétiques obtenues ont été caractérisées par spectroscopie infrarouge et en diffraction

des rayons X. Certaines seulement des données recueillies sont présentées aux figures 12, 13a, 13b, 14 et 15, et commentées ci-après.

a) Analyse en infrarouge

La figure 12 présente les résultats d'analyses réalisées en moyen infrarouge en transmission sur :

- une composition de nanoparticules d'interstratifié T.O.T.-T.O.T. gonflant talc-stévensite (I.t.s.) préparée en suivant le protocole général de traitement hydrothermal du troisième procédé de préparation précédemment exposé, dans les conditions particulières suivantes : le traitement hydrothermal est réalisé à 220°C pendant 24 heures, avec un rapport eau distillée/gel de 0,83 (200 g de composition pulvérulente pour 166 $cm^3$ d'eau),
- une première composition de nanoparticules talqueuses synthétiques (Ts 300°C - 5h) obtenue à partir de la composition de nanoparticules d'interstratifié T.O.T.-T.O.T. gonflant talc-stévensite (I.t.s.) précédente et avec un traitement thermique anhydre de 300°C, pendant une durée de 5 heures,
- une seconde composition de nanoparticules talqueuses synthétiques (Ts 500°C - 5h) obtenue à partir de la composition de nanoparticules d'interstratifié T.O.T.-T.O.T. gonflant talc-stévensite (I.t.s.) précédente et avec un traitement thermique anhydre de 500°C, pendant une durée de 5 heures.

L'acquisition des spectres infrarouges a été réalisée avec un spectromètre NICOLET 510-FTIR sur un domaine de 4000 à 400 $cm^{-1}$.

Par ailleurs, les figures 13a et 13b montrent des agrandissements des zones où se trouvent localisées les bandes de vibration à 3678 $cm^{-1}$, à 1018 $cm^{-1}$ et à 669 $cm^{-1}$.

Des mesures ont également été effectuées en réflexion diffuse dans le proche infrarouge en vue de visualiser la vibration de la liaison $Mg_3$-OH pointée à 7185 $cm^{-1}$. La figure 14 montre un agrandissement de la zone comprise entre 6000 $cm^{-1}$ à 8000 $cm^{-1}$.

L'agrandissement de la zone comprise entre 6000 $cm^{-1}$ à 8000 $cm^{-1}$ (figure 12) fait apparaître un pic à 7265 $cm^{-1}$, à proximité du pic à 7185 $cm^{-1}$ de référence. La présence de cette liaison traduit une légère hydratation des nanoparticules obtenues. Des molécules d'eau sont encore intercalées entre les feuillets correspondant à la structure du talc.

Ces résultats montrent qu'un traitement thermique anhydre permet effectivement de convertir la composition de nanoparticules d'interstratifié T.O.T.-T.O.T. gonflant talc-stévensite en une composition de nanoparticules talqueuses synthétiques. Cette conversion se traduit notamment par la présence des quatre bandes de vibration caractéristiques du talc, dont la finesse reflète essentiellement la cristallinité du minéral. La finesse de ces quatre bandes, et donc la cristallinité du minéral, augmente progressivement au cours du traitement thermique anhydre, et avec la durée de ce traitement.

Néanmoins, avec un traitement thermique anhydre réalisé à une température de l'ordre de 300°C seulement, l'obtention d'un degré d'hydratation similaire à celui d'un talc naturel est longue.

Par contre avec un traitement thermique anhydre à une température de l'ordre de 500°C, la composition minérale traitée acquiert une cristallinité et un taux d'hydratation très comparables à ceux d'un talc naturel en un temps relativement court (dès 5 heures environ de traitement).

2/ - Analyses en diffraction des rayons X

La figure 15 présente les résultats d'analyses réalisées sur :

- la composition de nanoparticules d'interstratifié T.O.T.-T.O.T. gonflant talc-stévensite (I.t.s.) précédente,
- une première composition de nanoparticules talqueuses synthétiques (Ts 300°C) obtenue à partir de la composition de nanoparticules d'interstratifié T.O.T.-T.O.T. gonflant talc-stévensite précédente et avec un traitement thermique anhydre de 300°C, pendant une durée de 5 heures,
- une seconde composition de nanoparticules talqueuses synthétiques (Ts 550°C) obtenue à partir de la composition de nanoparticules d'interstratifié T.O.T.-T.O.T. gonflant talc-stévensite précédente et avec un traitement thermique anhydre de 550°C, pendant une durée de 5 heures.

Les diffractogrammes RX, présentés à la figure 15 ont été réalisés avec un appareil XPERT-MPD (PanAnalytical). Le pas de mesure 2θ est de 0,01° avec un temps d'accumulation de 2 s/pas. La tension d'accélération est de 40 kV, l'intensité de 55 mA. La relation de Bragg donnant l'équidistance structurale est : $d_{hkl}=0{,}7703/\sin\theta$.

Ces analyses confirment ce qui a été observé en spectroscopie infrarouge.

Les pics caractéristiques du talc s'intensifient avec un traitement thermique anhydre aussi bien à 550°C qu'à

300°C, et cette intensité augmente avec la durée du traitement.

Après 5 heures seulement d'un traitement thermique anhydre de 550°C, les pics de diffraction caractéristiques du talc s'affinent. En particulier, le pic de diffraction du plan (001) passe d'une position à 9,64 Å à 9,50 Å ; on se rapproche fortement de la valeur de 9,35 Å caractéristique d'un talc naturel. Cet écart de valeurs peut refléter une taille très petite des nanoparticules (taille nanométrique) et/ou une légère hydratation résiduelle des nanoparticules talqueuses synthétiques, qui augmente la distance inter-réticulaire d(001) du fait de la présence des molécules d'eau intercalées entre les feuillets correspondant à la structure du talc. Cependant, il faut noter que cette hydratation est de moins en moins prononcée avec une durée de traitement thermique anhydre plus longue.

Une mesure de la largeur à mi-hauteur des pics des plans (001), (020), (003) et (060) montre l'évolution de la cristallinité et confirme que, pour une température de traitement supérieure à 300°C, plus le temps de synthèse augmente, plus la cristallinité des nanoparticules talqueuses synthétiques s'améliore (la largeur à mi-hauteur diminue avec le temps de traitement).

Les diffractogrammes RX présentés à la figure 15 font aussi apparaître la présence des pics de diffraction caractéristiques du chlorure de sodium (NaCl). La présence de ces pics traduit un lavage et un rinçage insuffisants du gel silicométallique, préalables au traitement hydrothermal. En l'occurrence, les trois compositions analysées ont été préparées avec seulement un cycle de lavage du gel silicométallique.

D/ - STRUCTURE THEORIQUE DES NANOPARTICULES SYNTHÉTIQUES OBTENUES

Faisant référence aux figures 16 et 17 qui en présentent de façon schématique la structure cristalline, les nanoparticules talqueuses synthétiques et les nanoparticules d'interstratifié T.O.T.-T.O.T. gonflant de type talc-stévensite obtenues, présentent une organisation microscopique en feuillets élémentaires 1 superposés. Chaque feuillet 1 présente une structure cristalline composée d'une couche d'octaèdres 4 occupés par des cations métalliques divalents, en l'espèce, $Mg^{2+}$.

Chacune de ces couches octaédriques est intercalée entre deux couches de tétraèdres 3.

Par rapport aux nanoparticules talqueuses synthétiques, la structure cristalline des nanoparticules d'interstratifié T.O.T.-T.O.T. gonflant talc-stévensite est caractérisée par la présence de lacunes 5 en cations métalliques au niveau de certains sites octaédriques des feuillets élémentaires 1. Ces lacunes cationiques expliquent la faible cristallinité observée notamment sur les diffractogrammes RX.

Par rapport aux nanoparticules talqueuses synthétiques, la structure cristalline des nanoparticules d'interstratifié T.O.T.-T.O.T. gonflant talc-stévensite se caractérise également par un empilement irrégulier des feuillets élémentaires 1 et par la présence d'espaces interfoliaires 2 au niveau desquels s'infiltrent les molécules d'eau et des cations hydratés. Ces cations infiltrés dans les espaces interfoliaires 2 permettent de compenser la perte de charges due aux lacunes 5 en cations au niveau de la phase minérale. L'édifice cristallin reste ainsi dans un état relativement neutre.

Les cations interfoliaires sont faiblement liés au reste du réseau et sont de ce fait susceptibles d'être échangés par d'autres cations. Egalement, les espaces interfoliaires 2 sont plus ou moins expansibles. A l'intérieur de ces espaces interfoliaires, des substances diverses peuvent être introduites.

Les tests de traitement thermique anhydre des de nanoparticules d'interstratifié T.O.T.-T.O.T. gonflant synthétiques de type talc-stévensite ont conduit à une conversion de ce minéral synthétique en nanoparticules talqueuses synthétiques. En particulier, on observe un affinement progressif des pics de diffraction RX caractéristiques au niveau des plans (001), (020), (003) et (060) qui traduit une amélioration de la cristallinité des feuillets 1. Progressivement, les lacunes 5 sont comblées par les cations des espaces interfoliaires 2. Et, de manière concomitante, les espaces interfoliaires s'amincissent (passant de 12 Å à des valeurs de l'ordre de 9,4-9,6 Å) ; dans le plan (001), le pic de diffraction caractéristique se rapproche de la distance 9,35 Å.

EXEMPLE 3 : préparation de nanoparticules talqueuses synthétiques selon le deuxième procédé de préparation

A/ - PROTOCOLE DE SYNTHÈSE D'UNE COMPOSITION DE NANOPARTICULES TALQUEUSES SYNTHÉTIQUES

Les nanoparticules talqueuses synthétiques sont préparées selon le deuxième procédé de préparation qui consiste en un traitement thermique anhydre d'une composition de kérolites. Ce traitement thermique anhydre est réalisé à basse pression, inférieure à 5 bars (par exemple, à pression atmosphérique) et à une température supérieure à 300°C.

Ce traitement thermique anhydre permet la conversion d'une kérolite en nanoparticules talqueuses synthétiques parfaitement cristallisées et thermiquement stables. La granulométrie de ces nanoparticules talqueuses synthétiques peut être déterminée et ajustée en fonction des caractéristiques de la kérolite de départ, et du procédé de préparation de cette kérolite.

1/ - Préparation du gel silicométallique

Le gel silicométallique est préparé par une réaction de coprécipitation selon l'équation suivante :

$$4(Na_2OSiO_2, 5H_2O) + 3(MgCl_2, 6H_2O) + 2HCl \rightleftharpoons (Si_4Mg_3O_{11}, n'H_2O) + 8NaCl + (39\text{-}n')H_2O$$

Cette réaction de coprécipitation permet d'obtenir un gel silicométallique hydraté ayant la stoechiométrie du talc (4 Si pour 3 Mg). Elle est mise en oeuvre à partir de :

1. une solution aqueuse de métasilicate de sodium penta-hydraté, préparée en diluant 0,1 mole de métasilicate de sodium dans 250 $cm^{-3}$ d'eau distillée,
2. une solution de chlorure de magnésium, préparée en diluant 0,075 mole de chlorure de magnésium (sous la forme de cristaux hygroscopiques) dans 50 $cm^{-3}$ d'eau distillée, et
3. 50 $cm^{-3}$ d'acide chlorhydrique 1N.

La préparation du gel silicométallique est réalisée avec le protocole suivant :

1. on mélange les solutions d'acide chlorhydrique et de chlorure de magnésium,
2. on ajoute ce mélange à la solution de métasilicate de sodium ; le gel de coprécipitation se forme instantanément,
3. on récupère un gel après centrifugation (7000 tours par minute pendant 15 minutes) et élimination du surnageant (solution de chlorure de sodium formée),
4. on lave le gel à l'eau, par exemple avec de l'eau distillée, osmosée ou simplement avec de l'eau du robinet (au minimum deux cycles de lavage/centrifugation).

A l'issue de cette première phase, on obtient un gel silicométallique $Si_4Mg_3O_{11}$, n'$H_2O$, de couleur blanche et fortement hydraté. Sa consistance est gélatineuse.

2/ - Traitement du gel silicométallique pour obtenir une composition de kérolites

Avant de soumettre ce gel silicométallique à un traitement hydrothermal pour obtenir une composition de kérolites, celui-ci, de texture gélatineuse, est séché à l'étuve à 60°C, pendant deux jours. Ce temps de séchage, relativement long, s'explique par la forte hydratation du gel recueilli après centrifugation.
Les agrégats silicométalliques obtenus sont broyés avec un mortier en agate jusqu'à obtenir une poudre homogène.
Cette composition silicométallique pulvérulente est alors soumise à un traitement hydrothennal pour obtenir une composition de kérolites. Pour ce faire :

1. on place la composition silicométallique pulvérulente dans un réacteur (autoclave) avec de l'eau distillée dans un rapport liquide/solide de 0,83 (par exemple 200 g de composition pulvérulente pour 166 $cm^3$ d'eau),
2. on place le réacteur dans une étuve à une température de l'ordre de 220°C et pour une durée de traitement d'un jour, ou plus,
3. au terme de ce traitement hydrothennal, la substance solide du milieu réactionnel est filtrée puis séchée.

On obtient au final une composition solide divisée, de couleur blanche correspondant à une composition de kérolites synthétique.

3/ - Traitement thermique anhydre de la composition de kérolites

La composition de kérolites précédemment préparée est alors soumise à un traitement thermique anhydre. Pour ce faire, celle-ci est placée dans un creuset en platine puis est chauffée. On peut aussi utiliser un creuset en céramique, ou en tout autre matériau adapté à la température de traitement. Le chauffage de ladite composition est réalisé à pression atmosphérique.

B/ - ANALYSE ET CARACTÉRISATION STRUCTURELLES DES NANOPARTICULES OBTENUES

Les structures cristalline et lamellaire des nanoparticules de kérolites et des nanoparticules talqueuses synthétiques obtenues ont été caractérisées par spectroscopie infrarouge en transmission et réflexion diffuse, et en diffraction des rayons X. Les données recueillies sont présentées aux figures 18, 19a, 19b, 20, 21 et 22, et sont ci-après commentées.

1 / - Analyse en infrarouge

La figure 18 présente les résultats d'analyses réalisées en moyen infrarouge sur :

- une composition de kérolites (Ker.) préparée selon la méthode précédemment décrite,
- une première composition de nanoparticules talqueuses synthétiques (Ts 300°C - 5h) obtenue à partir de la composition de kérolites précédente et avec un traitement thermique anhydre de 300°C, pendant une durée de 5 heures,
- une seconde composition de nanoparticules talqueuses synthétiques (Ts 500°C - 5h) obtenue à partir de la composition de kérolites précédente et avec un traitement thermique anhydre de 500°C, pendant une durée de 5 heures.

L'acquisition des spectres infrarouges a été réalisée avec un spectromètre Nicolet 510-FTIR sur un domaine de 4000 à 400 $cm^{-1}$.

Par ailleurs, les figures 19a et 19b montrent des agrandissements des zones où se trouvent localisées les bandes de vibration à 3678 $cm^{-1}$, à 1018 $cm^{-1}$ et à 669 $cm^{-1}$.

Des mesures ont également été effectuées en réflexion diffuse dans le proche infrarouge en vue de visualiser la vibration de la liaison $Mg_3$-OH pointée à 7185 $cm^{-1}$. La figure 20 montre un agrandissement de la zone comprise entre 6000 $cm^{-1}$ à 8000 $cm^{-1}$.

Ces résultats montrent qu'un traitement thermique anhydre peut permettre la transformation d'une composition de kérolites synthétique en une composition de nanoparticules talqueuses synthétiques. Cette transformation se traduit notamment par l'apparition des quatre bandes de vibration caractéristiques de la structure du talc, dont la finesse reflète essentiellement la cristallinité du minéral.

Les inventeurs ont également fait le constat que la finesse de ces quatre bandes, et donc la cristallinité du minéral traité, augmente progressivement au cours du traitement thermique anhydre, et avec la durée de ce traitement.

Il convient néanmoins de noter que l'agrandissement de la zone comprise entre 6000 $cm^{-1}$ à 8000 $cm^{-1}$ (figure 20) fait apparaître un pic à 7265 $cm^{-1}$, à proximité du pic à 7185 $cm^{-1}$ de référence. La présence de cette liaison traduit une légère hydratation du produit obtenu. Des molécules d'eau sont intercalées entre les feuillets correspondant à la structure du talc.

Les analyses précédentes confirment qu'un traitement thermique anhydre, notamment à 300°C ou à 500°C, permet de transformer une composition de kérolites en une composition de nanoparticules talqueuses synthétiques. Néanmoins, avec un traitement thermique anhydre réalisé à une température de l'ordre de 300°C seulement, l'obtention d'un degré d'hydratation similaire à celui d'un talc naturel est longue.

Par contre avec un traitement thermique anhydre à une température de l'ordre de 500°C, la composition minérale traitée acquiert une cristallinité et un taux d'hydratation très comparables à celles d'un talc naturel en un temps relativement court (dès 5 heures environ de traitement).

2/ - Analyses en diffraction des rayons X

La figure 21 présente les résultats d'analyses réalisées sur :

- une composition de kérolites (Ker.) synthétiques préparée selon la méthode de coprécipitation précédemment décrite,
- une première composition de nanoparticules talqueuses synthétiques (Ts 300°C) obtenue à partir de la composition de kérolites précédente et avec un traitement thermique anhydre de 300°C, pendant une durée de 5 heures,
- une seconde composition de nanoparticules talqueuses synthétiques (Ts 550°C) obtenue à partir de la composition de kérolites précédente et avec un traitement thermique anhydre de 550°C, pendant une durée de 5 heures.

Les diffractogrammes, présentés à la figure 21, ont été réalisés sur un appareil XPERT - MPD PanAnalytical.

Le pas de mesure 2θ est de 0,01 ° avec un temps d'accumulation de 2 s/pas. La tension d'accélération est de 40 kV, l'intensité de 55 mA. La relation de Bragg donnant l'équidistance structurale est de $d_{hkl}$=0,7703/sinθ.

Ces analyses confirment ce qui a été observé en spectroscopie infrarouge.

Les pics caractéristiques de la structure du talc s'intensifient avec un traitement thermique anhydre aussi bien à 550°C qu'à 300°C, et cette intensité augmente avec la durée du traitement.

Après 5 heures seulement d'un traitement thermique anhydre de 550°C, les pics de diffraction caractéristiques de la structure du talc s'affinent. En particulier, le pic de diffraction correspondant au plan (001) passe d'une position à 9,64 Å à 9,50 Å ; on se rapproche fortement de la valeur de 9,35 Å caractéristique d'un talc naturel. Cet écart de valeurs reflète une très légère hydratation résiduelle des nanoparticules talqueuses synthétiques et/ou une taille très petite des nanoparticules (taille nanométrique). Cependant, il faut noter que l'hydratation est de moins en moins prononcée lorsque la durée du traitement thermique anhydre augmente.

Une mesure de la largeur à mi-hauteur des pics des plans (001), (020), (003) et (060) montre l'évolution de la cristallinité et confirme que, pour une température de traitement supérieure à 300°C, plus le temps de synthèse augmente, plus la cristallinité des nanoparticules s'améliore (la largeur à mi-hauteur diminue avec le temps de traitement).

Les diffractogrammes présentés à la figure 21 font aussi apparaître la présence des pics de diffraction caractéristiques du chlorure de sodium (NaCl). La présence de ces pics traduit un lavage et un rinçage insuffisants du gel silicométallique, préalables au traitement hydrothermal. En l'occurrence, les trois compositions analysées ont été préparées avec seulement un cycle de lavage du gel silicométallique.

La figure 22 présente, pour comparaison, un diffractogramme RX d'un échantillon de nanoparticules talqueuses synthétiques (Talc synth.), de taille nanométrique, comprise entre 20 et 100 nm, et d'un échantillon de talc naturel (Talc nat.) conforme à l'état de la technique broyé mécaniquement jusqu'à obtenir des particules ayant une granulométrie de l'ordre de 70-120 nm.

Une première différence entre le talc naturel et les nanoparticules talqueuses synthétiques apparaît dans la position des pics de diffraction correspondant aux plans (001) et (003) :

- pour le plan (001) : 9,43 Å pour les nanoparticules talqueuses synthétiques, au lieu de 9,36 Å pour le talc naturel ;
- pour le plan (003) : 3,16 Å pour les nanoparticules talqueuses synthétiques, au lieu de 3,12 Å pour le talc naturel.

Le talc naturel (Talc nat.) nanométrique se différencie aussi des nanoparticules talqueuses synthétiques (Talc synth.) par une intensité de ces pics de diffraction beaucoup plus faible.

De plus, par rapport aux nanoparticules talqueuses synthétiques, de taille nanométrique, le talc nanométrique naturel présente des pics de diffraction avec des largeurs à mi-hauteur plus grandes (pour une même préparation et un temps de comptage identique). Ces données traduisent une meilleure cristallinité pour les nanoparticules talqueuses synthétiques. Le broyage intensif d'un talc naturel pour obtenir un talc de taille nanométrique entraîne une amorphisation considérable du produit.

C/ - STRUCTURE THÉORIQUE DES PARTICULES DE KÉROLITES SYNTHÉTIQUES OBTENUES SELON L'INVENTION

Les nanoparticules talqueuses synthétiques et les nanoparticules de kérolite synthétiques ont une organisation microscopique en feuillets élémentaires superposés, similaire à celle représentée figures 16 et 17, dont le nombre varie de quelques unités à quelques dizaines d'unités.

Aussi bien pour les nanoparticules talqueuses synthétiques que pour les nanoparticules de kérolite synthétiques, la structure cristalline des feuillets élémentaires, est constituée par l'association de deux couches tétraédriques situées de part et d'autre d'une couche octaédrique.

La couche octaédrique est formée de deux plans d'ions $O^{2-}$ et $OH^-$ (dans la proportion molaire $O^{2-}/OH^-$ de 2: 1). De part et d'autre de cette couche médiane viennent s'agencer des réseaux tridimensionnels de tétraèdres dont un des sommets est occupé par un oxygène commun à la couche tétraédrique et à la couche octaédrique, tandis que les trois autres le sont par des oxygènes sensiblement coplanaires appartenant à une couche tétraédrique.

Les cavités tétraédriques sont occupées par des ions $Si^{4+}$ et les cavités octaédriques le sont par les cations $Mg^{2+}$.

A la différence des nanoparticules talqueuses synthétiques, le réseau cristallin des nanoparticules de kérolite synthétiques présente des lacunes ; une petite proportion des sites octaédriques n'est pas occupée. Il en résulte un déficit cationique. Ce déficit cationique est en grande partie comblé par la présence de cations, dits cations compensateurs, qui occupent les espaces interfoliaires. Ces espaces interfoliaires, fortement hydratés, constituent également une caractéristique distinctive de la structure cristalline des kérolites par rapport à celle des talcs purs.

Ces lacunes expliquent la faible cristallinité observée notamment sur les diffractogrammes RX.

Les tests de traitement thermique anhydre des compositions de kérolites synthétiques ont montré une conversion de ces compositions en des compositions de nanoparticules talqueuses synthétiques. En particulier, on observe un affinement progressif des pics de diffraction caractéristiques au niveau des plans (001), (020), (003) et (060), qui traduit une amélioration de la cristallinité des feuillets. Progressivement, les lacunes sont comblées par les cations des espaces interfoliaires. Et, de manière concomitante, les espaces interfoliaires s'amincissent (passant de 12 Å à des valeurs de l'ordre de 9,4-9,6 Å) ; dans le plan (001), le pic de diffraction caractéristique se rapproche de la distance 9,35 Å, caractéristique d'un talc naturel.

EXEMPLE 4 : Revêtement composite à base de nickel

Les nanoparticules synthétiques obtenues aux exemples 1 à 3 sont des nanoparticules phyllosilicatées synthétiques lamellaires hydrophiles qui peuvent être utilisés pour réaliser un revêtement composite lubrifiant par dépôt électrolytique comprenant une matrice métallique dans laquelle ces nanoparticules sont dispersées.
Dans l'exemple 4, le revêtement a été préparé dans une cellule électrochimique constituée par une anode de nickel de 4 $cm^2$ et une cathode de cuivre de 1,762 $cm^2$ sur laquelle le dépôt est effectué.
La cellule électrochimique contient un électrolyte ayant un pH de 4,5 et la composition suivante :

- $NiSO_4$, $6H_2O$ : 280 $g.l^{-1}$
- $NiCl_2$, $6H_2O$ : 30 $g.l^{-1}$
- $H_3BO_3$ : 45 $g.l^{-1}$
- $Na_2SO_4$ : 50 $g.l^{-1}$
- 50 $g.l^{-1}$ de nanoparticules talqueuses synthétiques de dimension moyenne de l'ordre de 100 nm préparées comme décrit à l'exemple 3 selon le deuxième procédé de préparation avec un traitement hydrothermal à 350°C et un traitement thermique ultérieur à 550°C .

Le dépôt est effectué en maintenant l'électrolyte à une température de 55°C sous une densité de courant de 2,5 $A.dm^2$, pendant une durée de 1h30.
La structure du revêtement obtenu est représentée schématiquement figure 23. Comme on le constate, le matériau composite formant le revêtement comprend des grains métalliques 5 dans lesquelles sont incorporés des nanoparticules talqueuses synthétiques 6. Ces nanoparticules de taille bien inférieure à la dimension moyenne des grains métalliques, ne modifient pas l'état de surface du revêtement et ne gênent en aucune manière la réalisation du dépôt métallique.
Il est à noter que dans un procédé de préparation d'un revêtement conforme à l'état de la technique avec du talc naturel selon WO 2004/063428, on constate l'apparition d'une mousse volumineuse stable par accumulation d'hydrogène sur les faces hydrophobes des particules de talc. Au contraire, dans un procédé de préparation du revêtement selon l'invention, aucune apparition de mousse n'est constatée.

EXEMPLE 5 : Revêtement composite à base de NiP

Dans une cellule électrochimique analogue à celle utilisée dans l'exemple 4, on a introduit un électrolyte dont le pH = 2 qui a la composition suivante :

- $NiSO_4$, $6H_2O$ 210 $g.l^{-1}$
- $NiCl_2$, $6H_2O$ 60 $g.l^{-1}$
- $H_3PO_4$ 45 $g.l^{-1}$
- $H_3PO_3$ 0-15 $g.l^{-1}$
- $Na_2SO_4$ 50 $g.l^{-1}$
- 50 $g.l^{-1}$ de nanoparticules talqueuses synthétiques de dimension moyenne de l'ordre de 100 nm préparées comme décrit à l'exemple 3 selon le deuxième procédé de préparation avec un traitement hydrothermal à 350°C et un traitement thermique ultérieur à 550°C.

Le dépôt est effectué en maintenant l'électrolyte à une température de 80°C, pendant une durée de 45 min.
Plusieurs échantillons ont ainsi été préparés en faisant varier la densité de courant. Le tableau ci-dessous indique la vitesse de dépôt constatée (directement liée à l'épaisseur du dépôt obtenu) en fonction de la densité de courant appliquée.

| I ($A.dm^{-2}$) | Vitesse de dépôt ($\mu m.h^{-1}$) |
|---|---|
| 10 | 77,3 |
| 5 | 40 |
| 3 | 23 |
| 2 | 15 |
| 1 | 8 |

(suite)

| I ($A.dm^{-2}$) | Vitesse de dépôt ($\mu m.h^{-1}$) |
|---|---|
| 0,5 | 4 |

EXEMPLE 6: Revêtement composite à base de ZnNi/nanoparticules talqueuses synthétiques

Dans une cellule électrochimique analogue à celle utilisée dans l'exemple 4, on a introduit un électrolyte dont le pH = 2 qui a la composition suivante :

- $ZnCl_2$ 93,7 $g.l^{-1}$
- NiCl2, $6H_2O$ 9,3 $g.l^{-1}$
- KCl 200 $g.l^{-1}$
- 50 $g.l^{-1}$ de nanoparticules talqueuses synthétiques de dimension moyenne de l'ordre de 100 nm préparées comme décrit à l'exemple 3 selon le deuxième procédé de préparation avec un traitement hydrothermal à 350°C et un traitement thermique ultérieur à 550°C.

Le dépôt est effectué en maintenant l'électrolyte à une température de 55°C sous une densité de courant de 5 $A.dm^{-2}$, pendant une durée de 12 minutes.

Au lieu du dépôt électrochimique de l'exemple 4, on peut réaliser un revêtement composite selon l'invention par un dépôt électrolytique de type chimique.

EXEMPLE 7 : Revêtement composite par voie chimique NiP/ nanoparticules talqueuses synthétiques (« electroless »).

Le revêtement est préparé dans une cellule contenant un substrat d'acier de 1,8 $cm^2$ recouvert préalablement d'une couche de Nickel de 1 micron. La cellule contient un électrolyte ayant un pH de 4,5 et la composition suivante :

- $NiSO_4$, $6H_2O$ 280 $g.l^{-1}$
- $NiCl_2$, $6H_2O$ 30 $g.l^{-1}$
- $NaH_2PO_2$ 1 à 30 $g.l^{-1}$
- 50 $g.l^{-1}$ de nanoparticules talqueuses synthétiques de dimension moyenne de l'ordre de 100 nm préparées comme décrit à l'exemple 3 selon le deuxième procédé de préparation avec un traitement hydrothennal à 350°C et un traitement thermique ultérieur à 550°C.

EXEMPLE 8 : Revêtements composites à base de Ni-Co :

Dans cet exemple, les revêtements ont été préparés dans une cellule électrochimique analogue à celle utilisée dans l'exemple 4, avec un électrolyte ayant la composition suivante :

- $Co(CH_3CO_2)$, n $H_2O$ 10 $g.l^{-1}$
- $Ni(CH_3CO_2)$, n $H_2O$ 100 $g.l^{-1}$
- $NiCl_2$ 40 $g.l^{-1}$
- $H_3BO_3$ 40 $g.l^{-1}$

Des revêtements composites à matrice nickel-cobalt ont été élaborés à partir de nanoparticules talqueuses synthétiques préparées selon le premier procédé de préparation comme décrit à l'exemple 1.

Deux voies ont été étudiées : d'une part des nanoparticules talqueuses synthétiques séchées à la sortie du réacteur hydrothennal puis broyées et mises en suspension dans l'électrolyte, d'autre part des nanoparticules talqueuses synthétiques directement sorties du réacteur, dispersées dans l'eau de synthèse (sans séchage ni broyage). Cette dernière voie permet d'une part de supprimer deux étapes du procédé et d'éviter de manipuler des poudres nanométriques. De plus, leur stabilité en suspension (vitesse de sédimentation faible) est de loin supérieure à celle des poudres séchées. L'état de dispersion de ces poudres à la sortie du réacteur hydrothermal est donc beaucoup plus satisfaisant que dans le cas des poudres de nanoparticules talqueuses synthétiques séchées broyées.

Avec ou sans séchage, les conditions du traitement hydrothermal ont été les suivantes : 300 °C, $90.10^5$ Pa, avec une durée de 6 heures ou de 15 jours.

Il a été montré que la présence de nanoparticules dispersées dans l'électrolyte engendre un affinement et une modification de la microstructure des dépôts électrochimiques. Les dépôts réalisés à partir de suspensions comportant des nanoparticules talqueuses synthétiques directement sorties du réacteur sans étape de séchage puis dispersées

dans l'électrolyte permettent d'obtenir un revêtement plus lisse et des propriétés tribologiques intéressantes, incorporant des nanoparticules talqueuses synthétiques dispersées entre les granules, bien visibles au microscope TEM (x40000), et ce pour des concentrations en particules 2,5 fois moins importantes que dans le cas des poudres nanoparticules talqueuses synthétiques séchées broyées.

## Revendications

**1.** Matériau composite comprenant une matrice métallique au sein de laquelle sont réparties des particules minérales phyllosilicatées lamellaires, **caractérisé en ce que** les particules minérales phyllosilicatées lamellaires sont des particules, dites nanoparticules phyllosilicatées synthétiques, minérales silico/germano-métalliques lamellaires synthétiques hydrophiles présentant une dimension moyenne comprise entre 10 nm et 1 μm.

**2.** Matériau composite selon la revendication 1, **caractérisé en ce que** les nanoparticules phyllosilicatées synthétiques sont choisies dans le groupe formé de :

1) des nanoparticules, dites nanoparticules silico/germano-métalliques synthétiques, de formule - $(Si_xGe_{1-x})_4$ $M_3O_{10}(OH)_2$ - dans laquelle :

- M désignant au moins un métal divalent et ayant pour formule $Mg_{y(1)}$ $Co_{y(2)}$ $Zn_{y(3)}$ $Cu_{y(4)}$ $Mn_{y(5)}$ $Fe_{y(6)}$ $Ni_{y(7)}$ $Cr_{y(8)}$ ; chaque *y(i)* étant un nombre réel de l'intervalle [0 ; 1], tel que $\sum_{i=1}^{8} y(i) = 1$,

- *x* étant un nombre réel de l'intervalle [0 ; 1],

- une analyse en diffraction des rayons X desdites nanoparticules minérales silico/germano-métalliques synthétiques conduisant à l'obtention d'un diffractogramme présentant des pics de diffraction caractéristiques suivants :
- un pic situé à une distance de l'ordre de 9,40-9,68 Å, pour un plan (001);

- un pic situé à 4,50-4,75 Å, pour un plan (020) ;
- un pic situé à 3,10-3,20 Å, pour un plan (003) ;
- un pic situé à 1,50-1,55 Å, pour un plan (060),

2) des nanoparticules minérales phyllosilicatées lamellaires synthétiques, dites nanoparticules d'interstratifié T.O.T.-T.O.T. gonflant, formées d'une interstratification entre :

- au moins une phase minérale non gonflante, formé d'un empilement de feuillets élémentaires de type phyllogermanosilicate 2/1 et de formule chimique - $(Si_xGe_{1-x})_4$ $M_3O_{10}(OH)_2$ -, et
- au moins une phase minérale gonflante, formée d'un empilement de feuillets élémentaires de type phyllogermanosilicate 2/1 et d'au moins un espace interfoliaire entre deux feuillets élémentaires consécutifs ; ladite phase minérale gonflante ayant pour formule chimique -$(Si_xGe_{1-x})_4M_{3-\varepsilon}O_{10}(OH)_2$, $(M^{2+})_{\varepsilon'}$ • $nH_2O$-, dans lesdites formules chimiques :
- M désignant au moins un métal divalent et ayant pour formule $Mg_{y(1)}Co_{y(2}$ $Zn_{y(3)}Cu_{y(4)}Mn_{y(5)}Fe_{y(6)}Ni_{y(7)}Cr_{y(8)}$ ; chaque *y(i)* représentant un nombre réel de l'intervalle [0 ; 1], et tel que $\sum_{i=1}^{8} y(i) = 1$,
- *x* étant un nombre réel de l'intervalle [0 ; 1],
- ε et ε' se rapportant respectivement au déficit cationique des feuillets élémentaires de la phase gonflante, et aux cations présents dans l'(les) espace(s) interfoliaire(s),
- une analyse en diffraction des rayons X desdites nanoparticules d'interstratifié T.O.T.-T.O.T. gonflant conduisant à l'obtention d'un diffractogramme présentant des pics de diffraction caractéristiques suivants :
- un plan (001) situé à une distance de l'ordre de 14-15 Å, représentatif de ladite phase minérale gonflante,
- des plans représentatifs de ladite phase minérale non gonflante :
- un plan (001) situé à une distance de l'ordre de 9,60-10,50 Å ;

- un plan (020) situé à 4,50-4,60 Å ;
- un plan (003) situé à 3,10-3,20 Å ;
- un plan (060) situé à 1,50-1,55 Å.

**3.** Matériau composite selon la revendication 2, **caractérisé en ce que** lesdites nanoparticules silico/germano-métalliques synthétiques présentent un pic de diffraction correspondant au plan (001) est situé à une distance de l'ordre de 9,55-9,65 Å.

**4.** Matériau composite selon l'une des revendications 1 à 3, **caractérisé en ce que** les nanoparticules silico/germano-métalliques synthétiques sont choisies dans le groupe formé des nanoparticules de formule $Si_4Mg_3O_{10}(OH)_2$ et **caractérisées par** analyse en diffraction des rayons X desdites nanoparticules silico/germano-métalliques synthétiques conduisant à l'obtention d'un diffractogramme présentant des pics de diffraction caractéristiques suivants :

- un pic situé à 9,40-9,68 Å, correspondant à un plan (001) ;
- un pic situé à 4,50-4,60 Å, correspondant à un plan (020) ;
- un pic situé à 3,10-3,20 Å, correspondant à un plan (003) ;
- un pic situé à 1,50-1,55 Å, correspondant à un plan (060).

**5.** Matériau composite selon l'une des revendications 1 à 4, **caractérisé en ce que** les nanoparticules phyllosilicatées synthétiques ont une granulométrie de répartition unimodale et monodisperse.

**6.** Matériau composite selon l'une des revendications 1 à 5, **caractérisé en ce que** les nanoparticules phyllosilicatées synthétiques ont une dimension moyenne inférieure à 500 nm -notamment compris entre 20 nm et 100 nm-.

**7.** Matériau selon l'une des revendications 1 à 6, **caractérisé en ce que** les nanoparticules phyllosilicatées synthétiques sont réparties individualisées et dispersées au sein de la matrice métallique.

**8.** Matériau selon l'une des revendications 1 à 7, **caractérisé en ce que** la matrice métallique est constituée par un métal choisi parmi Fe, Co, Ni, Mn, Cr, Cu, W, Mo, Zn, Au, Ag, Pt, Sn, par un composé intermétallique ou un alliage de plusieurs métaux choisis parmi les métaux précités, ou par un alliage d'un ou plusieurs desdits métaux avec un métalloïde.

**9.** Matériau composite selon l'une des revendications 1 à 8, **caractérisé en ce qu'**il comprend une proportion volumique de nanoparticules phyllosilicatées synthétiques inférieure à 20 %.

**10.** Substrat portant un revêtement lubrifiant, **caractérisé en ce que** ledit revêtement est constitué par un matériau composite selon l'une des revendications 1 à 9.

**11.** Substrat selon la revendication 10, **caractérisé en ce qu'**il est constitué par un matériau intrinsèquement conducteur.

**12.** Procédé de dépôt sur un substrat d'un revêtement constitué par un matériau composite comprenant une matrice métallique au sein de laquelle sont réparties des particules minérales phyllosilicatées lamellaires, **caractérisé en ce qu'**il consiste à effectuer un dépôt électrolytique en utilisant une solution de précurseurs de la matrice métallique du revêtement qui contient en outre des nanoparticules, dites nanoparticules phyllosilicatées synthétiques, minérales silico/germano-métalliques lamellaires synthétiques hydrophiles présentant une dimension moyenne comprise entre 10 nm et 1 μm.

**13.** Procédé selon la revendication 12, **caractérisé en ce qu'**il est mis en oeuvre par voie chimique, par mise en contact de la surface du substrat à revêtir avec la solution contenant les précurseurs de la matrice métallique, les nanoparticules phyllosilicatées synthétiques, ainsi qu'un composé agissant comme catalyseur pour l'oxydoréduction des précurseurs de la matrice métallique du revêtement.

**14.** Procédé selon la revendication 12, **caractérisé en ce qu'**il est mis en oeuvre par voie électrochimique dans une cellule électrochimique dans laquelle ledit substrat à revêtir constitue la cathode et l'électrolyte est une solution de précurseurs de la matrice métallique du revêtement contenant en outre les nanoparticules phyllosilicatées synthétiques.

**15.** Procédé selon la revendication 12, **caractérisé en ce que** les précurseurs de la matrice métallique sont choisis

parmi les composés ioniques, complexés ou non, réductibles en solution par voie chimique ou par apport d'électrons.

## Claims

1. Composite material comprising a metallic matrix within which lamellar phyllosilicated mineral particles are distributed, **characterised in that** the lamellar phyllosilicated mineral particles are hydrophilic synthetic lamellar silico/germano-metallic mineral particles, called synthetic phyllosilicated nanoparticles, having an average size between 10 nm and 1 $\mu$m.

2. Composite material according to Claim 1, **characterised in that** the synthetic phyllosilicated nanoparticles are selected from the group made up of:

1) nanoparticles, called synthetic silico/germano-metallic nanoparticles, of the formula $-(Si_xGe_{1-x})_4M_3O_{10}(OH)_2$-in which:

- M designates at least one divalent metal and has the formula $Mg_{y(1)}CO_{y(2)}Zn_{y(3)}Cu_{y(4)}Mn_{y(5)}Fe_{y(6)}Ni_{y(7)}Cr_{y(8)}$; each *y(i)* being a real number from the interval [0,1] such that $\sum_{i=1}^{8} y(i) = 1$,
- x is a real number from the interval [0,1],
- X-ray diffraction analysis of said synthetic silico/germano-metallic mineral nanoparticles yielding a diffractogram exhibiting the following characteristic diffraction peaks:
- a peak located at a distance of the order of 9.40-9.68 Å, for a plane (001);
- a peak located at 4.50-4.75 Å, for a plane (020);
- a peak located at 3.10-3.20 Å, for a plane (003);
- a peak located at 1.50-1.55 Å, for a plane (060),

2) synthetic lamellar phyllosilicated mineral nanoparticles, called swelling-TOT-TOT-interlaminate nanoparticles, formed by an interlamination between:

- at least one non-swelling mineral phase formed from a stack of elementary laminae of 2:1 phyllogermanosilicate type and of the chemical formula $-(Si_xGe_{1-x})_4M_3O_{10}(OH)_2$-, and
- at least one swelling mineral phase formed from a stack of elementary laminae of 2:1 phyllogermanosilicate type and from at least one interfoliar space between two consecutive elementary laminae; said swelling mineral phase having the chemical formula

$$Si_xGe_{1-x})_4M_{3-\varepsilon}O_{10}(OH)_2, (M^{2+})_{\varepsilon}, \bullet nH_2O-,$$

in said chemical formulae:
- M designates at least one divalent metal and has the formula $Mg_{y(1)}CO_{y(2)}Zn_{y(3)}Cu_{y(5)}Mn_{y(5)}Fe_{y(6)}Ni_{y(7)}Cr_{y(8)}$; each *y(i*) representing a real number from the interval [0,1] and such that $\sum_{i=1}^{8} y(i) = 1$,
- x is a real number from the interval [0,1],
- ε and ε' relate respectively to the cation deficit of the elementary laminae of the swelling phase and to the cations present in the interfoliar space(s),
- X-ray diffraction analysis of said swelling-TOT-TOT-interlaminate nanoparticles yielding a diffractogram exhibiting the following characteristic diffraction peaks:
- a plane (001) located at a distance of the order of 14-15 Å, representative of said swelling mineral phase,
- planes representative of said non-swelling mineral phase:
- a plane (001) located at a distance of the order of 9.60-10.50 Å;
- a plane (020) located at 4.50-4.60 Å;
- a plane (003) located at 3.10-3.20 Å;
- a plane (060) located at 1.50-1.55 Å.

3. Composite material according to Claim 2, **characterised in that** said synthetic silico/germano-metallic nanoparticles exhibit a diffraction peak corresponding to plane (001) is located at a distance of the order of 9.55-9.65 Å.

4. Composite material according to one of Claims 1 to 3, **characterised in that** the synthetic silico/germano-metallic nanoparticles are selected from the group made up of nanoparticles of the formula $Si_4Mg_3O_{10}(OH)_2$ and **characterised by** X-ray diffraction analysis of said synthetic silico/germano-metallic nanoparticles yielding a diffractogram exhibiting the following characteristic diffraction peaks:

   - a peak located at 9.40-9.68 Å, corresponding to a plane (001);
   - a peak located at 4.50-4.60 Å, corresponding to a plane (020);
   - a peak located at 3.10-3.20 Å, corresponding to a plane (003);
   - a peak located at 1.50-1.55 Å, corresponding to a plane (060).

5. Composite material according to one of Claims 1 to 4, **characterised in that** the synthetic phyllosilicated nanoparticles have a unimodal and monodisperse particle-size distribution.

6. Composite material according to one of Claims 1 to 5, **characterised in that** the synthetic phyllosilicated nanoparticles have an average size of less than 500 nm, in particular between 20 nm and 100 nm.

7. Composite material according to one of Claims 1 to 6, **characterised in that** the synthetic phyllosilicated nanoparticles are distributed in individualised and dispersed manner within the metallic matrix.

8. Composite material according to one of Claims 1 to 7, **characterised in that** the metallic matrix is constituted by a metal selected from Fe, Co, Ni, Mn, Cr, Cu, W, Mo, Zn, Au, Ag, Pt, Sn, by an intermetallic compound or an alloy of several metals selected from the aforementioned metals, or by an alloy of one or more of said metals with a metalloid.

9. Composite material according to one of Claims 1 to 8, **characterised in that** it includes a volumic proportion of synthetic phyllosilicated nanoparticles of less than 20 %.

10. Substrate bearing a lubricating coating, **characterised in that** said coating is constituted by a composite material according to one of Claims 1 to 9.

11. Substrate according to Claim 10, **characterised in that** it is constituted by an intrinsically conductive material.

12. Process for deposition on a substrate of a coating constituted by a composite material comprising a metallic matrix within which there are distributed lamellar phyllosilicated mineral particles, **characterised in that** it consists in carrying out an electrolytic deposition using a solution of precursors of the metallic matrix of the coating, which solution furthermore contains hydrophilic synthetic lamellar silico/germano-metallic mineral nanoparticles, called synthetic phyllosilicated nanoparticles, having an average size between 10 nm and 1 $\mu$m.

13. Process according to Claim 12, **characterised in that** it is carried out chemically by bringing the surface of the substrate to be coated into contact with the solution containing the precursors of the metallic matrix, the synthetic phyllosilicated nanoparticles, as well as a compound acting as catalyst for the oxidation-reduction of the precursors of the metallic matrix of the coating.

14. Process according to Claim 12, **characterised in that** it is carried out electrochemically in an electrochemical cell in which said substrate to be coated constitutes the cathode and the electrolyte is a solution of precursors of the metallic matrix of the coating, furthermore containing the synthetic phyllosilicated nanoparticles.

15. Process according to Claim 12, **characterised in that** the precursors of the metallic matrix are selected from complexed or non-complexed ionic compounds that are reducible in solution by chemical means or by supply of electrons.

**Patentansprüche**

1. Verbundwerkstoff mit einer Metallmatrix, in der lamellare minerale Phyllosilikatpartikel verteilt sind, **dadurch ge-**

**kennzeichnet, dass** die lamellaren mineralen Phyllosilikatpartikel so genannte hydrophile synthetische lamellare silikat-germanisch-metallische minerale Phyllosilikat-Nanopartikel sind, die eine mittlere Größe zwischen 10 mn et 1 $\mu$m aufweisen.

**2.** Verbundwerkstoff gemäß Anspruch 1, **dadurch gekennzeichnet, dass** die synthetischen Phylllosilikat-Nanopartikel aus der Gruppe gewählt werden, bestehend aus:

1) Nanopartikeln, so genannte synthetische silikat-germanisch-metallische Nanopartikel mit der Formel $-(Si_xGe_{1-x})_4M_3O_{10}(OH)_2-$, in der:

- M mindestens ein divalentes Metall ist mit der Formel $Mg_{y(1)}Co_{y(2)}Zn_{y(3)}Cu_{y(4)}Mn_{y(5)}Fe_{y(6)}Ni_{y(7)}Cr_{y(8)}$;

wobei jedes y(i) eine Echtzahl mit dem Intervall [0 ; 1] ist, wie $\sum_{i=1}^{8} y(i) = 1$

- x eine Echtzahl mit dem Intervall [0 ; 1] ist,
- eine Diffraktionsanalyse der X-Strahlen der genannten synthetischen silikat-germanisch-metallischen mineralen Nanopartikel dazu führt, ein Diffraktogramm zu erhalten, das die folgenden charakteristischen Diffraktionsspitzen aufweist:
- eine Spitze in einer Distanz von etwa 9,40 - 9,68 Å, für eine Ebene (001);
- eine Spitze bei 4,50 - 4,75 Å, für eine Ebene (020);
- eine Spitze bei 3,10 - 3,20 Å, für eine Ebene (003);
- eine Spitze bei 1,50 - 1,55 Å, für eine Ebene (060),

2) Synthetischen lamellaren silikat-germanisch-metallischen mineralen Nanopartikeln, so genannte mit T.O.T.-T.O.T. durchsetzte, aufblähende Nanopartikel, gebildet aus einer Schichtung zwischen:

- mindestens einer mineralen nicht aufblähenden Phase, gebildet aus einem Stapel elementarer Folien vom Typ Pyllogermanosilikat 2/1 und mit der chemischen Formel $(Si_xGe_{1-x})_4M_3O_{10}(OH)_2)$, und
- mindestens einer mineralen aufblähenden Phase, gebildet aus einem Stapel elementarer Folien vom Typ Phyllogermanosilikat 2/1 und einem Zwischenraum zwischen zwei aufeinanderfolgenden elementaren Folien; wobei die genannte minerale aufblähende Phase die chemische Formel $(Si_xGe_{1-x})4M_{3-\varepsilon}O_{10}(OH)_2$, $(M^{2+})_{\varepsilon}'\cdot nH_2O$- hat,
wobei in den genannten chemischen Formeln:

- M mindestens ein divalentes Metall bezeichnet mit der Formel $Mg_{y(1)}Co_{y(2)}Zn_{y(3)}Cu_{y(4)}Mn_{y(5)}Fe_{y(6)}Ni_{y(7)}Cr_{y(8)}$; wobei jedes y(i) eine

Echtzahl mit dem Intervall [0 ; 1] ist, wie $\sum_{i=1}^{8} y(i) = 1$,

- x eine Echtzahl mit dem Intervall [0 ; 1] ist,
- $\varepsilon$ und $\varepsilon'$ sich jeweils auf das kationische Defizit der elementaren Folien der aufblähenden Phase beziehen, und auf die im Zwischenraum (in den Zwischenräumen) vorhandenen Kationen,
- eine Diffraktionsanalyse der X-Strahlen der genannten mit T.O.T.-T.O.T. versetzten aufblähenden Nanopartikel dazu führt, ein Diffraktogramm zu erhalten, das die folgenden charakteristischen Diffraktionsspitzen aufweist:
- eine Ebene (001) in einer Distanz von etwa 14-15 Å, repräsentativ für die genannte aufblähende minerale Phase,
- Ebenen, repräsentativ für die genannte nicht aufblähende minerale Phase:
- eine Ebene (001) in einer Distanz von etwa 9,60 - 10,50 Å;
- eine Ebene (020) bei 4,50 - 4,60 Å;
- eine Ebene (003) bei 3,10 - 3,20 Å;
- eine Ebene (060) bei 1,50 - 1,55 Å.

**3.** Verbundwerkstoff gemäß Anspruch 2, **dadurch gekennzeichnet, dass** die genannten synthetischen silikat-germanisch-metallischen Nanopartikel eine Diffraktionsspitze aufweisen, die der Ebene (001) entsprechen, in einer

Distanz von etwa 9,55 - 9,65 Å.

4. Verbundwerkstoff gemäß einem der Ansprüche 1 bis 3, **dadurch gekennzeichnet, dass** die synthetischen silikat-germanisch-metallischen Nanopartikel aus der Gruppe gewählt werden, die von Nanopartikeln mit der Formel $Si_4Mg_3O_{10}(OH)_2$ gebildet werden und **gekennzeichnet sind durch** die Diffraktionsanalyse der X-Strahlen der genannten synthetischen silikat-germanisch-metallischen Nanopartikel, die dazu führt, ein Diffraktogramm zu erhalten, das die folgenden charakteristischen Diffraktionsspitzen aufweist:

- eine Spitze bei 9,40 - 9,68 Å, entsprechend einer Ebene (001);
- eine Spitze bei 4,50 - 4,60 Å, entsprechend einer Ebene (020);
- eine Spitze bei 3,10 - 3,20 Å, entsprechend einer Ebene (003);
- eine Spitze bei 1,50 - 1,55 Å, entsprechend einer Ebene (060).

5. Verbundwerkstoff gemäß einem der Ansprüche 1 bis 4, **dadurch gekennzeichnet, dass** die synthetischen Phyllosilikat-Nanopartikel eine unimodale und monodisperse Verteilungsgranulometrie aufweisen.

6. Verbundwerkstoff gemäß einem der Ansprüche 1 bis 5, **dadurch gekennzeichnet, dass** die synthetischen Phyllosilikat-Nanopartikel eine mittlere Größe von weniger als 500 nm haben - insbesondere zwischen 20 nm und 100 nm.

7. Werkstoff gemäß einem der Ansprüche 1 bis 6, **dadurch gekennzeichnet, dass** die synthetischen Phyllosilikat-Nanopartikel einzeln und in der Metallmatrix verteilt sind.

8. Werkstoff gemäß einem der Ansprüche 1 bis 7, **dadurch gekennzeichnet, dass** die Metallmatrix aus einem Metall besteht, das gewählt wird zwischen Fe, Co, Ni, Mn, Cr, Cu, W, Mo, Zn, Au, Ag, Pt, Sn, aus einer intermetallischen Zusammensetzung oder einer Legierung mehrerer Metalle, die gewählt werden zwischen den oben genannten Metallen, oder aus einer Legierung eines oder mehrerer der genannten Metalle mit einem Metalloiden.

9. Verbundwerkstoff gemäß einem der Ansprüche 1 bis 8, **dadurch gekennzeichnet, dass** er eine Volumenproportion von synthetischen Phyllosilikat-Nanopartikeln von weniger als 20% enthält.

10. Substrat mit einer schmierenden Beschichtung, **dadurch gekennzeichnet, dass** die genannte Beschichtung aus einem Verbundwerkstoff gemäß einem der Ansprüche 1 bis 9 besteht.

11. Substrat gemäß Anspruch 10, **dadurch gekennzeichnet, dass** es aus einem eigenleitenden Material besteht.

12. Abscheidungsverfahren auf ein Substrat einer Beschichtung aus einem Verbundwerkstoff mit einer Metallmatrix, in der lamellare minerale PhyllosilikatPartikel verteilt sind, **dadurch gekennzeichnet, dass** es darin besteht, eine elektrolytische Abscheidung vorzunehmen unter Verwendung einer Vorläuferlösung der Metallmatrix der Beschichtung, die ferner Nanopartikel, so genannte hydrophile synthetische lamellare silikat-germanisch-metallische minerale Phyllosilikat-Nanopartikel enthält, die eine mittlere Größe zwischen 10 mn et 1 µm aufweisen.

13. Verfahren gemäß Anspruch 12, **dadurch gekennzeichnet, dass** es auf chemischem Weg umgesetzt wird, durch Kontaktierung der Oberfläche des zu beschichtenden Substrats mit der Lösung, die die Vorläufer der Metallmatrix enthält, den synthetischen Phyllosilikat-Nanopartikeln sowie eine Zusammensetzung, die als Katalysator wirkt für die Oxidreduktion der Vorläufer der Metallmatrix der Beschichtung.

14. Verfahren gemäß Anspruch 12, **dadurch gekennzeichnet, dass** es auf elektrochemischem Weg umgesetzt wird in einer elektrochemischen Zelle, in der das genannte zu beschichtende Substrat die Kathode bildet und der Elektrolyt eine Vorläuferlösung der Metallmatrix der Beschichtung ist, die ferner die synthetischen Phyllosilikat-Nanopartikel enthält.

15. Verfahren gemäß Anspruch 12, **dadurch gekennzeichnet, dass** die Vorläufer der Metallmatrix gewählt werden unter den ionischen Zusammensetzungen, komplexiert oder nicht, reduzierbar in Lösung auf chemischem Weg oder durch Elektronenzufuhr.

Fig 1
ETAT DE LA TECHNIQUE

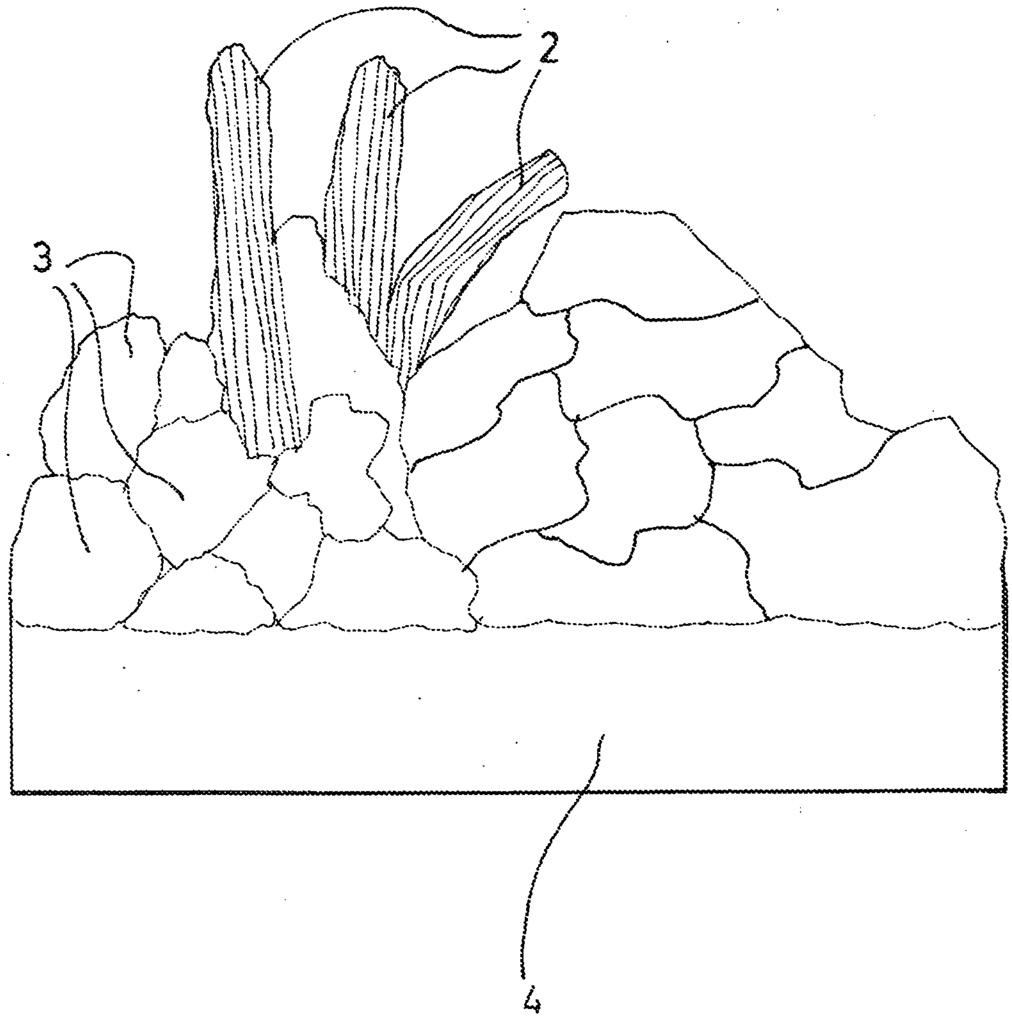

Figure 2

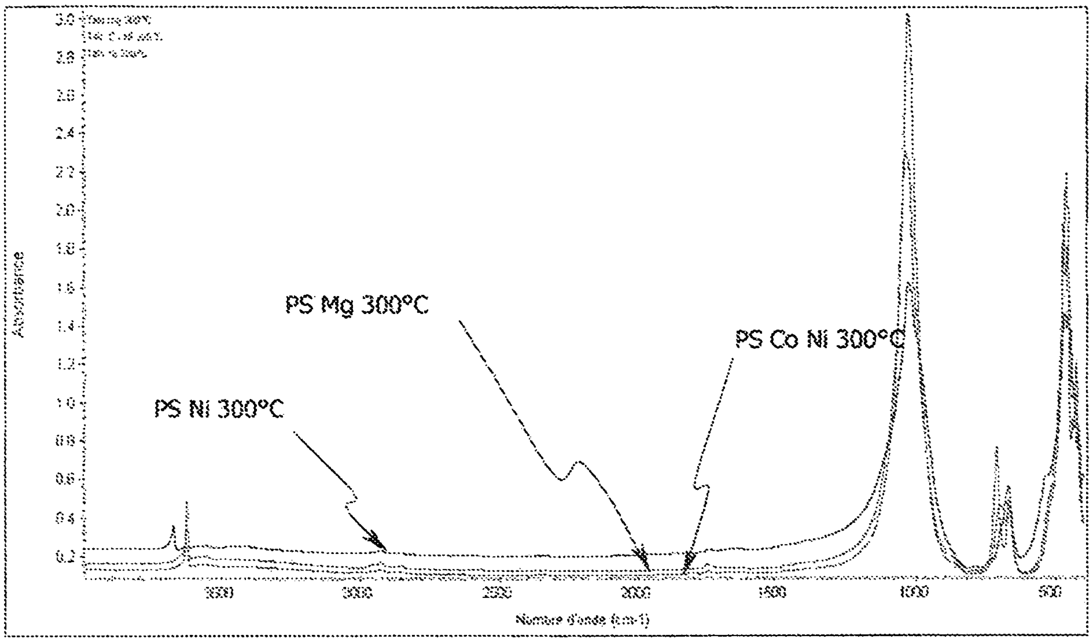


Figure 3

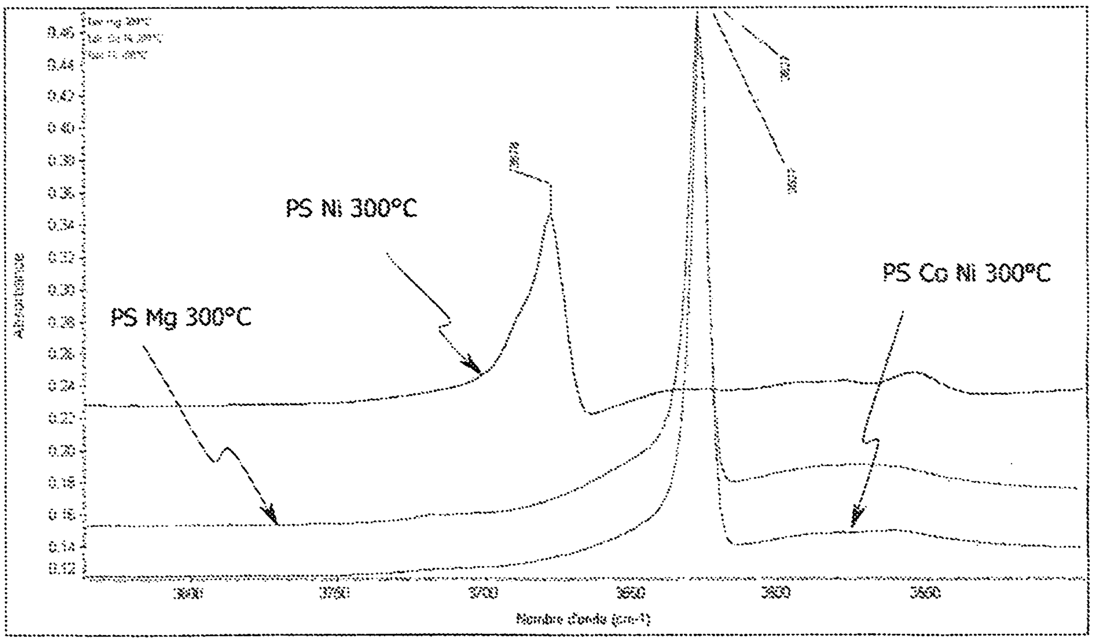

Figure 4

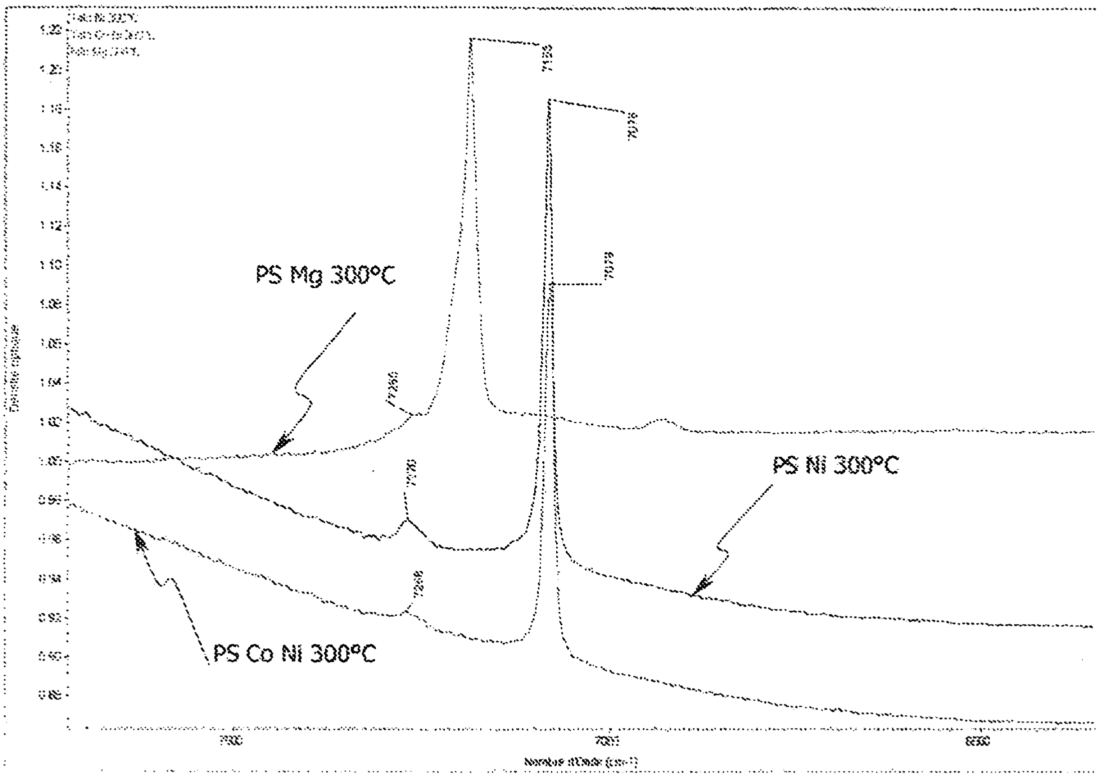


Figure 5

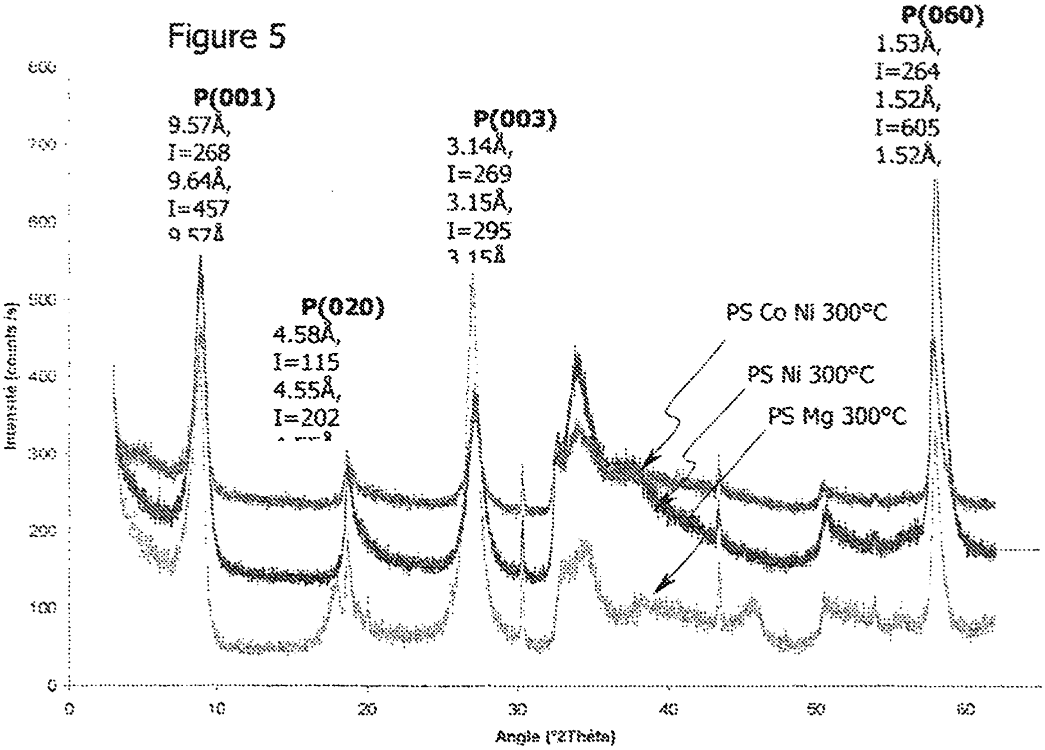

Figure 6

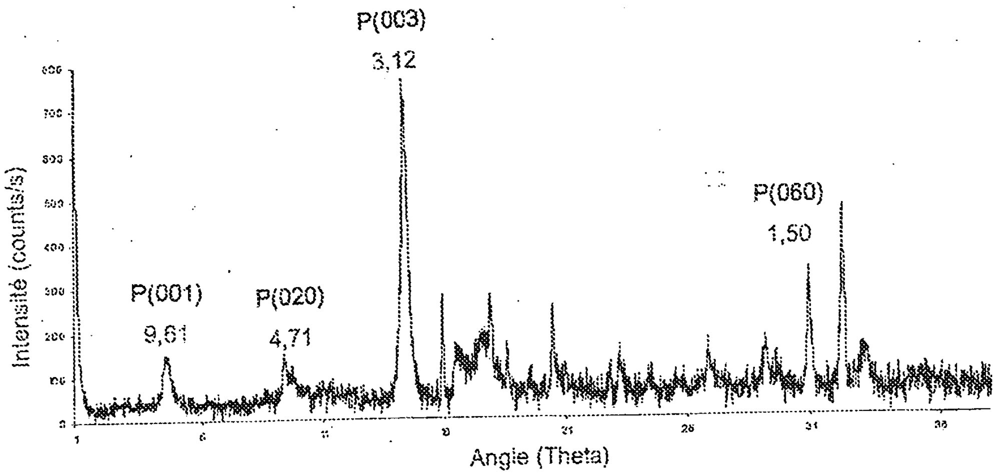


Figure 7a

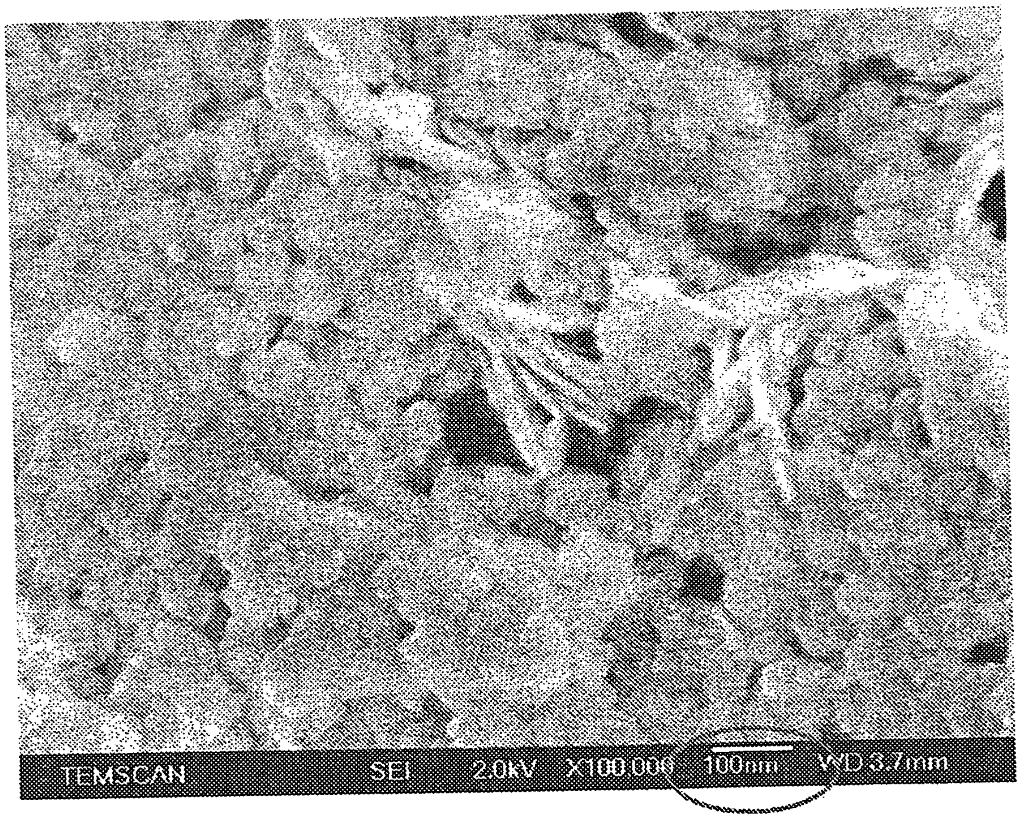

Figure 7b

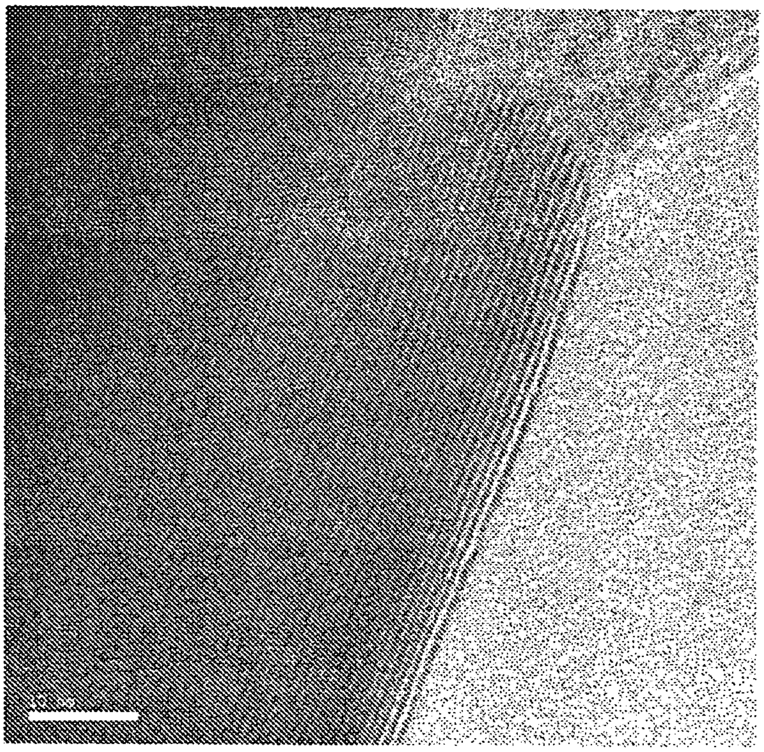

Figure 7c

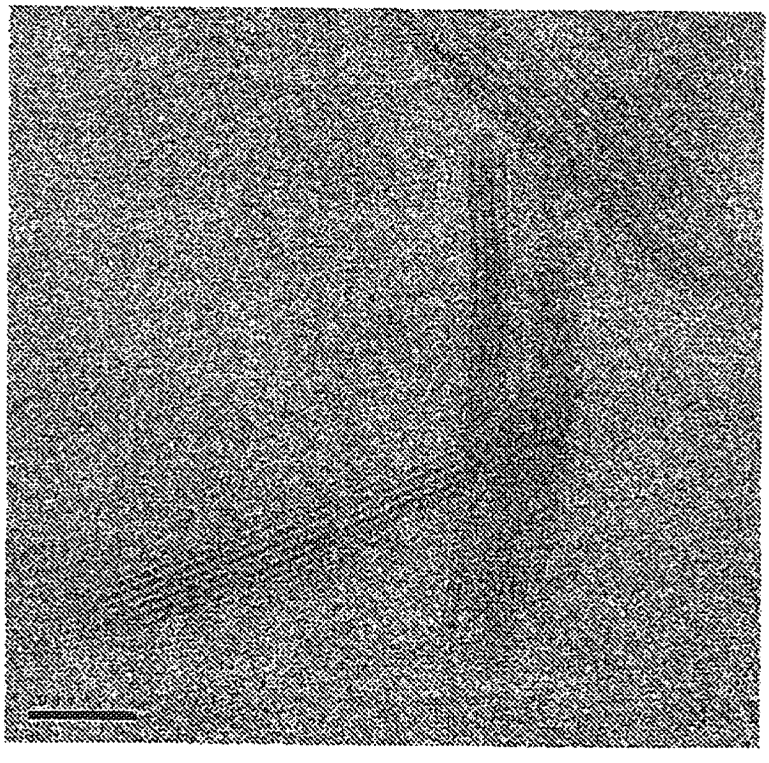

Figure 8

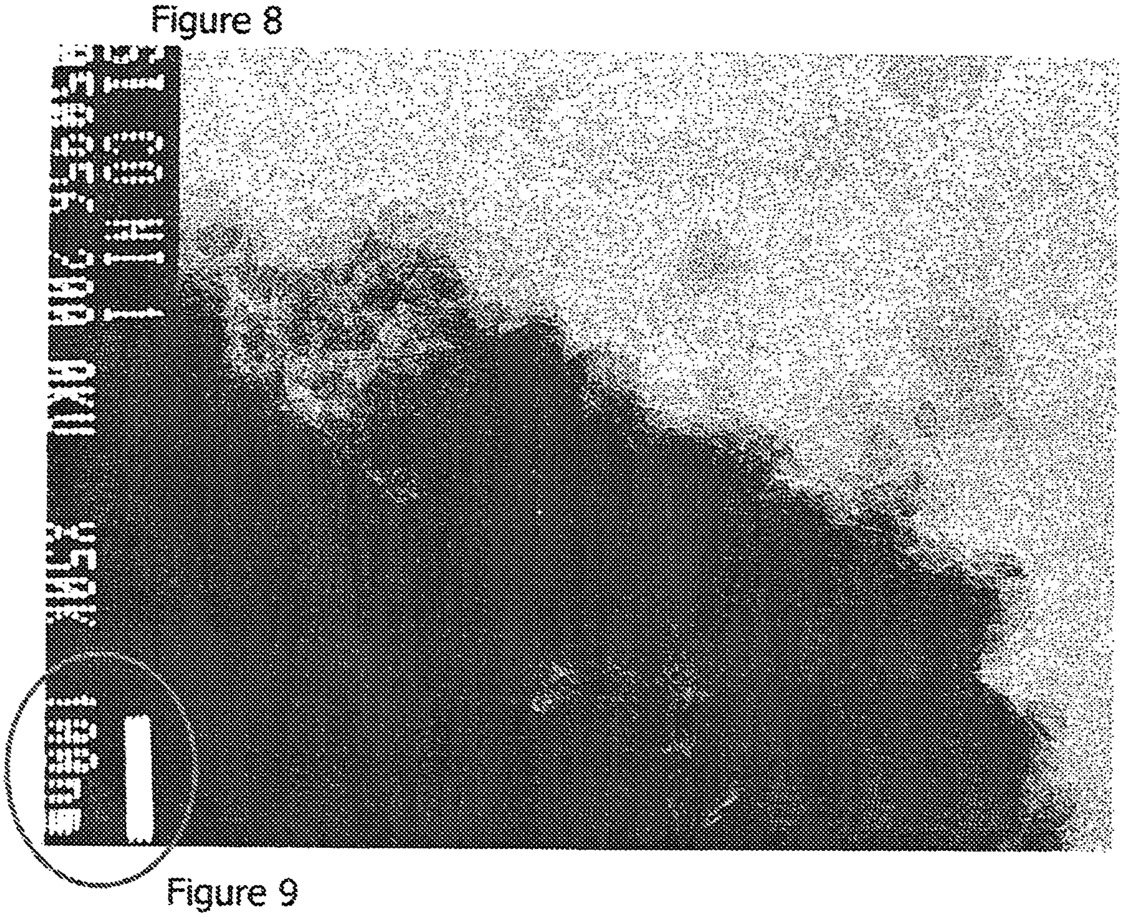

Figure 9

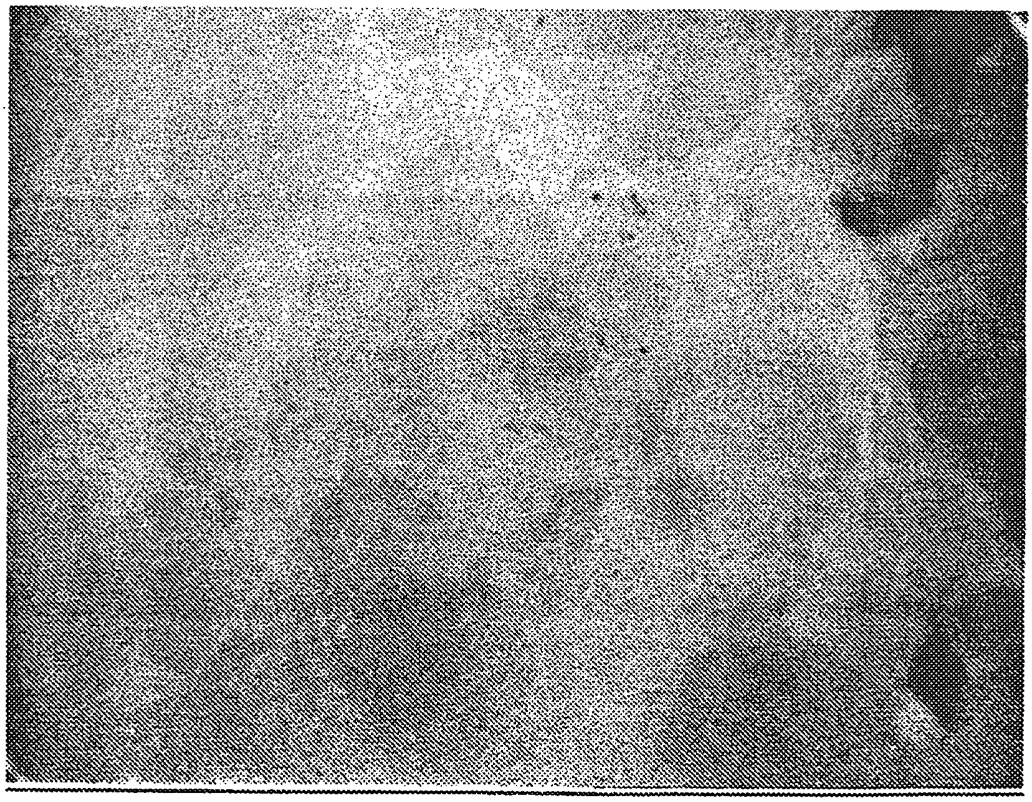

Figure 10

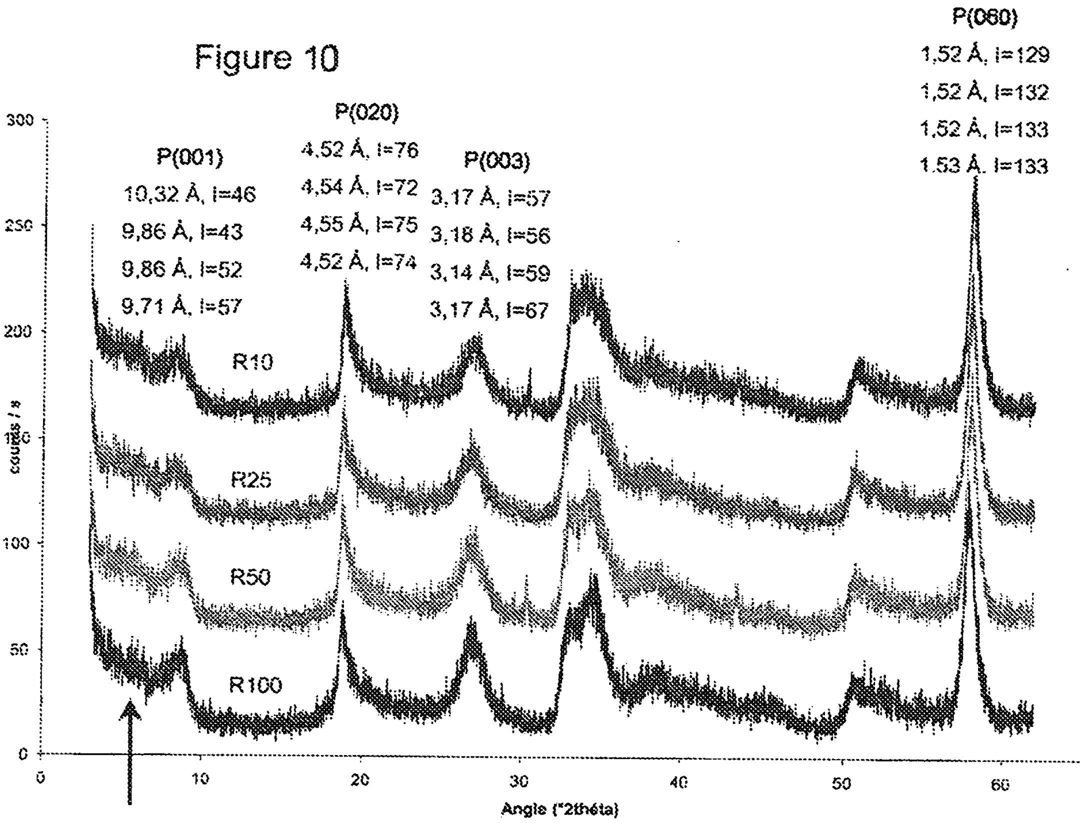


Figure 11a

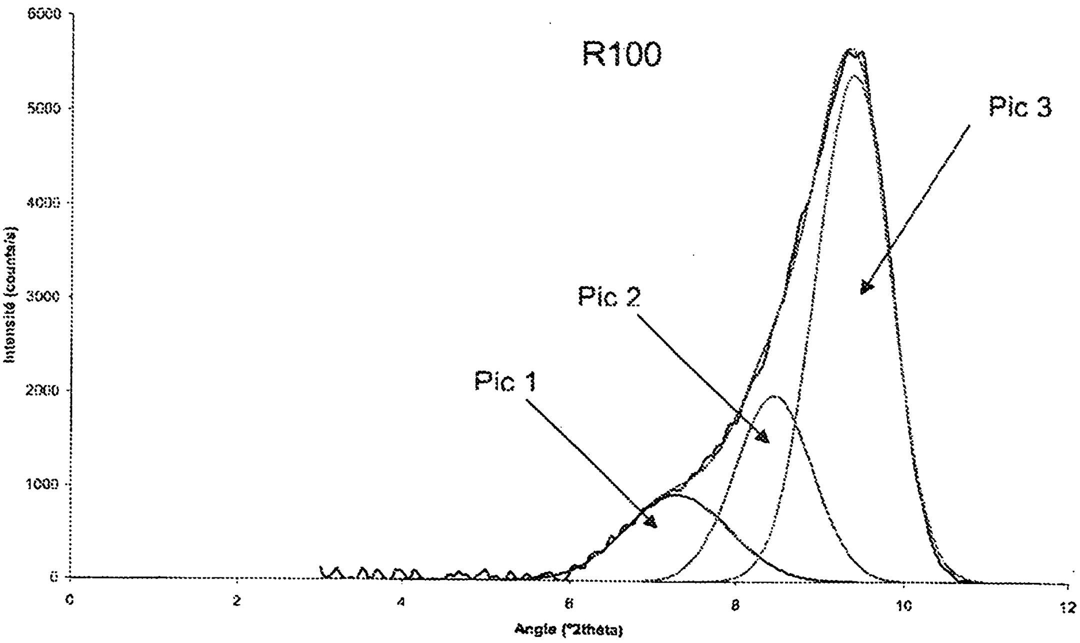

Figure 11b

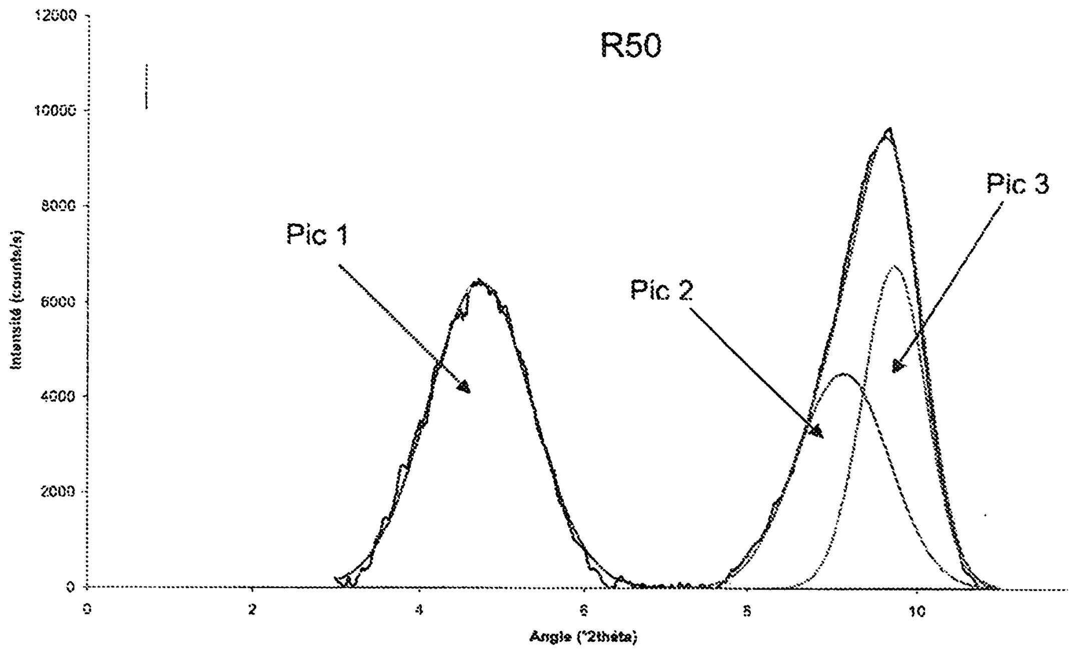


Figure 11c

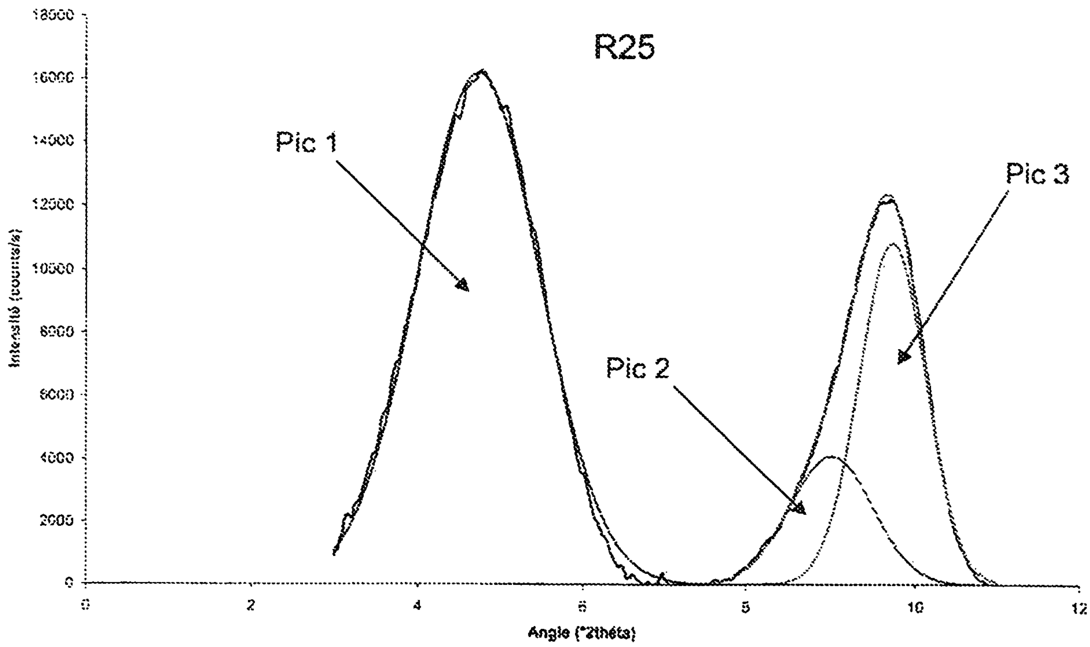

Figure 11d

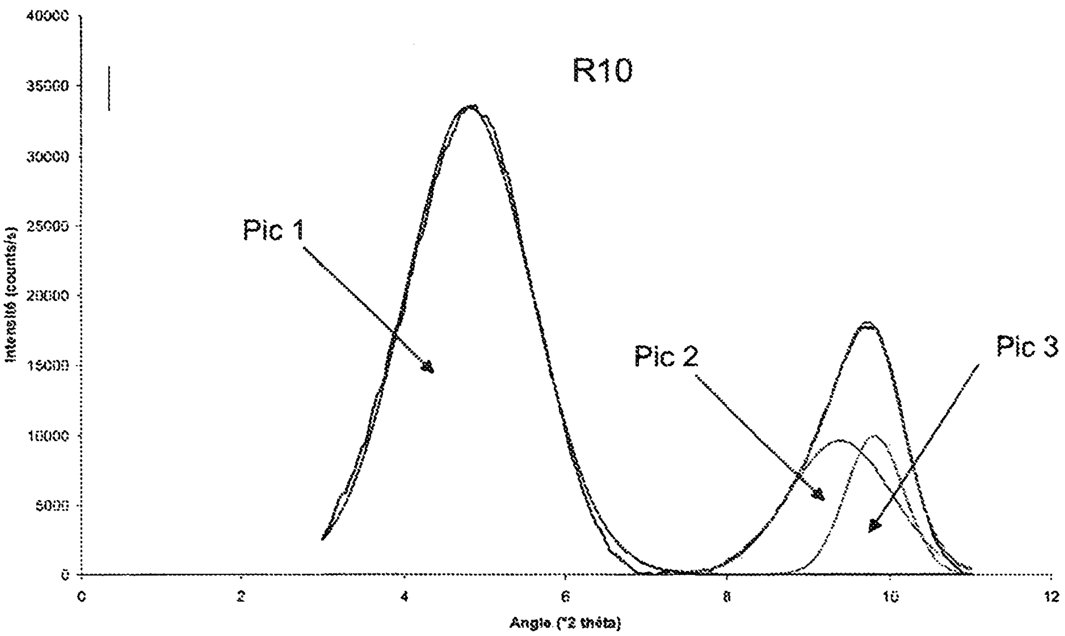

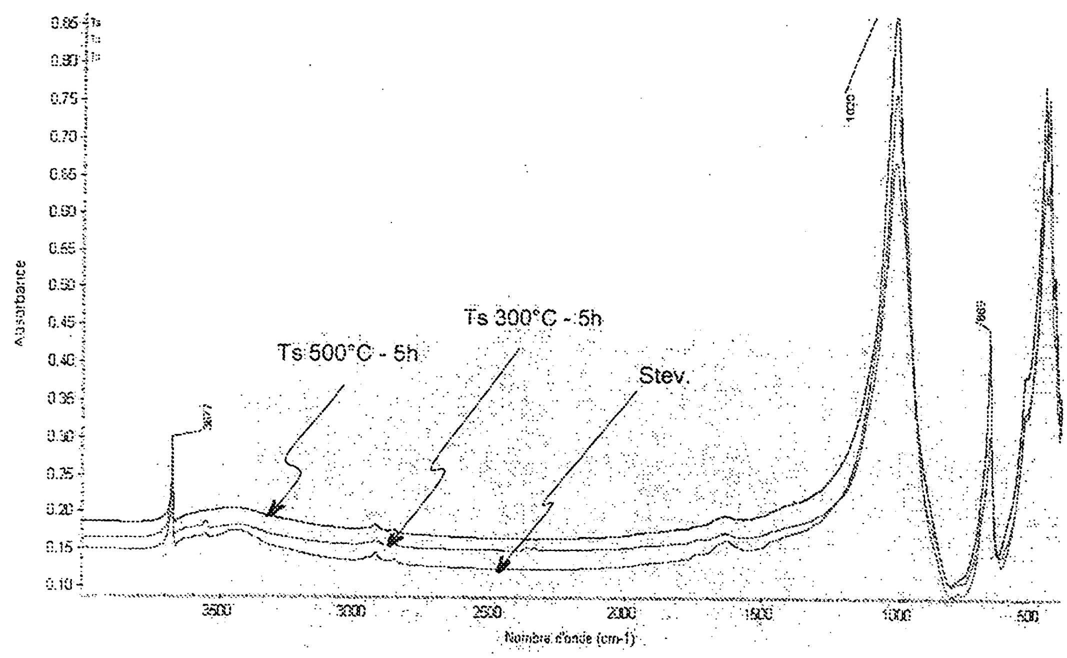


Figure 12

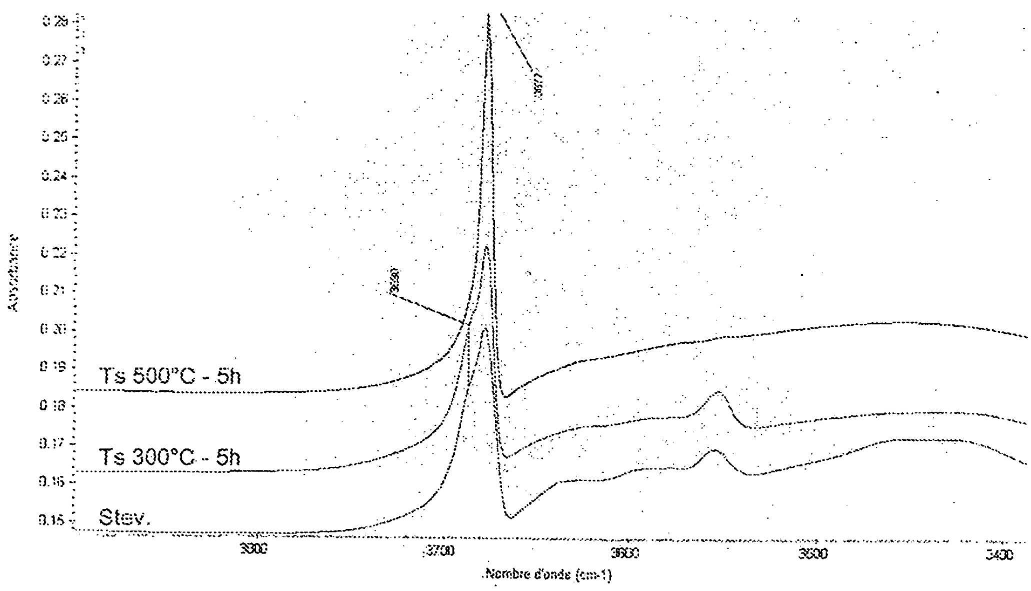


Figure 13a

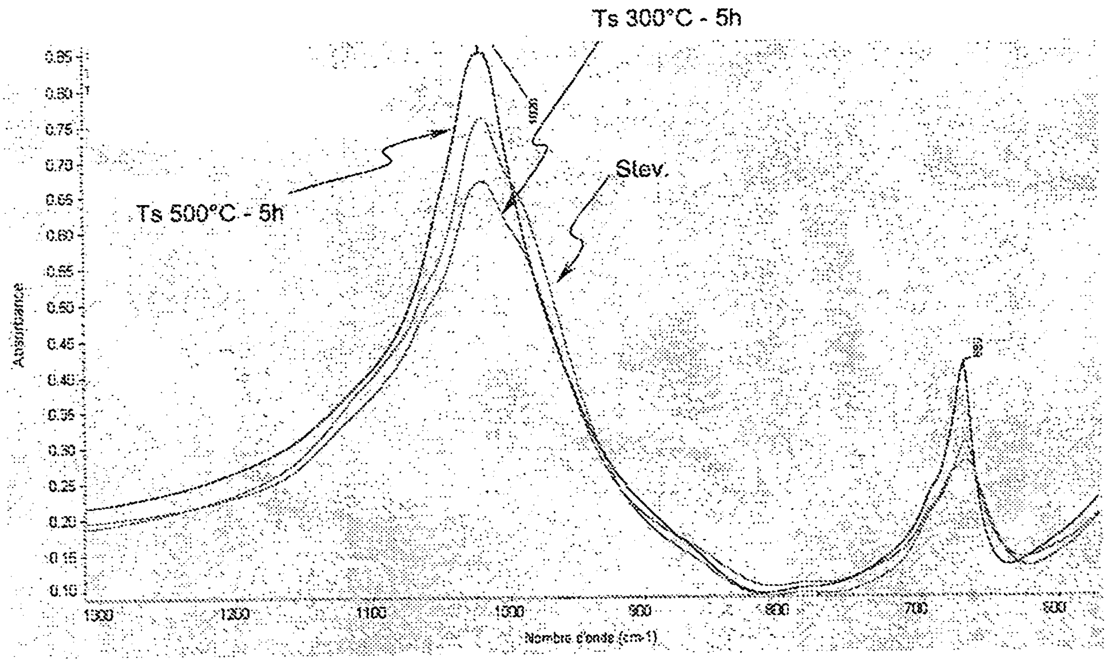


Figure 13b

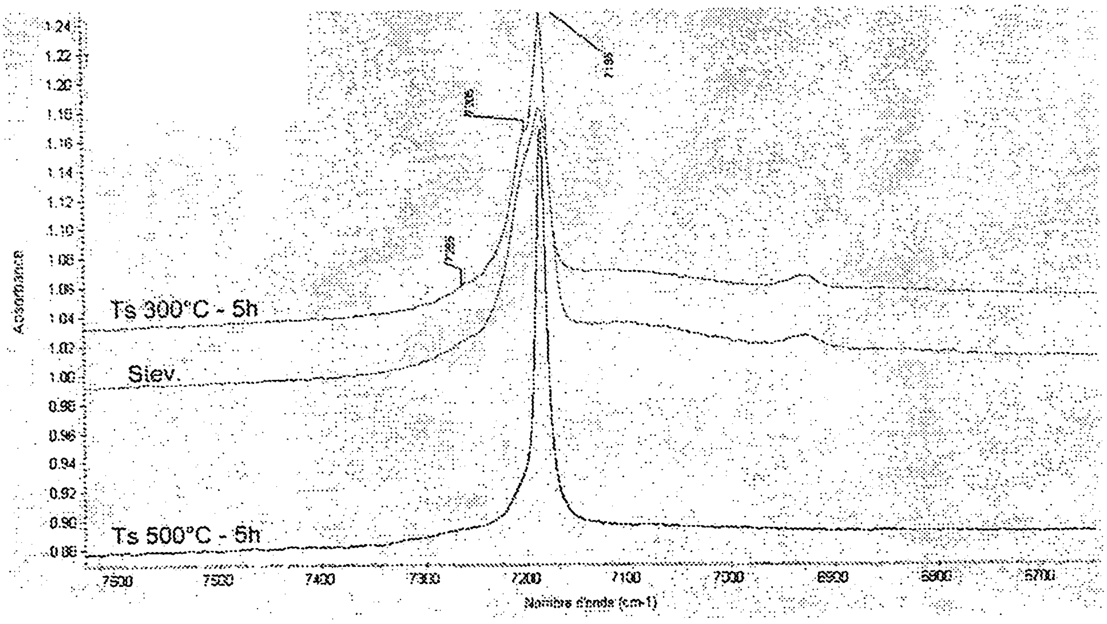


Figure 14

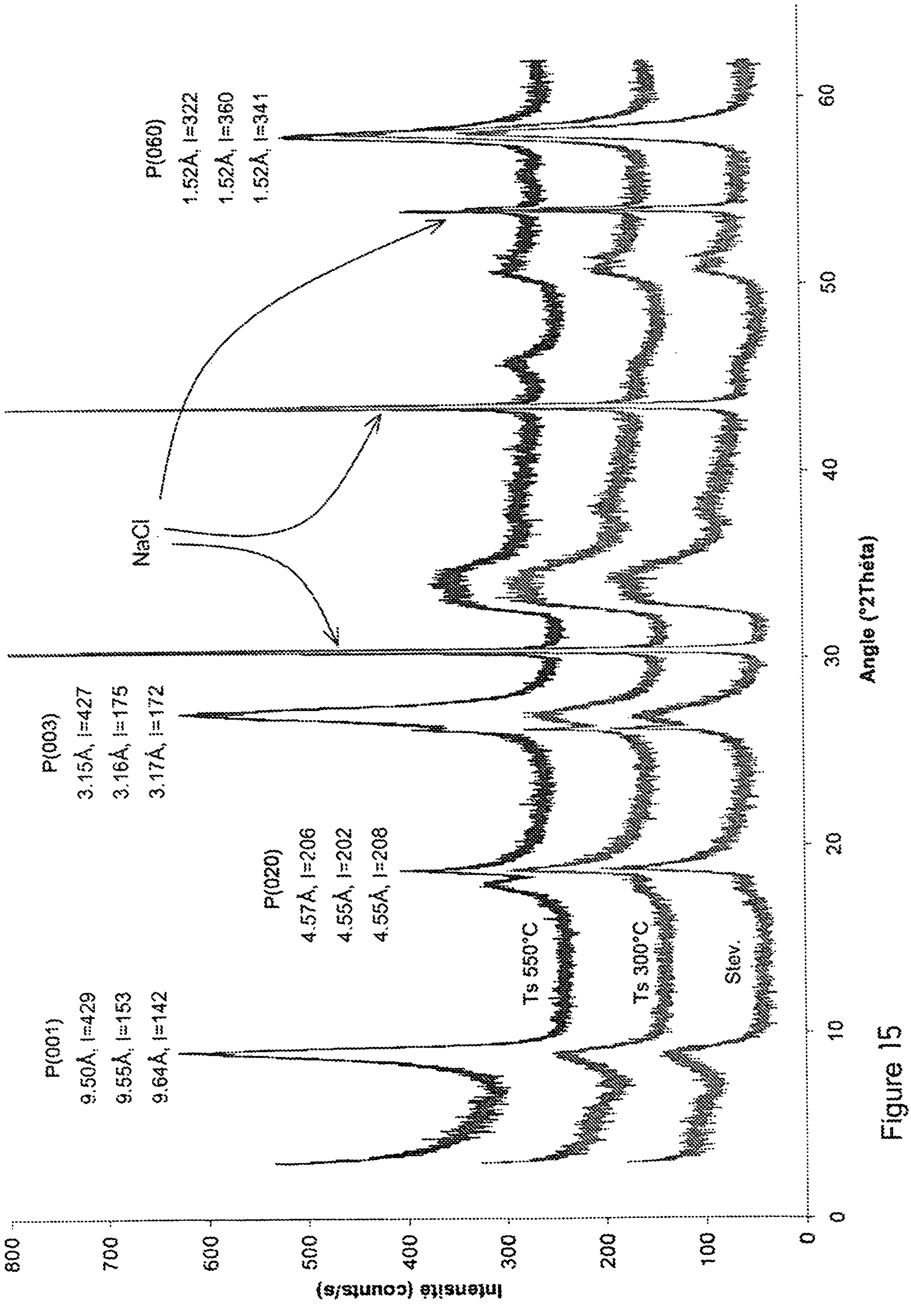
P(001)
9.50Å, I=429
9.55Å, I=153
9.64Å, I=142
P(020)
4.57Å, I=206
4.55Å, I=202
4.55Å, I=208
P(003)
3.15Å, I=427
3.16Å, I=175
3.17Å, I=172
NaCl
P(060)
1.52Å, I=322
1.52Å, I=360
1.52Å, I=341
Ts 550°C
Ts 300°C
Stev.
Intensité (counts/s)
Angle (°2Thêta)
0
100
200
300
400
500
600
700
800
0
10
20
30
40
50
60

Figure 15

Figure 16

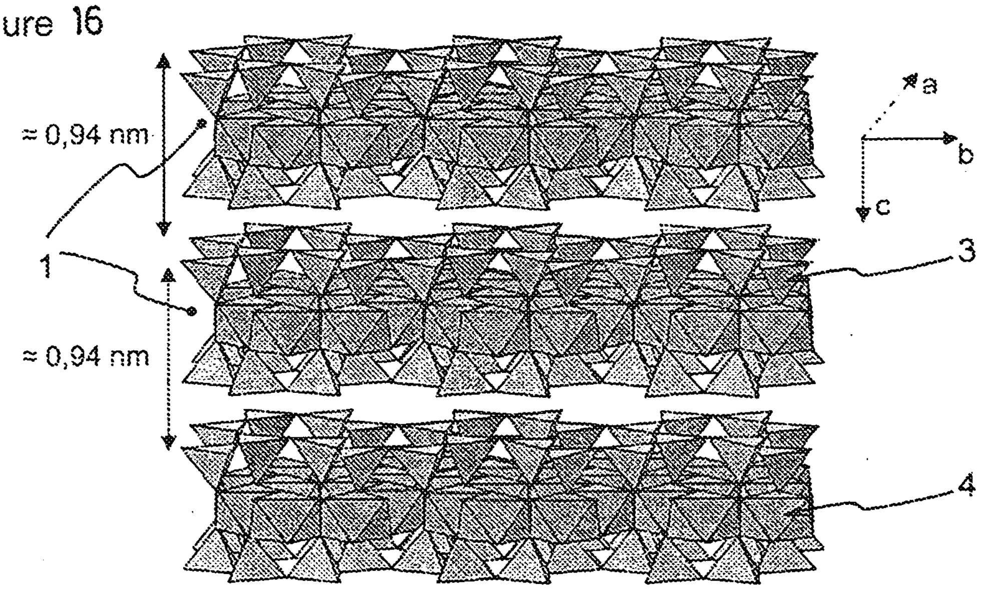


Figure 17

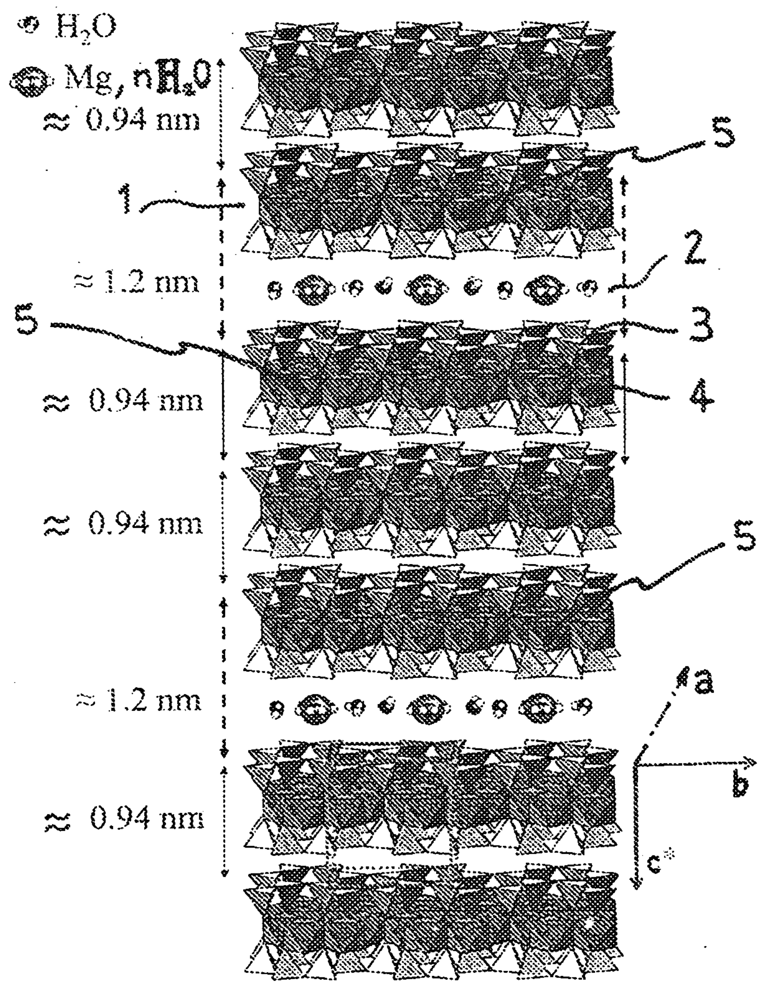

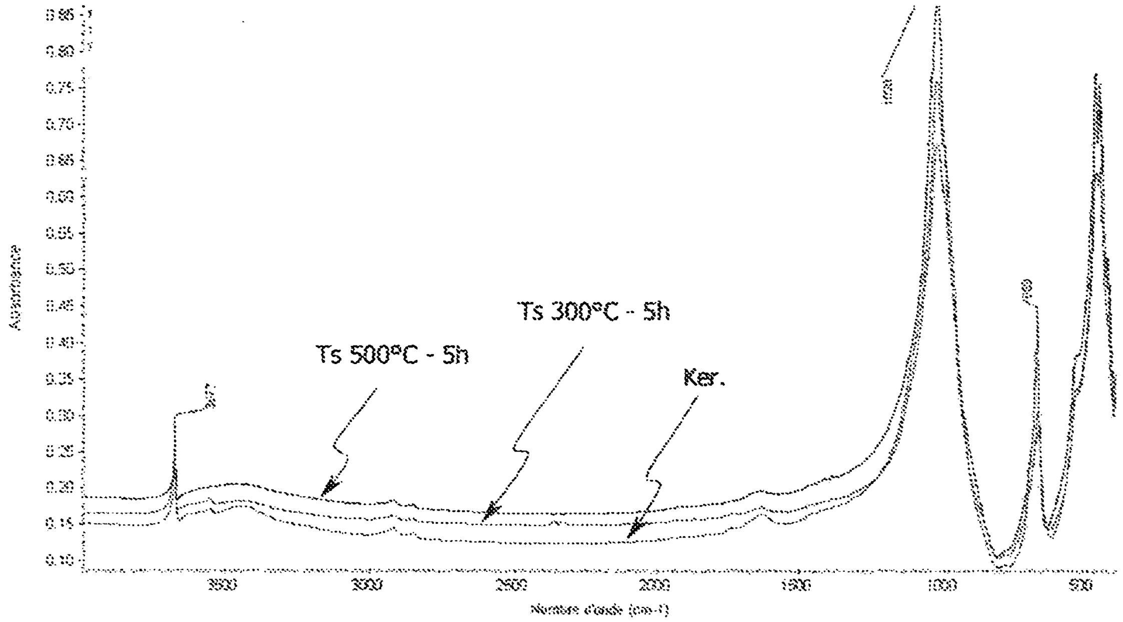


Figure 18

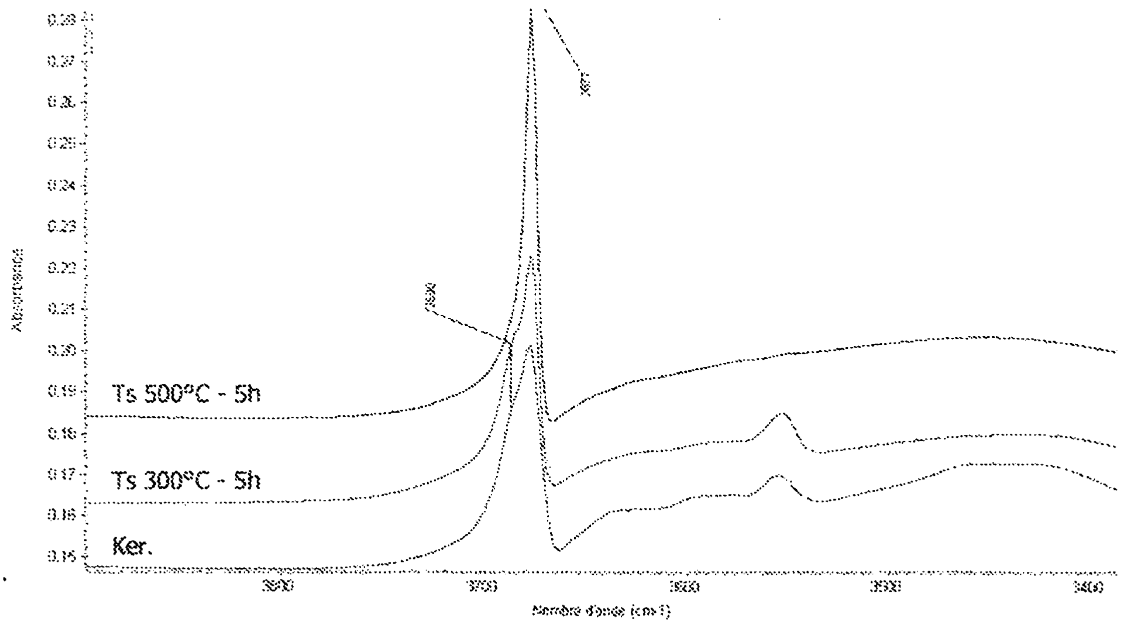


Figure 19a

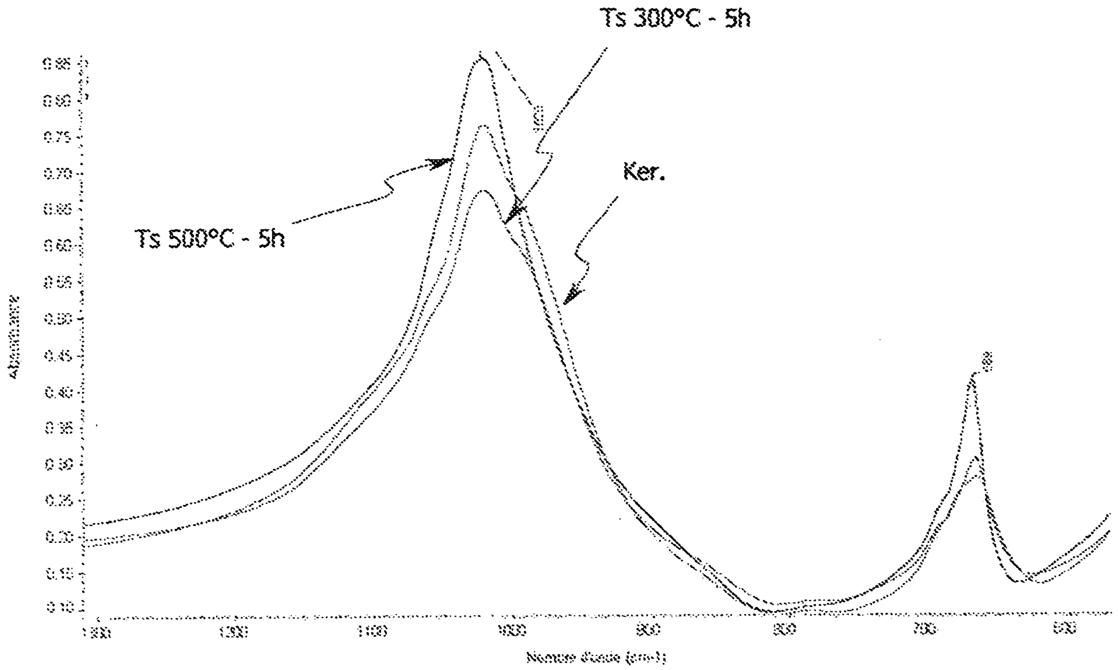


Figure 19b

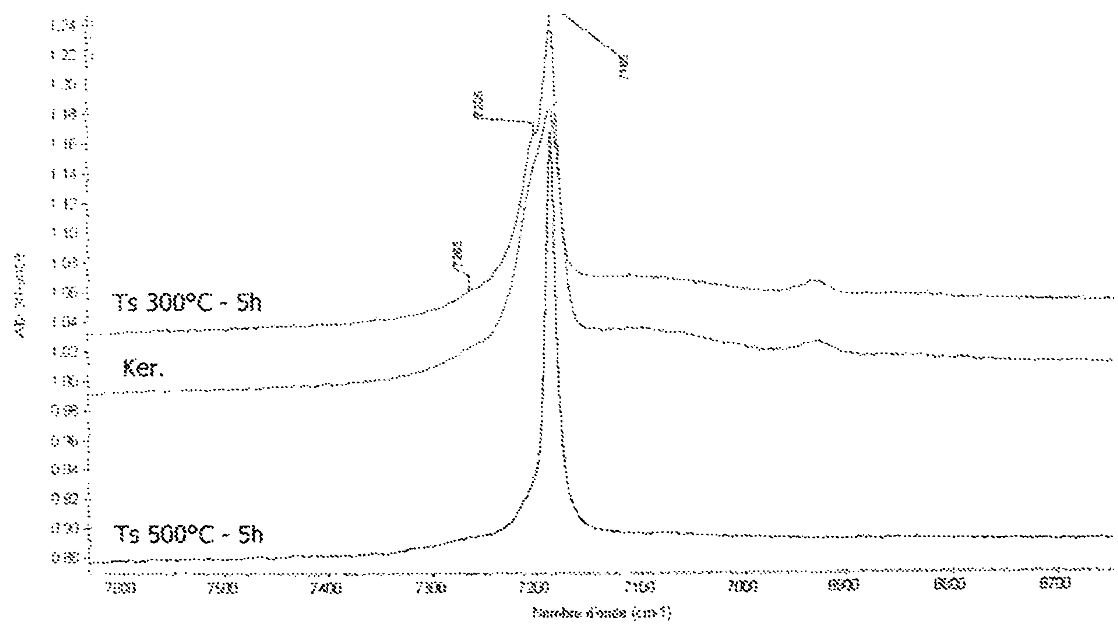


Figure 20

Figure 21

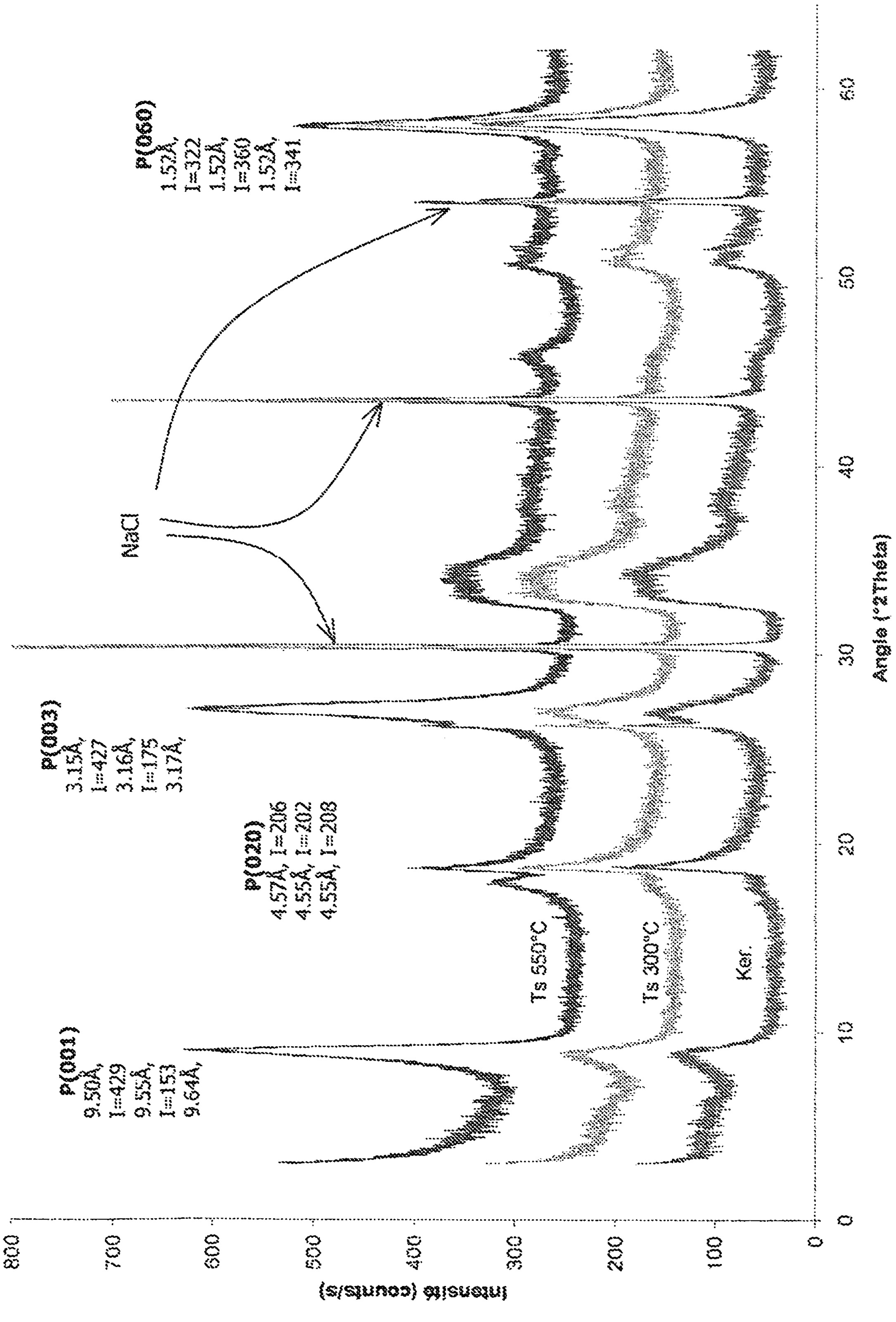
P(001)
9.50Å, I=429
9.55Å, I=153
9.64Å,
P(020)
4.57Å, I=206
4.55Å, I=202
4.55Å, I=208
P(003)
3.15Å, I=427
3.16Å, I=175
3.17Å,
NaCl
P(060)
1.52Å, I=322
1.52Å, I=360
1.52Å, I=341
Ts 550°C
Ts 300°C
Ref.
Intensité (counts/s)
Angle (°2Théta)
0
100
200
300
400
500
600
700
800
0
10
20
30
40
50
60

Figure 22

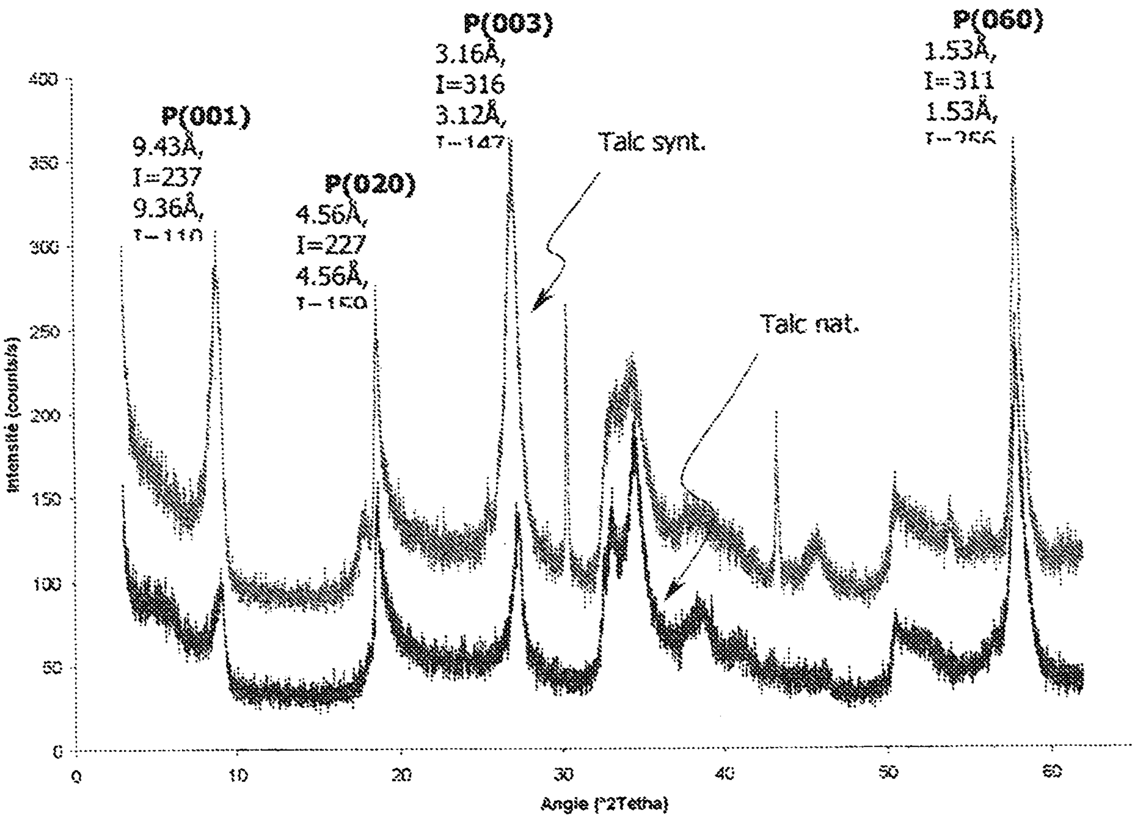
P(001)
9.43Å,
I=237
9.36Å,
P(020)
4.56Å,
I=227
4.56Å,
P(003)
3.16Å,
I=316
3.12Å,
P(060)
1.53Å,
I=311
1.53Å,
Talc synt.
Talc nat.
Intensité (counts/s)
Angle (°2Tetha)

Fig 23

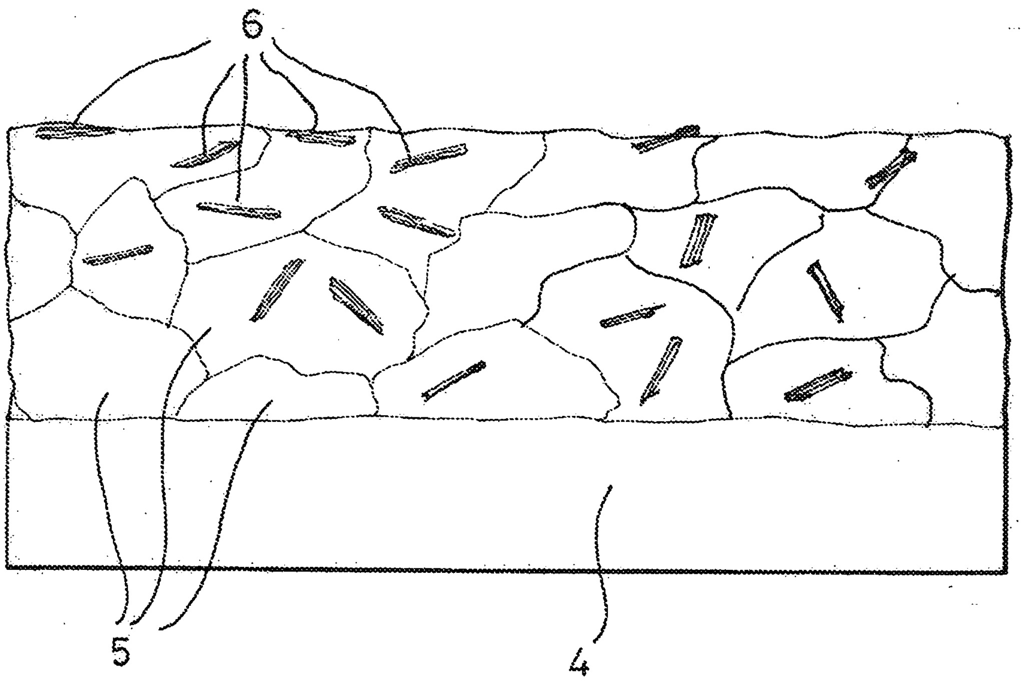

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2004063428 A


### Littérature non-brevet citée dans la description


- **X. HU et al.** *Plating and surface finishing,* Mars 1997
- **W. X. CHEN et al.** *Advanced Engineering Materials,* Septembre 2002, vol. 4 (9
- **J. P. GE et al.** *Plating and surface finishing,* Octobre 1998
- **M. PUSHPAVANAM et al.** *Metal Finishing,* Juin 1995
- **YU-CHI CHANG et al.** *Electrochimica Acta,* 1998, vol. 43 (3-4), 315-324
- **DECARREAU et al.** Synthèse et stabilité des stévensites kérolites et talcs, magnésiens et nickélifères, entre 80 et 240°C. *R. Acad. Scie. Paris,* 1989, vol. 308, 301-306